# EUROPEAN PATENT APPLICATION

(11) **EP 4 841 758 A1**
(43) Date of publication of application: **18.11.2026**
(21) Application number: 25855564.8
(22) Date of filing: 11.03.2025
(51) Int. Cl.: H01M 50/10

(54) **BATTERY CELL, BATTERY, AND ELECTRIC DEVICE**

(30) Priority: 19.08.2024 WO PCT/CN2024/113184
(71) Applicant: Contemporary Amperex Technology Co., Limited, Ningde, Fujian 352100 (CN)
(72) Inventor: CAO, Mengkai, Ningde, Fujian 352100 (CN); KE, Haibo, Ningde, Fujian 352100 (CN); CHENG, Qi, Ningde, Fujian 352100 (CN); HUANG, Shoujun, Ningde, Fujian 352100 (CN); ZHENG, Yulian, Ningde, Fujian 352100 (CN)
(74) Representative: Lorenz Seidler Gossel Part. mbB
(86) International application number: PCT/CN2025/081938
(87) International publication number: WO 2026/040386

(57) **Abstract**

A battery cell (10), a battery (100), and an electric device. The battery cell (10) comprises a casing (11), an end cover (12), and an electrode assembly (2). At least one end of the casing (11) in a first direction (Z) is provided with an opening. The casing (11) comprises a first wall (111). The end cover (12) closes the opening. The first wall (111) and the end cover (12) are welded to form a first connecting portion (51). The electrode assembly (2) is at least partially accommodated in the casing (11). The electrode assembly (2) comprises a positive electrode sheet (22) and a negative electrode sheet (23). At least part of the positive electrode sheet (22) and at least part of the negative electrode sheet (23) are stacked in a second direction (Y). The second direction (Y) is parallel to the thickness direction of the first wall (111). The first direction (Z) intersects the second direction (Y). The first wall (111) comprises a main body portion . In the first direction (Z), the main body portion is located on the side of the first connecting portion (51) facing away from the end cover (12). The main body portion is provided with a buffer structure (410). The buffer structure (410) and the first connecting portion (51) are spaced apart.

## Description

### CROSS-REFERENCE TO RELATED APPLICATIONS

This application claims priority to and rights of the Patent Application No. PCT/CN2024/113184, filed with the China National Intellectual Property Administration on August 19, 2024, which is incorporated herein by reference in its entirety.

### TECHNICAL FIELD

This application relates to the field of battery technology, and specifically, to a battery cell, a battery, and an electric device.

### BACKGROUND

Energy conservation and emission reduction are crucial to sustainable development of the automobile industry. Electric vehicles, with their advantages in energy conservation and environmental protection, have become an important part of sustainable development of the automobile industry. For electric vehicles, battery technology is an important factor in connection with their development.

In battery technology, the service life of the battery cell is a non-negligible issue. Therefore, how to prolong the service life of the battery cell is a technical problem that urgently needs to be solved in battery technology.

### SUMMARY

In view of the above problem, this application provides a battery cell, a battery, and an electric device, which can effectively prolong the service life of the battery cell.

According to a first aspect, an embodiment of this application provides a battery cell, where the battery cell includes a housing body, an end cover, and an electrode assembly; at least one end of the housing body along a first direction is provided with an opening; the housing body includes a first wall; the end cover seals the opening; the first wall is welded to the end cover to form a first connection portion; the electrode assembly is at least partially accommodated in the housing body; the electrode assembly includes a positive electrode sheet and a negative electrode sheet; at least a portion of the positive electrode sheet and at least a portion of the negative electrode sheet are stacked along a second direction; the second direction is parallel to a thickness direction of the first wall; and the first direction intersects the second direction;
where the first wall includes a body portion; along the first direction, the body portion is located on a side of the first connection portion facing away from the end cover; the body portion is provided with a buffer structure; and the buffer structure is spaced apart from the first connection portion.

In the above technical solution, the buffer structure can absorb a swelling force generated during use of the electrode assembly, thereby reducing the swelling force directly acting on the first connection portion. Therefore, the buffer structure can reduce the risk of fatigue cracking of a region of the first wall near the first connection portion due to the swelling of the electrode assembly, thereby prolonging the service life of the battery cell.

In some embodiments, the buffer structure includes a weak portion disposed on the body portion, and a minimum thickness of the weak portion is less than thicknesses of other portions of the body portion.

Thus, compared to the other portions of the body portion, the weak portion can more effectively absorb the swelling force, thereby reducing the swelling force directly acting on the first connection portion. Therefore, the weak portion can reduce the risk of fatigue cracking of the region of the first wall near the first connection portion due to the swelling of the electrode assembly, thereby prolonging the service life of the battery cell.

In some embodiments, an inner surface of the body portion is provided with a groove, and/or an outer surface of the body portion is provided with a groove; and the weak portion is a region on the body portion opposite an opening of the groove.

Thus, as the region opposite the opening of the groove, the weak portion has better buffering performance, allowing the weak portion to be formed more easily, and reducing the manufacturing difficulty of the housing body, thereby reducing the manufacturing costs of the housing body.

In some embodiments, the groove includes a first side surface, a second side surface, and a bottom surface connected to the first side surface and the second side surface; the weak portion includes a first weak portion disposed opposite the bottom surface; and a thickness of the first weak portion is less than the thicknesses of the other portions of the body portion.

Thus, compared to the other portions of the body portion, a greater swelling force acts on the first weak portion, and the first weak portion can more effectively absorb the swelling force, thereby reducing the swelling force directly acting on the first connection portion. Therefore, the first weak portion can reduce the risk of fatigue cracking of the region of the first wall near the first connection portion due to the swelling of the electrode assembly, thereby prolonging the service life of the battery cell.

In some embodiments, the weak portion further includes a second weak portion disposed opposite the first side surface and a third weak portion disposed opposite the second side surface; the first side surface is located on a side of the bottom surface close to the first connection portion; a thickness of the second weak portion tends to increase along a direction approaching the first connection portion; the second side surface is located on a side of the bottom surface facing away from the first connection portion; and a thickness of the third weak portion tends to increase along a direction facing away from the first connection portion.

Thus, the non-uniform thickness design of the second weak portion and the third weak portion allows the weak portion to have gradient strength, which helps to more effectively withstand and disperse swelling forces from different directions, and helps to guide the swelling forces to be transmitted along specific paths, reducing direct impact on the first weak portion. This allows the weak portion to absorb the swelling forces and be less prone to functional failure. In addition, the weak portion with a gradually changing thickness can also allow the weak portion to be manufactured and formed more easily.

In some embodiments, an included angle between the first side surface and the bottom surface is greater than or equal to 135 degrees and less than 180 degrees; and/or an included angle between the second side surface and the bottom surface is greater than or equal to 135 degrees and less than 180 degrees.

Thus, within these angle ranges, the weak portion has a high capability of absorbing the swelling force, thereby effectively reducing the risk of fatigue cracking of the region of the first wall near the first connection portion due to the swelling of the electrode assembly, thereby prolonging the service life of the battery cell.

In addition, the groove can be typically manufactured by a stamping process. During stamping, a mold is used for processing, where the mold typically includes an upper mold and a lower mold. The upper mold is used for stamping, and the lower mold is used for supporting the housing body. During stamping, the housing body is fixed to the lower mold by a clamp or a fixing structure of the mold, and then the upper mold moves to the housing body and applies pressure, so that a region of the housing body corresponding to the upper mold undergoes deformation to form the groove.

When the angle is greater than or equal to 135 degrees and less than 180 degrees, the groove is not engaged with the upper mold during demolding, so that the upper mold can be more easily separated from the groove after the groove is processed. Therefore, controlling the angle between 135 degrees and 180 degrees can facilitate the formation of the groove and reduce the manufacturing difficulty of the housing body, thereby improving the processing accuracy of the housing body and prolonging the service life of the mold.

In some embodiments, the buffer structure includes a first protrusion and a first recess, where the first protrusion corresponds to the first recess; the first protrusion protrudes from the outer surface of the body portion; and the first recess is recessed outward from the inner surface of the body portion.

Thus, the first protrusion and the first recess can form a partial buffer region, increasing buffer paths of the buffer structure to disperse the swelling force, thereby reducing the swelling force directly acting on the first connection portion. Therefore, the cooperation of the first protrusion and the first recess can reduce the risk of fatigue cracking of the region of the first wall near the first connection portion due to the swelling of the electrode assembly, thereby prolonging the service life of the battery cell.

In some embodiments, a plurality of first protrusions are provided; a plurality of first recesses are provided; and each first protrusion corresponds to one first recess.

Thus, the plurality of first protrusions and the corresponding first recesses can further increase the buffer paths of the buffer structure, providing a plurality of regions for dispersing the swelling force, thereby achieving more effective absorption of the swelling force, and effectively reducing the swelling force directly acting on the first connection portion.

In some embodiments, the buffer structure includes a second protrusion and a second recess, where the second protrusion corresponds to the second recess; the second protrusion protrudes from the inner surface of the body portion; and the second recess is recessed inward from the outer surface of the body portion.

Thus, the second protrusion and the second recess can form a partial buffer region, increasing the buffer paths of the buffer structure to disperse the swelling force, thereby reducing the swelling force directly acting on the first connection portion. Therefore, the cooperation of the second protrusion and the second recess can reduce the risk of fatigue cracking of the region of the first wall near the first connection portion due to the swelling of the electrode assembly, thereby prolonging the service life of the battery cell.

In some embodiments, a plurality of second protrusions are provided; a plurality of second recesses are provided; and each second protrusion corresponds to one second recess.

Thus, the plurality of second protrusions and the corresponding second recesses can further increase the buffer paths of the buffer structure, providing a plurality of regions for dispersing the swelling force, thereby achieving more effective absorption of the swelling force, and effectively reducing the swelling force directly acting on the first connection portion.

In some embodiments, along the first direction, a distance between the buffer structure and an edge of the first connection portion is H, and H satisfies: 0.3 mm≤H≤7 mm, optionally 1.5 mm≤H≤4 mm.

Thus, within these value ranges, the buffer structure can effectively absorb the swelling force, thereby reducing the swelling force directly acting on the first connection portion. The buffer structure does not undergo fatigue cracking together with the first connection portion due to a short distance from the first connection portion, and does not fail to reduce the swelling force directly acting on the first connection portion due to a long distance from the first connection portion.

In some embodiments, the electrode assembly further includes a separator, and the separator is disposed between the positive electrode sheet and the negative electrode sheet; and
the positive electrode sheet includes a positive electrode body region and a positive electrode tab protruding from the positive electrode body region; the positive electrode body region has a positive electrode active material layer; the negative electrode sheet includes a negative electrode body region and a negative electrode tab protruding from the negative electrode body region; the negative electrode body region has a negative electrode active material layer; and along the first direction, the positive electrode body region has a first end facing the end cover, the negative electrode body region has a second end facing the end cover, the separator has a third end facing the end cover, and the third end is closer to the end cover than the first end and the second end.

Thus, the separator has a portion extending beyond the first end and the second end, enhancing an insulation effect of the separator between the positive electrode sheet and the negative electrode sheet, and reducing the risk of overlapping of the positive electrode sheet and the negative electrode sheet.

In some embodiments, the separator includes an extension region extending beyond the first end and the second end along the first direction; and in a projection plane perpendicular to the second direction, an orthographic projection of the extension region partially overlaps an orthographic projection of the buffer structure.

Thus, this structure can increase a dimension of the buffer structure along the first direction, improving the capability of the buffer structure in absorbing the swelling force, and further reducing the risk of fatigue cracking of the region of the first wall near the first connection portion.

In some embodiments, in the projection plane perpendicular to the second direction, an orthographic projection of the positive electrode body region does not overlap the orthographic projection of the buffer structure; and/or in the projection plane perpendicular to the second direction, an orthographic projection of the negative electrode body region does not overlap the orthographic projection of the buffer structure.

Thus, if in the projection plane perpendicular to the second direction, the orthographic projection of the positive electrode body region does not overlap the orthographic projection of the buffer structure, the housing body can provide a larger swelling space for the electrode assembly, reducing the risk of the electrode assembly swelling and directly applying the swelling force to the buffer structure, reducing the deformation of the first wall, and further reducing the risk of fatigue cracking of the region of the first wall near the first connection portion.

If in the projection plane perpendicular to the second direction, the orthographic projection of the negative electrode body region does not overlap the orthographic projection of the buffer structure, the housing body can provide a larger swelling space for the electrode assembly, reducing the risk of the electrode assembly swelling and directly applying the swelling force to the buffer structure, reducing the deformation of the first wall, and further reducing the risk of fatigue cracking of the region of the first wall near the first connection portion.

In some embodiments, in the projection plane perpendicular to the second direction, the orthographic projection of the positive electrode body region overlaps the orthographic projection of the buffer structure; and/or in the projection plane perpendicular to the second direction, the orthographic projection of the negative electrode body region overlaps the orthographic projection of the buffer structure.

Thus, if in the projection plane perpendicular to the second direction, the orthographic projection of the positive electrode body region overlaps the orthographic projection of the buffer structure, the buffer structure has a large design width, enhancing the capability of the buffer structure in absorbing the swelling force, thereby reducing the risk of fatigue cracking of the region of the first wall near the first connection portion.

If in the projection plane perpendicular to the second direction, the orthographic projection of the negative electrode body region overlaps the orthographic projection of the buffer structure, the buffer structure has a large design width, enhancing the capability of the buffer structure in absorbing the swelling force, thereby reducing the risk of fatigue cracking of the region of the first wall near the first connection portion.

In some embodiments, in the projection plane perpendicular to the second direction, the orthographic projection of the buffer structure is at least partially located between an orthographic projection of the first connection portion and the orthographic projection of the positive electrode body region; and/or in the projection plane perpendicular to the second direction, the orthographic projection of the buffer structure is at least partially located between an orthographic projection of the first connection portion and the orthographic projection of the negative electrode body region.

Thus, if in the projection plane perpendicular to the second direction, the orthographic projection of the buffer structure is at least partially located between the orthographic projection of the first connection portion and the orthographic projection of the positive electrode body region, the probability of the swelling force of the electrode assembly directly acting on the buffer structure is reduced, thereby reducing the deformation of the first wall, and further reducing the risk of fatigue cracking of the region of the first wall near the first connection portion.

If the orthographic projection of the buffer structure is at least partially located between the orthographic projection of the first connection portion and the orthographic projection of the negative electrode body region, the probability of the swelling force of the electrode assembly directly acting on the buffer structure is reduced, thereby reducing the deformation of the first wall, and further reducing the risk of fatigue cracking of the region of the first wall near the first connection portion.

In some embodiments, in the projection plane perpendicular to the second direction, an orthographic projection of a body region of the positive electrode body region and the negative electrode body region away from the first connection portion is a first orthographic projection, and an orthographic projection of a position of the buffer structure with a minimum residual thickness is located between the orthographic projection of the first connection portion and the first orthographic projection.

Thus, during charging of the battery cell, ions in the positive electrode sheet are intercalated and deintercalated to enter an electrolyte, and electrons are released and flow through an external circuit to the negative electrode sheet. This process is accompanied by volume swelling of the negative electrode sheet in a region corresponding to the positive electrode sheet. Therefore, the orthographic projection of the position of the buffer structure with the minimum residual thickness being located between the orthographic projection of the first connection portion and the first orthographic projection can reduce the probability that the swelling force generated during the swelling of the negative electrode sheet directly acts on the position of the buffer structure with the minimum residual thickness, thereby preventing the buffer structure from directly fracturing and causing functional failure. In addition, the buffer structure can maintain a large width, which can enhance the capability of the buffer structure in absorbing the swelling force, thereby reducing the risk of fatigue cracking of the region of the first wall near the first connection portion.

In some embodiments, the negative electrode sheet includes a negative electrode current collector and a negative electrode active material layer disposed on at least one side of the negative electrode current collector; the negative electrode active material layer includes a negative electrode active material; the positive electrode sheet includes a positive electrode current collector and a positive electrode active material layer disposed on at least one side of the positive electrode current collector; and the positive electrode active material layer includes a positive electrode active material.

Thus, the provision of the negative electrode active material layer on at least one side of the negative electrode current collector can increase the content of the active material in the battery cell, thereby increasing the energy density of the battery. The provision of the positive electrode active material layer on at least one side of the positive electrode current collector can increase the content of the active material in the battery cell, thereby increasing the energy density of the battery.

In some embodiments, the negative electrode active material layer includes a negative electrode body portion and a negative electrode thinned portion; the negative electrode body portion and the negative electrode thinned portion are arranged along the first direction; along the first direction, the negative electrode thinned portion is disposed at an end of the negative electrode body portion close to the end cover; the positive electrode active material layer includes a positive electrode body portion and a positive electrode thinned portion; the positive electrode body portion and the positive electrode thinned portion are arranged along the first direction; and along the first direction, the positive electrode thinned portion is disposed at an end of the positive electrode body portion close to the end cover.

Thus, the electrode assembly has a larger swelling gap in a region corresponding to the negative electrode thinned portion, and a smaller force is applied by the region of the electrode assembly corresponding to the negative electrode thinned portion to the first wall after swelling, thereby reducing the risk of fatigue cracking of the region of the first wall near the first connection portion.

The positive electrode thinned portion is disposed at the end of the positive electrode body portion close to the end cover, the electrode assembly has a larger swelling gap in a region corresponding to the positive electrode thinned portion, and a smaller force is applied by the region of the electrode assembly corresponding to the positive electrode thinned portion to the first wall after swelling, thereby reducing the risk of fatigue cracking of the region of the first wall near the first connection portion.

In some embodiments, in the projection plane perpendicular to the second direction, an orthographic projection of a body portion of the positive electrode body portion and the negative electrode body portion away from the first connection portion is a second orthographic projection, and the orthographic projection of the position of the buffer structure with the minimum residual thickness is located between the orthographic projection of the first connection portion and the second orthographic projection.

Thus, intercalation and deintercalation of ions in the positive electrode sheet mainly occur in the positive electrode body portion, so that volume swelling of the negative electrode sheet in the region corresponding to the positive electrode thinned portion is small. Therefore, the orthographic projection of the position of the buffer structure with the minimum residual thickness being located between the orthographic projection of the first connection portion and the second orthographic projection can reduce the probability that the swelling force generated during the swelling of the negative electrode sheet in the region corresponding to the positive electrode body portion directly acts on the position of the buffer structure with the minimum residual thickness, thereby preventing the buffer structure from directly fracturing and causing functional failure. Moreover, this arrangement allows the buffer structure to have a large design width, which can enhance the capability of the buffer structure in absorbing the swelling force, thereby reducing the risk of fatigue cracking of the region of the first wall near the first connection portion.

In some embodiments, in the projection plane perpendicular to the second direction, an orthographic projection of the negative electrode thinned portion and the orthographic projection of the buffer structure are spaced apart along the first direction.

Thus, the negative electrode thinned portion has less influence on the buffer structure and the first connection portion, reducing the risk of the electrode assembly swelling and directly applying the swelling force to the buffer structure, and further reducing the risk of fatigue cracking of the region of the first wall near the first connection portion.

In some embodiments, in the projection plane perpendicular to the second direction, a spacing between the orthographic projection of the negative electrode thinned portion and the orthographic projection of the buffer structure along the first direction is greater than or equal to 1 mm.

Thus, in the projection plane perpendicular to the second direction, the orthographic projection of the negative electrode thinned portion and the orthographic projection of the buffer structure are further apart along the first direction, further reducing the influence of the negative electrode thinned portion on the buffer structure.

In some embodiments, a single-sided coating weight of the negative electrode active material layer is 90 mg/1540 mm² to 170 mg/1540 mm².

The single-sided coating weight of the negative electrode active material layer is related to swelling of the negative electrode active material layer. Setting the single-sided coating weight of the negative electrode active material layer to be 90 mg/1540 mm² to 170 mg/1540 mm² can balance high energy density requirements of the battery cell and low swelling requirements of the negative electrode sheet to a certain extent, so as to reduce the influence of the swelling of the negative electrode sheet on the first wall, thereby reducing the risk of fatigue cracking of the region of the first wall near the first connection portion.

In some embodiments, the single-sided coating weight of the negative electrode active material layer is 110 mg/1540 mm² to 150 mg/1540 mm².

Thus, this can further increase the energy density of the battery cell and further alleviate the swelling of the negative electrode sheet.

In some embodiments, a porosity of the negative electrode sheet is 27% to 40%.

Thus, this can provide space for impurities generated by side reactions of the negative electrode sheet, alleviate the swelling of the negative electrode sheet, and reduce the influence of the swelling of the negative electrode sheet on the first wall.

In some embodiments, the negative electrode active material includes a silicon-based material, and a mass percentage of the silicon element in the silicon-based material in the negative electrode active material is 0.3% to 10%.

Thus, controlling the content of the silicon element within the range of 0.3% to 10% can balance the cycling stability and energy density of the battery cell and alleviate the problem of volume expansion of the silicon-based material during charging and discharging.

In some embodiments, the mass percentage of the silicon element in the silicon-based material in the negative electrode active material is 1% to 6%.

Thus, controlling the content of the silicon element within the range of 1% to 6% can further balance the cycling stability and energy density of the battery cell and further alleviate the problem of volume expansion of the silicon-based material during charging and discharging.

In some embodiments, a dimension of the buffer structure along a third direction is greater than a dimension of the buffer structure along the first direction; and the first direction, the second direction, and the third direction are not coplanar and intersect each other.

Thus, a larger dimension of the buffer structure along the third direction makes the buffer structure more capable of absorbing the swelling force, further reducing the risk of fatigue cracking of the region of the first wall near the first connection portion.

In some embodiments, the buffer structure passes through a middle section of the first wall; the middle section is perpendicular to the third direction; and distances from the middle section to two ends of the first wall along the third direction are equal.

Thus, when the first wall is subjected to the swelling force from the electrode assembly of the battery cell, a middle region of the first wall along the third direction undergoes larger deformation, so that the middle region of the first wall along the third direction is more prone to fatigue cracking. Since the buffer structure passes through the middle section of the first wall, the swelling force received by at least the middle region of the first wall along the third direction is reduced, thereby reducing the risk of fatigue cracking of the middle region of the first wall along the third direction near the first connection portion.

In some embodiments, the dimension of the buffer structure along the third direction is L₁, a dimension of the first wall along the third direction is L, and 0.4≤L₁/L≤0.9.

Thus, when 0.4≤L₁/L, a proportion of the dimension of the buffer structure along the third direction in the first wall is large, which makes the swelling force received by the middle region of the first wall along the third direction small, thereby reducing the risk of fatigue cracking of the middle region of the first wall along the third direction near the first connection portion.

When L₁/L≤0.9, the proportion of the dimension of the buffer structure along the third direction in the first wall is small, reducing the waste generated during manufacturing of the buffer structure and lowering the production costs.

Therefore, setting a ratio of the dimension of the buffer structure along the third direction to the dimension of the first wall along the third direction to be 0.4 to 0.9 allows the buffer structure to have sufficient capability of absorbing the swelling force, reduces the waste generated during manufacturing of the buffer structure, and balances the requirements for the swelling force absorption capability and cost performance of the buffer structure.

In some embodiments, the buffer structure has a fourth end and a fifth end opposite each other along the third direction; the first wall has a sixth end and a seventh end opposite each other along the third direction; the fourth end is close to the sixth end; the fifth end is close to the seventh end; and a dimension of the first wall along the third direction is L, a minimum distance between the fourth end and the sixth end along the third direction is L₂, and a minimum distance between the fifth end and the seventh end along the third direction is L₃, where L₂/L≤0.3, and/or L₃/L≤0.3.

Thus, if L₂/L≤0.3, a proportion of the minimum distance between the fourth end and the sixth end along the third direction in the dimension of the first wall along the third direction is reduced, so that more regions of the fourth end along the third direction receive reduced swelling force, thereby further reducing the risk of fatigue cracking of the region of the first wall near the first connection portion.

If L₃/L≤0.3, a proportion of the minimum distance between the fifth end and the seventh end along the third direction in the dimension of the first wall along the third direction is reduced, so that more regions of the first wall along the third direction receive reduced swelling force, thereby further reducing the risk of fatigue cracking of the region of the first wall near the first connection portion.

In some embodiments, 100 mm≤L≤450 mm.

Thus, within this value range, along the third direction, the first wall has a large dimension, which facilitates arrangement of the buffer structure, thereby helping the buffer structure to absorb the swelling force.

In some embodiments, the housing body includes a corner wall, and two ends of the first wall along the third direction are each connected to the corner wall; and at least one end of the buffer structure along the third direction is spaced apart from the corner wall.

Thus, since the at least one end of the buffer structure along the third direction is not in contact with the corner wall, the waste generated during manufacturing of the buffer structure can be reduced, and the production costs can be lowered.

In some embodiments, the body portion includes a first region and a second region arranged along the first direction; a thickness of the first region is greater than a thickness of the second region; and the buffer structure is located between the first region and the second region.

Thus, the first region with a larger thickness can enhance the capability of the first connection portion in resisting the swelling force; and in cooperation with the buffer structure, the first region can further reduce the risk of fatigue cracking of the region of the first wall near the first connection portion due to the swelling of the electrode assembly, thereby prolonging the service life of the battery cell.

In some embodiments, a width of the first region is K1, and K1 satisfies: 1.8 mm≤K1≤15 mm, optionally 2 mm≤K1≤10 mm.

Thus, if 1.8 mm≤K1≤15 mm, the first region can enhance the capability of the first connection portion in resisting the swelling force; and in cooperation with the buffer structure, the first region can further reduce the risk of fatigue cracking of the region of the first wall near the first connection portion due to the swelling of the electrode assembly, thereby prolonging the service life of the battery cell.

If 2 mm≤K1≤10 mm, the first region can more effectively enhance the capability of the first connection portion in resisting the swelling force; and in cooperation with the buffer structure, the first region can further reduce the risk of fatigue cracking of the region of the first wall near the first connection portion due to the swelling of the electrode assembly, thereby prolonging the service life of the battery cell.

In some embodiments, the first region includes a first portion and a second portion arranged along the first direction; the second portion is located between the first portion and the buffer structure; and a thickness of the first portion is greater than a thickness of the second portion.

Thus, a region of the first region close to the first connection portion is more prone to forming a heat-affected zone, and this region is more prone to fatigue cracking. However, since the second portion is connected to the first portion and the buffer structure, and the thickness of the first portion is greater than the thickness of the second portion, the thicker first portion in the first region is closer to the first connection portion, which can effectively reduce the influence of the heat-affected zone on the first region, reducing the risk of fatigue cracking of the region of the first wall near the first connection portion. In addition, since the thickness of the second portion is less than the thickness of the first portion, materials used for the first region can be reduced, thereby lowering the production costs.

In some embodiments, a width of the first portion is K2, and K2 satisfies: 1 mm≤K2≤10 mm, optionally 1.5≤K2≤5 mm.

Thus, if 1 mm≤K2≤10 mm, the first portion has a large width, which allows the first portion to effectively reduce the influence of the heat-affected zone on the first region, thereby reducing the risk of fatigue cracking of the region of the first wall near the first connection portion.

If 1.5≤K2≤5 mm, the first portion has a large width, which allows the first portion to more effectively reduce the influence of the heat-affected zone on the first region, thereby reducing the risk of fatigue cracking of the region of the first wall near the first connection portion. Moreover, the manufacturing costs of the first portion are low.

In some embodiments, a thickness of the second portion tends to decrease along a direction from the end cover to the electrode assembly.

Thus, this can reduce the influence of the second portion on the electrode assembly and reduce the risk of interference between the second portion and the electrode assembly.

In addition, this makes a strengthening effect of the second portion tend to increase along a direction from the electrode assembly to the end cover, so that a region of the second portion close to the first portion has a good strengthening effect even if affected by the first connection portion, thereby reducing the risk of fatigue cracking of the first wall in the second portion.

Furthermore, the second portion can achieve a transition between the first portion and the second region, reducing stress concentration.

In some embodiments, a Vickers hardness of at least a portion of the first region is less than a Vickers hardness of the second region.

It can be understood that when the first wall is subjected to the swelling force, the first region with a lower hardness may first respond to overload through plastic deformation, while the second region with a higher hardness may first show cracks, so the first region has a lower risk of fatigue cracking.

In some embodiments, the electrode assembly has a straight region; and a portion of the positive electrode sheet in the straight region and a portion of the negative electrode sheet in the straight region are stacked along the second direction.

Thus, the second direction is the same as the stacking direction of the portion of the positive electrode sheet in the straight region and the portion of the negative electrode sheet in the straight region, the electrode assembly undergoes a higher swelling degree along the second direction during cycling, and the first wall is more affected by the swelling of the electrode assembly. However, since the buffer structure can absorb the swelling force, the swelling force received by the region of the first wall near the first connection portion is reduced, thereby reducing the risk of fatigue cracking of the first wall near the first connection portion due to the swelling of the electrode assembly.

In some embodiments, the electrode assembly includes a first surface and a second surface adjacent to each other; the first surface is perpendicular to the second direction; an area of the first surface is greater than an area of the second surface; and the first surface is disposed opposite the first wall along the second direction.

Thus, the area of the first surface is greater than the area of the second surface, so that a greater swelling force is received by the first wall in the housing body disposed opposite the first surface. Since the buffer structure can absorb the swelling force, the swelling force received by the region of the first wall near the first connection portion is reduced, thereby reducing the risk of fatigue cracking of the first wall near the first connection portion due to the swelling of the electrode assembly.

In some embodiments, the first surface is a surface with the largest area in outer surfaces of the electrode assembly.

Thus, the first wall in the housing body disposed opposite the first surface receives the largest swelling force. Since the buffer structure can absorb the swelling force, the swelling force received by the region of the first wall near the first connection portion is reduced, thereby reducing the risk of fatigue cracking of the first wall near the first connection portion due to the swelling of the electrode assembly.

In some embodiments, the electrode assembly is a wound structure, the electrode assembly further has a corner region, at least one end of the straight region along the third direction is provided with the corner region, and the first direction, the second direction, and the third direction are not coplanar and intersect each other; and
an outer surface of the straight region includes the first surface, an outer surface of the corner region includes the second surface, and at least a portion of the second surface is an arc surface.

Thus, for a wound electrode assembly, the straight region undergoes a higher swelling degree along the second direction. Since the buffer structure can absorb the swelling force, the swelling force received by the region of the first wall near the first connection portion is reduced, thereby reducing the risk of fatigue cracking of the first wall near the first connection portion due to the swelling of the electrode assembly.

In some embodiments, the electrode assembly is a laminated structure; the straight region includes a plurality of positive electrode sheets and a plurality of negative electrode sheets; the plurality of positive electrode sheets and the plurality of negative electrode sheets are stacked along the second direction; and the first surface is perpendicular to the second surface.

Thus, for a laminated electrode assembly, the electrode assembly undergoes a higher swelling degree in the stacking direction of the positive electrode sheet and the negative electrode sheet. Since the buffer structure can absorb the swelling force, the swelling force received by the region of the first wall near the first connection portion is reduced, thereby reducing the risk of fatigue cracking of the first wall near the first connection portion due to the swelling of the electrode assembly.

In some embodiments, the first wall is a wall with the largest outer surface area in the housing body.

Thus, the wall with the largest outer surface area in the housing body is more prone to deformation after being subjected to the swelling force from the electrode assembly. Since the first wall is the wall with the largest outer surface area in the housing body, the risk of fatigue cracking of the first wall near the first connection portion due to the swelling of the electrode assembly is low.

In some embodiments, the housing body includes two first walls; and along the second direction, the two first walls are disposed opposite each other, and the electrode assembly is located between the two first walls.

Thus, this reduces the risk of fatigue cracking of the two first walls near the first connection portion due to the swelling of the electrode assembly.

In some embodiments, the first wall further includes a transition region; the transition region is located between the body portion and the first connection portion along the first direction; the transition region is connected to the first connection portion; a connection position between the transition region and the first connection portion forms a connection interface; the connection interface has a connection position closest to the body portion along the first direction; and the connection position is located at an end of the body portion close to the opening along the first direction.

Thus, the transition region is connected to the first connection portion to form the connection interface, so that the transition region has a sufficiently large contact area with the first connection portion, thereby improving firmness after the first wall is welded to the end cover.

In some embodiments, at least a portion of the connection interface extends obliquely relative to the second direction.

Thus, after the end cover is welded to the first wall, the first connection portion shrinks as it solidifies, and the first connection portion applies tensile stress to the transition region. When the first wall is subjected to the swelling force from the electrode assembly, the first wall undergoes deformation, and the transition region applies tensile stress to the first connection portion. Since at least a portion of the connection interface extends obliquely relative to the second direction, near a portion where the connection interface extends obliquely relative to the second direction, the tensile stress applied by the first connection portion to the transition region due to shrinkage and the tensile stress applied by the transition region to the first connection portion due to deformation of the first wall are not on the same straight line, thereby reducing the risk of fatigue cracking of a region of the transition region near the connection interface.

In some embodiments, the connection interface includes a first interface; the first interface extends obliquely from the connection position to the end cover; and along the second direction, at least a portion of the transition region is located between the first interface and the end cover.

Thus, the first connection portion provides protection for the transition region. When the first wall is subjected to the swelling force from the electrode assembly, the deformation of the transition region during stress is blocked by the first connection portion, thereby reducing the risk of fatigue cracking of a region of the transition region near the first interface.

In some embodiments, the first interface is connected to an outer surface of the body portion at the connection position.

Thus, since the first interface is directly connected to the body portion, the body portion is closer to the first connection portion along the first direction, thereby further reducing the risk of fatigue cracking of the region of the first wall near the first connection portion due to the swelling of the electrode assembly.

In some embodiments, the connection interface includes a second interface; the second interface extends obliquely from the connection position away from the end cover, and along the second direction, at least a portion of the transition region is located on a side of the second interface facing away from the end cover.

Thus, the transition region limits the first connection portion, thereby reducing the risk of the first connection portion falling off.

In some embodiments, the second interface is connected to an inner surface of the body portion at the connection position.

Thus, the body portion is directly connected to the first connection portion, so that the body portion is closer to the first connection portion along the first direction, thereby further reducing the risk of fatigue cracking of the region of the first wall near the first connection portion due to the swelling of the electrode assembly.

In some embodiments, a Vickers hardness of the transition region is less than a Vickers hardness of the body portion; and/or a Vickers hardness of the transition region is less than a Vickers hardness of the first connection portion.

Thus, if the Vickers hardness of the transition region is less than the Vickers hardness of the body portion, the transition region with a lower Vickers hardness is connected to the first connection portion, which can alleviate rigid pulling between the first wall and the first connection portion when the first wall undergoes deformation, thereby reducing the risk of separation between the first wall and the first connection portion. If the Vickers hardness of the transition region is less than the Vickers hardness of the first connection portion, the transition region is more prone to deformation compared to the first connection portion, which can alleviate rigid pulling between the first wall and the first connection portion when the first wall undergoes deformation, thereby reducing the risk of separation between the first wall and the first connection portion.

In some embodiments, the electrode assembly is a laminated structure; the electrode assembly includes a plurality of positive electrode sheets and a plurality of negative electrode sheets; and the plurality of positive electrode sheets and the plurality of negative electrode sheets are stacked along the second direction.

Thus, the laminated electrode assembly has a more compact structure and stronger resistance to extrusion.

In some embodiments, the number of negative electrode sheets is greater than the number of positive electrode sheets; and one positive electrode sheet is disposed between two adjacent negative electrode sheets.

Thus, the provision of the positive electrode sheet between adjacent negative electrode sheets can reduce a transmission distance of lithium ions inside the battery cell and can provide more lithium ion transmission paths, thereby improving the charging and discharging efficiency of the battery cell.

In some embodiments, each negative electrode sheet is provided with a negative electrode tab; and/or each positive electrode sheet is provided with a positive electrode tab.

Thus, the tabs can simplify electrical connection between the battery cell and an external circuit.

In some embodiments, along the third direction, a dimension of the buffer structure is greater than a dimension of the positive electrode sheet and/or a dimension of the negative electrode sheet; and the first direction, the second direction, and the third direction are perpendicular to each other.

Thus, a larger dimension of the buffer structure along the third direction makes more regions of the first wall along the third direction receive reduced swelling force, thereby further reducing the risk of fatigue cracking of the region of the first wall near the first connection portion.

In some embodiments, the battery cell further includes two electrode terminals, the two electrode terminals are disposed on the end cover, and the two electrode terminals have opposite polarities and are both electrically connected to the electrode assembly; and
the end cover is provided with a lead-out hole, the electrode terminal includes a terminal body, a first limiting portion, and a second limiting portion, the terminal body is connected to the first limiting portion and the second limiting portion, the terminal body extends through the lead-out hole, and along the first direction, the first limiting portion is located on a side of the end cover facing away from the electrode assembly, and the second limiting portion is located on a side of the end cover facing the electrode assembly.

Thus, the electrode terminal with this structure may be installed on the end cover by riveting, featuring low installation difficulty and better cost performance.

In some embodiments, a thickness of the position of the buffer structure with the minimum residual thickness is T, and T satisfies: 0.1 mm≤T≤1 mm, optionally 0.2 mm≤T≤0.5 mm.

Thus, if 0.1 mm≤T≤1 mm, the buffer structure can not only effectively absorb the swelling force, but also avoid functional failure due to fracture.

If 0.2 mm≤T≤0.5 mm, the buffer structure has a better capability of absorbing the swelling force and is more capable of avoiding functional failure due to fracture.

In some embodiments, a width of the buffer structure is K3, and K3 satisfies: 0.1 mm≤K3≤20 mm, optionally 0.15 mm≤K3≤10 mm.

Thus, if 0.1 mm≤K3≤20 mm, the buffer structure can effectively absorb the swelling force and can reduce the manufacturing costs.

If 0.15 mm≤K3≤10 mm, the buffer structure has a better capability of absorbing the swelling force and lower manufacturing costs.

In some embodiments, a distance from the buffer structure to an upper edge of the end cover is J, and J satisfies: 1 mm≤J≤20 mm, optionally 1.5 mm≤J≤10 mm.

Thus, if 1 mm≤J≤20 mm, the buffer structure is far from the heat-affected zone, which can enhance the capability of the buffer structure in absorbing the swelling force, thereby reducing the risk of fatigue cracking of the region of the first wall near the first connection portion.

If 1.5 mm≤J≤10 mm, the buffer structure is far from the heat-affected zone, which can enhance the capability of the buffer structure in absorbing the swelling force, thereby reducing the risk of fatigue cracking of the region of the first wall near the first connection portion.

According to a second aspect, an embodiment of this application provides a battery, where the battery includes the battery cell according to any one of the embodiments of the first aspect.

Thus, since the battery includes the above battery cell, the battery includes at least all beneficial effects of the above battery cell. Details are not described herein again.

According to a third aspect, an embodiment of this application provides an electric device, where the electric device includes the battery cell according to any one of the embodiments of the first aspect, and the battery cell is configured to supply electric energy to the electric device.

Thus, since the electric device includes the above battery cell, the electric device includes at least all beneficial effects of the above battery cell. Details are not described herein again.

The foregoing description is merely an overview of the technical solutions of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

Those of ordinary skill in the art can clearly understand various other advantages and benefits by reading the detailed description of the preferred embodiments below. The accompanying drawings are merely intended to illustrate the preferred embodiments and are not intended to limit this application. In addition, in all the accompanying drawings, the same reference signs represent the same components. In the accompanying drawings:
FIG. 1 is a schematic structural diagram of a vehicle according to some embodiments of this application;
FIG. 2 is an exploded view of a battery according to some embodiments of this application;
FIG. 3 is an exploded view of a battery cell according to some embodiments of this application;
FIG. 4 is a schematic structural diagram of the battery cell shown in FIG. 3;
FIG. 5 is a cross-sectional view of the battery cell in FIG. 4 along direction A-A;
FIG. 6 is an enlarged view of portion B of the battery cell in FIG. 5;
FIG. 7 is a partial schematic diagram of a battery cell according to some embodiments of this application;
FIG. 8 is a partial schematic diagram of a battery cell according to some other embodiments of this application;
FIG. 9 is a schematic diagram of an electrode assembly according to some embodiments of this application;
FIG. 10 is a partial schematic diagram of a battery cell according to still some other embodiments of this application;
FIG. 11 is a partial schematic diagram of an electrode assembly according to some embodiments of this application;
FIG. 12 is a partial schematic diagram of an electrode assembly according to some other embodiments of this application;
FIG. 13 is a schematic structural diagram of a battery cell according to some other embodiments of this application;
FIG. 14 is a cross-sectional view of the battery cell in FIG. 13 along direction B-B;
FIG. 15 is an enlarged view of portion P of the battery cell in FIG. 14;
FIG. 16 is a partial schematic diagram of a battery cell according to still some other embodiments of this application;
FIG. 17 is a schematic structural diagram of a housing body according to some embodiments of this application;
FIG. 18 is a schematic structural diagram of a housing body according to some other embodiments of this application;
FIG. 19 is a schematic structural diagram of a battery cell according to still some other embodiments of this application;
FIG. 20 is a partial schematic diagram of a battery cell according to still some other embodiments of this application;
FIG. 21 is a schematic diagram of an electrode assembly according to some other embodiments of this application;
FIG. 22 is a schematic structural diagram of an electrode assembly according to some embodiments of this application;
FIG. 23 is a schematic structural diagram of an electrode assembly according to some other embodiments of this application;
FIG. 24 is a partial schematic diagram of a battery cell according to still some other embodiments of this application;
FIG. 25 is an enlarged view of portion C of the battery cell in FIG. 24;
FIG. 26 is a partial schematic diagram of a battery cell according to still some other embodiments of this application;
FIG. 27 is an enlarged view of portion D of the battery cell in FIG. 26; and
FIG. 28 is a schematic diagram of a connection between an end cover and an electrode terminal according to some embodiments of this application.

Reference signs are described as follows:
1. housing; 11. housing body; 111. first wall; 112. second wall; 12. end cover; 4. pressure relief mechanism; 5. connection portion; 51. first connection portion; 52. second connection portion; 2. electrode assembly; 22. positive electrode sheet; 23. negative electrode sheet; 400. body portion; 410. buffer structure; 411. weak portion; 412. groove; 4120. first side surface; 4121. second side surface; 4122. bottom surface; 4110. first weak portion; 4111. second weak portion; 4112. third weak portion; 413. first protrusion; 414. first recess; 420. outer surface of body portion; 430. inner surface of body portion; 417. second protrusion; 418. second recess; 24. separator; 221. positive electrode body region; 2231. positive electrode body portion; 2232. positive electrode thinned portion; 21. tab; 21a. positive electrode tab; 222. positive electrode current collector; 223. positive electrode active material layer; 224. insulating layer; 231. negative electrode body region; 21b. negative electrode tab; 233. negative electrode active material layer; 2211. first end; 2311. second end; 241. third end; 242. extension region; 232. negative electrode current collector; 2331. negative electrode body portion; 2332. negative electrode thinned portion; 11113a. fourth end; 11113b. fifth end; 1113. sixth end; 1114. seventh end; 113. corner wall; 440. first region; 450. second region; 441. first portion; 442. second portion; 25. straight region; 26. corner region; 27. first surface; 28. second surface; 1117. transition region; 511. connection interface; 5111. connection position; 5112. first interface; 5113. second interface; 3. electrode terminal; 31. terminal body; 32. first limiting portion; 33. second limiting portion; 6. first insulating member; 7. second insulating member; 10. battery cell; 20. box; 201. first box body; 202. second box body; 100. battery; 200. controller; 300. motor; 1000. vehicle; Z. first direction; Y. second direction; X. third direction; and U. interface.

### DESCRIPTION OF EMBODIMENTS

The following describes in detail embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", "have", and any other variations thereof in the specification, claims, and brief description of drawings of this application are intended to cover non-exclusive inclusions.

In the description of the embodiments of this application, the technical terms "first", "second", and the like are merely intended to distinguish between different objects, and shall not be understood as any indication or implication of relative importance or any implicit indication of the number, specific sequence, or primary-secondary relationship of the technical features indicated. In the description of the embodiments of this application, "a plurality of" means two or more, unless otherwise clearly and specifically defined.

Reference to "embodiment" in this application means that specific features, structures, or characteristics described with reference to an embodiment may be included in at least one embodiment of this application. The word "embodiment" appearing in various places in this specification does not necessarily refer to the same embodiment or an independent or alternative embodiment that is exclusive of other embodiments. Those skilled in the art explicitly and implicitly understand that the embodiments described herein may be combined with other embodiments.

In the description of the embodiments of this application, the term "and/or" is merely an association relationship describing associated objects, indicating that three relationships may exist. For example, A and/or B may indicate the following three cases: presence of only A; presence of both A and B; and presence of only B. In addition, the character "/" in this specification generally indicates an "or" relationship between the contextually associated objects.

In the description of the embodiments of this application, the term "a plurality of" means two or more (inclusive). Similarly, "a plurality of groups" means two or more (inclusive) groups, and "a plurality of pieces" means two or more (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitations on the embodiments of this application.

In the description of the embodiments of this application, unless otherwise clearly specified and defined, the technical terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. Those of ordinary skill in the art can understand specific meanings of these terms in the embodiments of this application as suitable to specific situations.

In the embodiments of this application, "a plurality of" means two or more (inclusive).

In the embodiments of this application, the battery cell may be a secondary battery. The secondary battery refers to a battery cell whose active material can be activated for continuous use through charging after the battery cell is discharged.

The battery cell includes but is not limited to a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, a lead-acid battery, and the like.

A battery cell typically includes an electrode assembly. The electrode assembly includes a positive electrode, a negative electrode, and a separator. During the charging and discharging of the battery cell, active ions (for example, lithium ions) are intercalated and deintercalated back and forth between the positive electrode and the negative electrode. The separator is disposed between the positive electrode and the negative electrode to reduce the risk of short circuits between the positive and negative electrodes and to allow the active ions to pass through.

In some embodiments, the positive electrode may be a positive electrode sheet. The positive electrode sheet may include a positive electrode current collector and a positive electrode active material provided on at least one surface of the positive electrode current collector.

As an example, the positive electrode current collector has two opposite surfaces in its thickness direction. The positive electrode active material is provided on either or both of the two opposite surfaces of the positive electrode current collector.

As an example, the positive electrode current collector may adopt a metal foil or a composite current collector. For example, as the metal foil, aluminum with silver-plated surface, stainless steel with silver-plated surface, stainless steel, copper, aluminum, nickel, carbon electrode, carbon, nickel, titanium, or the like can be used. The composite current collector may include a polymer material substrate and a metal layer. The composite current collector can be formed by forming a metal material (aluminum, aluminum alloy, nickel, nickel alloy, titanium, titanium alloy, silver, silver alloy, or the like) on a polymer material substrate (such as a substrate of polypropylene, polyethylene terephthalate, polybutylene terephthalate, polystyrene, or polyethylene).

As an example, the positive electrode active material may include at least one of the following materials: lithium-containing phosphate, lithium transition metal oxide, and respective modified compounds thereof. However, this application is not limited to these materials, and other conventional materials that can be used as battery positive electrode active materials can also be used. These positive electrode active materials can be used alone or in combination of two or more. An example of the lithium-containing phosphate may include but is not limited to at least one of lithium iron phosphate (such as LiFePO₄ (also abbreviated as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon. An example of the lithium transition metal oxide may include but is not limited to at least one of lithium cobalt oxide (such as LiCoO₂), lithium nickel oxide (such as LiNiO₂), lithium manganese oxide (such as LiMnO₂ or LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (also abbreviated as NCM333), LiNi_{0.5}Co_{0.2}Mn_{0.3}O₂ (also abbreviated as NCM523), LiNi_{0.5}Co_{0.25}Mn_{0.25}O₂ (also abbreviated as NCM211), LiNi_{0.6}Co_{0.2}Mn_{0.2}O₂ (also abbreviated as NCM622), or LiNi_{0.8}Co_{0.1}Mn_{0.1}O₂ (also abbreviated as NCM811)), lithium nickel cobalt aluminum oxide (such as LiNi_{0.85}Co_{0.15}Al_{0.05}O₂), and modified compounds thereof.

In some embodiments, the positive electrode may adopt foam metal. The foam metal may be foam nickel, foam copper, foam aluminum, foam alloy, or the like. When the foam metal serves as the positive electrode, the surface of the foam metal may be not provided with a positive electrode active material, or certainly may be provided with a positive electrode active material. As an example, the foam metal may also be filled and/or deposited with a lithium source material, potassium metal, or sodium metal, where the lithium source material is lithium metal and/or a lithium-rich material.

In some embodiments, the negative electrode may be a negative electrode sheet. The negative electrode sheet may include a negative electrode current collector.

As an example, the negative electrode current collector may adopt a metal foil, foam metal, or a composite current collector. For example, as the metal foil, aluminum with silver-plated surface, stainless steel with silver-plated surface, copper, aluminum, nickel, carbon electrode, nickel, titanium, or the like can be used. The foam metal may be foam nickel, foam copper, foam aluminum, foam alloy, or the like. The composite current collector may include a polymer material substrate and a metal layer. The composite current collector can be formed by forming a metal material (copper, copper alloy, nickel, nickel alloy, titanium, titanium alloy, silver, silver alloy, or the like) on a polymer material substrate (such as a substrate of polypropylene, polyethylene terephthalate, polybutylene terephthalate, polystyrene, or polyethylene).

As an example, the negative electrode sheet may include a negative electrode current collector and a negative electrode active material provided on at least one surface of the negative electrode current collector.

As an example, the negative electrode current collector has two opposite surfaces in its thickness direction. The negative electrode active material is provided on either or both of the two opposite surfaces of the negative electrode current collector.

As an example, the negative electrode active material may adopt a negative electrode active material for battery cells well known in the art. As an example, the negative electrode active material may include at least one of the following materials: artificial graphite, natural graphite, soft carbon, hard carbon, a silicon-based material, a tin-based material, and lithium titanate. The silicon-based material may be selected from at least one of elemental silicon, a silicon-oxygen compound, a silicon-carbon composite, a silicon-nitrogen composite, and silicon alloy. The tin-based material may be selected from at least one of elemental tin, a tin-oxygen compound, and tin alloy. However, this application is not limited to these materials, and other conventional materials that can be used as battery negative electrode active materials can also be used. These negative electrode active materials can be used alone or in combination of two or more.

In some embodiments, a material of the positive electrode current collector may be aluminum, and a material of the negative electrode current collector may be copper.

In some embodiments, the separator is a separation film. The separation film may be any well-known porous separation film with good chemical stability and mechanical stability.

As an example, a material of the separation film may include at least one of glass fiber, non-woven fabric, polyethylene, polypropylene, and polyvinylidene fluoride. The separation film may be a single-layer film or a multi-layer composite film. When the separation film is a multi-layer composite film, materials of the layers may be the same or different. The separator may be a separate component located between the positive and negative electrodes or attached to the surfaces of the positive and negative electrodes.

In some embodiments, the separator is a solid-state electrolyte. The solid-state electrolyte is provided between the positive electrode and the negative electrode to transmit ions and separate the positive electrode from the negative electrode.

In some embodiments, the battery cell further includes an electrolyte. The electrolyte functions to conduct ions between the positive and negative electrodes. The electrolyte may be in a liquid state, a gel state, or a solid state. The liquid-state electrolyte includes an electrolytic salt and a solvent.

In some embodiments, the electrolytic salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, the solvent may include at least one of ethylene carbonate, propylene carbonate, methyl ethyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. The solvent may also be an ether solvent. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyltetrahydrofuran, diphenyl ether, and crown ether.

The gel-state electrolyte includes a polymer serving as a skeleton network of the electrolyte, combined with an ionic liquid-lithium salt.

The solid-state electrolyte includes a polymer solid-state electrolyte, an inorganic solid-state electrolyte, and a composite solid-state electrolyte.

As an example, the polymer solid-state electrolyte may be polyether (polyethylene oxide), polysiloxane, polycarbonate, polyacrylonitrile, polyvinylidene fluoride, polymethyl methacrylate, single-ion polymer, polyionic liquid-lithium salt, cellulose, or the like.

As an example, the inorganic solid-state electrolyte may include one or more of oxide solid electrolytes (crystalline perovskite, sodium superionic conductor, garnet, amorphous LiPON film), sulfide solid electrolytes (crystalline lithium superionic conductor (lithium germanium phosphorus sulfur, argyrodite), amorphous sulfides), and halide solid electrolytes, nitride solid electrolytes, and hydride solid electrolytes.

As an example, the composite solid-state electrolyte is formed by adding an inorganic solid-state electrolyte filler to a polymer solid electrolyte.

In some embodiments, the electrode assembly is a wound structure. The positive electrode sheet and the negative electrode sheet are wound to form a wound structure.

In some embodiments, the electrode assembly is a laminated structure.

As an example, a plurality of positive electrode sheets and a plurality of negative electrode sheets may be provided, and the plurality of positive electrode sheets and the plurality of negative electrode sheets are alternately stacked.

As an example, a plurality of positive electrode sheets may be provided, the negative electrode sheet is folded to form a plurality of stacked folding sections, and one positive electrode sheet is sandwiched between adjacent folding sections.

As an example, both the positive electrode sheet and the negative electrode sheet are folded to form a plurality of stacked folding sections.

As an example, a plurality of separators may be provided and respectively disposed between any adjacent positive electrode sheets or negative electrode sheets.

As an example, the separators may be consecutively disposed, which are disposed between any adjacent positive electrode sheets or negative electrode sheets by folding or winding.

In some embodiments, the electrode assembly may be in a cylindrical shape, a flat shape, a polygonal prism shape, or the like.

In some embodiments, the electrode assembly is provided with a tab, and the tab can lead current out from the electrode assembly. The tab includes a positive electrode tab and a negative electrode tab.

In some embodiments, the battery cell may include a housing. The housing is configured to encapsulate components such as the electrode assembly and the electrolyte. The housing may be a steel shell, an aluminum shell, a plastic shell (such as polypropylene), a composite metal shell (such as a copper-aluminum composite shell), an aluminum-plastic film, or the like.

As an example, the battery cell may be a cylindrical battery cell, a prismatic battery cell, a pouch battery cell, or a battery cell of another shape, where the prismatic battery cell includes a square shell battery cell, a blade-shaped battery cell, a polygonal prismatic battery cell. The polygonal prismatic battery cell is, for example, a hexagonal prism battery cell.

The battery mentioned in the embodiments of this application refers to a single physical module that includes one or more battery cells to provide higher voltage and capacity.

In some embodiments, the battery may be a battery module. When a plurality of battery cells are provided, the plurality of battery cells are arranged and fixed to form a battery module.

In some embodiments, the battery may be a battery pack. The battery includes a box and a battery cell, and the battery cell or battery module is accommodated in the box.

In some embodiments, the box may be a part of a chassis structure of a vehicle. For example, a part of the box may become at least part of a floor of the vehicle, or a part of the box may become at least part of a cross beam and longitudinal beam of the vehicle.

In some embodiments, the battery may be an energy storage apparatus. The energy storage apparatus includes an energy storage container, an energy storage cabinet, and the like.

In related art, a battery cell typically includes a housing and an electrode assembly. The housing may include a housing body and an end cover. The housing body has an opening. After the electrode assembly is loaded into the housing body, the opening of the housing body can be sealed by the end cover to form a sealed space within the housing for accommodating the electrode assembly.

To achieve a stable connection between the end cover and the housing body, the end cover may be welded to the housing body. After the end cover is welded to the housing body, a connection portion is formed at a welding location between the end cover and the housing body. A region of a wall of the housing body near the connection portion forms a heat-affected zone due to the high welding temperature, and the strength of a portion of the wall of the housing body in the heat-affected zone is reduced.

During the charging and discharging cycles of the battery cell, the electrode assembly swells, and the wall of the housing body undergoes deformation after being subjected to a swelling force of the electrode assembly. Over time, this may easily lead to fatigue cracking of the region of the wall of the housing body near the connection portion (the heat-affected zone), thus affecting the service life of the battery cell.

Based on the above considerations, to alleviate the problem of fatigue cracking of the region of the wall of the housing body near the connection portion, an embodiment of this application provides a battery cell. The battery cell includes a housing body, an end cover, and an electrode assembly. At least one end of the housing body along a first direction is provided with an opening. The housing body includes a first wall. The end cover seals the opening. The first wall is welded to the end cover to form a first connection portion. The electrode assembly is at least partially accommodated in the housing body. The electrode assembly includes a positive electrode sheet and a negative electrode sheet. At least a portion of the positive electrode sheet and at least a portion of the negative electrode sheet are stacked along a second direction. The second direction is parallel to a thickness direction of the first wall. The first direction intersects the second direction. The first wall includes a body portion. Along the first direction, the body portion is located on a side of the first connection portion facing away from the end cover. The body portion is provided with a buffer structure. The buffer structure is spaced apart from the first connection portion.

In such a battery cell, the buffer structure can absorb a swelling force generated during use of the electrode assembly, thereby reducing the swelling force directly acting on the first connection portion. Therefore, the buffer structure can reduce the risk of fatigue cracking of a region of the first wall near the first connection portion due to the swelling of the electrode assembly, thereby prolonging the service life of the battery cell.

The battery cell according to this embodiment of this application is applied to a battery and an electric device using a battery cell.

The electric device may be a vehicle, a mobile phone, a portable device, a laptop computer, a ship, a spacecraft, an electric toy, an electric tool, or the like. The vehicle may be a fuel vehicle, a gas vehicle, or a new energy vehicle. The new energy vehicle may be a battery electric vehicle, a hybrid electric vehicle, or an extended-range electric vehicle, or the like. The spacecraft includes an airplane, a rocket, a space shuttle, a spaceship, and the like. The electric toy includes a fixed or mobile electric toy, for example, a game console, an electric toy car, an electric toy ship, or an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the above electric device.

For ease of description, the electric device being a vehicle is used as example for description of the following embodiments.

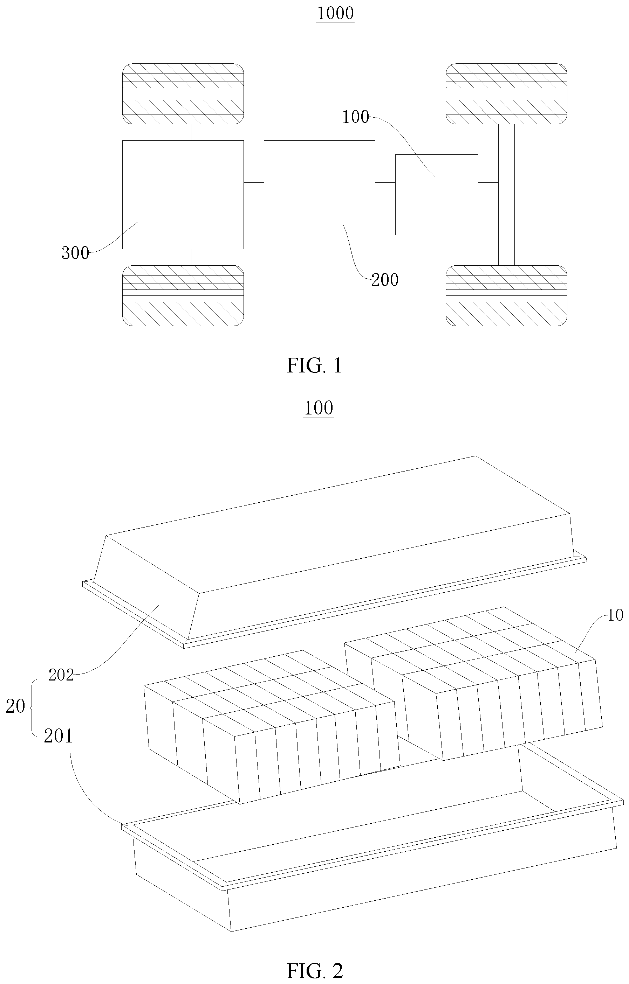

Referring to FIG. 1, FIG. 1 is a schematic structural diagram of a vehicle 1000 according to some embodiments of this application. A battery 100 is disposed inside the vehicle 1000. The battery 100 may be disposed at the bottom, front, or rear of the vehicle 1000. The battery 100 may be configured to supply power to the vehicle 1000. For example, the battery 100 may serve as an operating power source of the vehicle 1000.

The vehicle 1000 may further include a controller 200 and a motor 300. The controller 200 is configured to control the battery 100 to supply power to the motor 300, for example, to satisfy power needs of start, navigation, and driving of the vehicle 1000.

In some embodiments of this application, the battery 100 can not only serve as an operating power source of the vehicle 1000, but also as a driving power source of the vehicle 1000, replacing or partially replacing fossil fuel or natural gas to provide driving power for the vehicle 1000.

Referring to FIG. 2, FIG. 2 is an exploded view of a battery 100 according to some embodiments of this application. The battery 100 may include a battery cell 10 and a box 20. The battery cell 10 is accommodated in the box 20.

The box 20 is a component for accommodating the battery cell 10. The box 20 provides an accommodation space for the battery cell 10, and the box 20 may adopt various structures.

In some embodiments, the box 20 may include a first box body 201 and a second box body 202. The first box body 201 and the second box body 202 fit each other to define an accommodation space for accommodating the battery cell 10.

The first box body 201 and the second box body 202 may be of various shapes, such as a cuboid and a cylinder. The first box body 201 may be a hollow structure with an opening on one side, and the second box body 202 may also be a hollow structure with an opening on one side. The opening side of the second box body 202 is engaged with the opening side of the first box body 201 to form the box 20 with an accommodation space. Alternatively, the first box body 201 may be a hollow structure with an opening on one side, the second box body 202 may be a plate-like structure, and the second box body 202 covers the opening side of the first box body 201 to form the box 20 with an accommodation space. The first box body 201 and the second box body 202 can be sealed by a sealing member. The sealing member may be a sealing ring, a sealant, or the like.

One or more battery cells 10 may be provided in the battery 100. If a plurality of battery cells 10 are provided, the plurality of battery cells 10 may be connected in series, parallel, or series-parallel, where being connected in series-parallel means a combination of series and parallel connections of the plurality of battery cells 10. The plurality of battery cells 10 may be connected in series, parallel, or series-parallel first to form a battery module, and then a plurality of battery modules are connected in series, parallel, or series-parallel to form an entirety which is accommodated in the box 20. Alternatively, all battery cells 10 may be directly connected in series, parallel, or series-parallel, and then an entirety formed by the plurality of battery cells 10 is accommodated in the box 20.

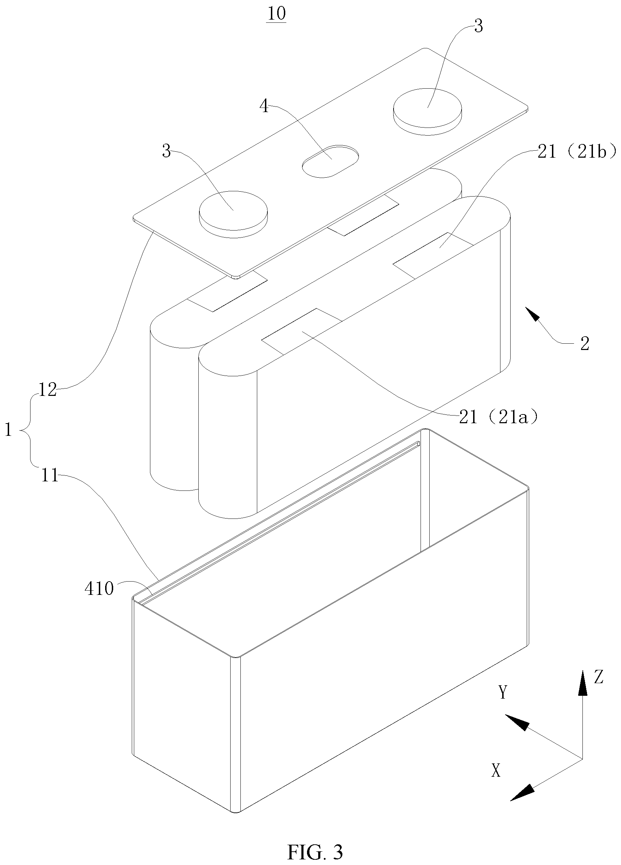

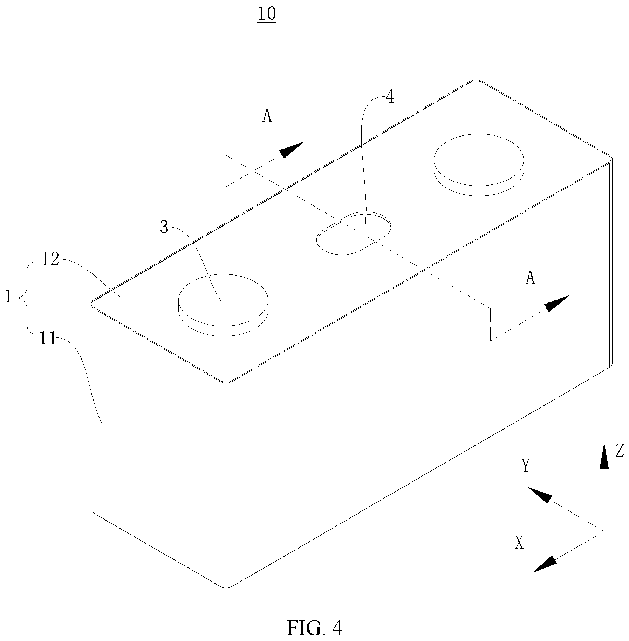

Referring to FIGs. 3 and 4, FIG. 3 is an exploded view of a battery cell 10 according to some embodiments of this application, and FIG. 4 is a schematic structural diagram of the battery cell 10 shown in FIG. 3. The battery cell 10 may include a housing 1 and an electrode assembly 2. The electrode assembly 2 is accommodated in the housing 1.

In some embodiments, the housing 1 may include a housing body 11 and an end cover 12. The housing body 11 has an opening. The end cover 12 seals the opening of the housing body 11.

The housing body 11 is a component for accommodating the electrode assembly 2. The housing body 11 may be a hollow structure with an opening formed at one end, or the housing body 11 may be a hollow structure with openings formed at two opposite ends. The housing body 11 may be of various shapes, such as a cylinder and a cuboid. The housing body 11 may be made of various materials, such as copper, iron, aluminum, steel, and aluminum alloy. The electrode assembly 2 may be partially located in the housing body 11 or entirely located in the housing body 11.

The end cover 12 is a component that seals the opening of the housing body 11 to isolate the internal environment of the battery cell 10 from the external environment. The end cover 12 and the housing body 11 jointly define an accommodation space for accommodating the electrode assembly 2, the electrolyte, and other components. The end cover 12 may be connected to the housing body 11 by welding or crimping to seal the opening of the housing body 11. The shape of the end cover 12 may be adapted to the shape of the housing body 11. For example, if the housing body 11 is a cuboid structure, the end cover 12 is a rectangular plate-like structure adapted to the housing body 11. For another example, if the housing body 11 is a cylindrical structure, the end cover 12 is a circular plate-like structure adapted to the housing body 11. The end cover 12 may also be made of various materials, such as copper, iron, aluminum, steel, and aluminum alloy. The materials of the end cover 12 and the housing body 11 may be the same or different.

In an embodiment where the housing body 11 has an opening formed at one end, one end cover 12 may be correspondingly provided. In an embodiment where the housing body 11 has openings formed at two opposite ends, two end covers 12 may be correspondingly provided. The two end covers 12 respectively seal the two openings of the housing body 11, and the two end covers 12 and the housing body 11 jointly define an accommodation space.

In some embodiments, the battery cell 10 may further include an electrode terminal 3. The electrode terminal 3 is disposed on the housing 1, and the electrode terminal 3 is configured to be electrically connected to the tab 21 of the electrode assembly 2 so as to input or output electrical energy of the battery cell 10. The electrode terminal 3 may be disposed on the housing body 11 of the housing 1, or may be disposed on the end cover 12 of the housing 1. The electrode terminal 3 may be directly connected to the tab 21. For example, the electrode terminal 3 is welded to the tab 21. Alternatively, the electrode terminal 3 is indirectly connected to the tab 21. For example, the electrode terminal 3 is indirectly connected to the tab 21 through a current collecting member. The current collecting member may be a metal conductor, for example, copper, iron, aluminum, steel, or aluminum alloy.

In some embodiments, the battery cell 10 may further include a pressure relief mechanism 4. The pressure relief mechanism 4 may be disposed on the end cover 12, or the pressure relief mechanism 4 may be disposed on the housing body 11. The pressure relief mechanism 4 may be a pressure relief component installed on the housing body 11 or the end cover 12, such as an explosion-proof sheet or a safety valve. The pressure relief mechanism 4 may alternatively be integrally formed with the end cover 12 or the housing body 11. The pressure relief mechanism 4 may be provided with a pressure relief groove, so that the pressure relief mechanism 4 cracks along the pressure relief groove when the battery cell 10 undergoes pressure relief. The pressure relief groove may be a groove extending along a closed trajectory. The closed trajectory may be a circular trajectory, a rectangular trajectory, or the like. The pressure relief groove may alternatively be a groove extending along a non-closed trajectory, and the non-closed trajectory may be an H-shaped trajectory, a Y-shaped trajectory, a V-shaped trajectory, a U-shaped trajectory, or the like.

As an example, as shown in FIGs. 3 and 4, one end of the housing body 11 is provided with an opening. One end cover 12 is disposed in the housing 1. One end cover 12 seals one opening of the housing body 11. The end cover 12 is provided with a pressure relief mechanism 4. Two electrode terminals 3 are disposed on the end cover 12. The two electrode terminals 3 are a positive electrode terminal and a negative electrode terminal, respectively. A positive electrode tab 21a and a negative electrode tab 21b are formed at an end of the electrode assembly 2 facing the end cover 12. The positive electrode terminal is electrically connected to the positive electrode tab 21a. The negative electrode terminal is electrically connected to the negative electrode tab 21b.

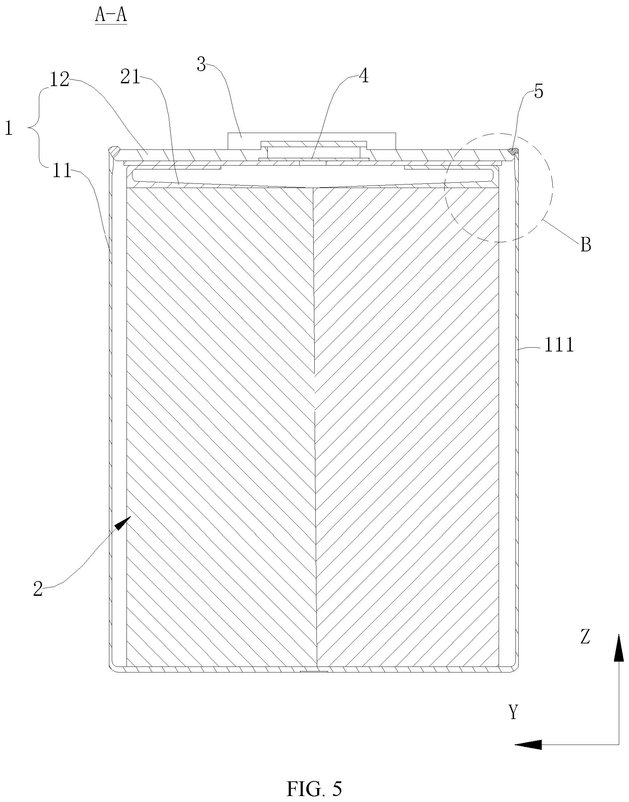

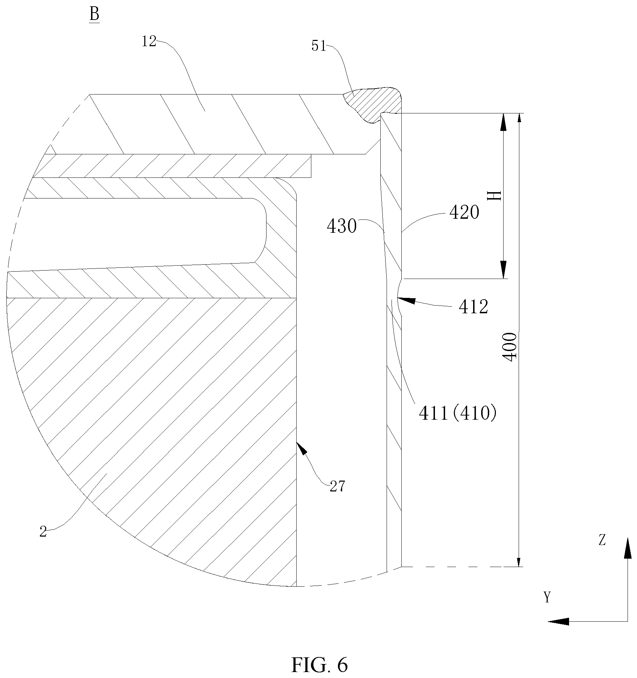

Referring to FIGs. 5 and 6, FIG. 5 is a cross-sectional view of the battery cell 10 in FIG. 4 along direction A-A, and FIG. 6 is an enlarged view of portion B of the battery cell 10 in FIG. 5. An embodiment of this application provides a battery cell 10. The battery cell 10 includes a housing body 11, an end cover 12, and an electrode assembly 2. At least one end of the housing body 11 along a first direction Z is provided with an opening. The housing body 11 includes a first wall 111. The end cover 12 seals the opening. The first wall 111 is welded to the end cover 12 to form a first connection portion 51. The electrode assembly 2 is at least partially accommodated in the housing body 11. The electrode assembly 2 includes a positive electrode sheet 22 and a negative electrode sheet 23. At least a portion of the positive electrode sheet 22 and at least a portion of the negative electrode sheet 23 are stacked along a second direction Y. The second direction Y is parallel to a thickness direction of the first wall 111. The first direction Z intersects the second direction Y.

The first wall 111 includes a body portion 400. Along the first direction Z, the body portion 400 is located on a side of the first connection portion 51 facing away from the end cover 12. The body portion 400 is provided with a buffer structure 410. The buffer structure 410 is spaced apart from the first connection portion 51.

Specifically, the housing body 11 may have an opening formed at only one end along the first direction Z, and one end cover 12 is correspondingly provided. Alternatively, the housing body 11 may have openings formed at two opposite ends along the first direction Z, and two end covers 12 are correspondingly provided.

The housing body 11 may be of various shapes, such as a cylinder and a prism. The prism may be a triangular prism, a quadrangular prism, a pentagonal prism, a hexagonal prism, or the like. The quadrangular prism may be a cuboid, a cube, or the like. The first direction Z is parallel to a direction of the opening of the housing body 11.

In an embodiment where the housing body 11 is cylindrical, the first direction Z may be parallel to an axial direction of the housing body 11. In an embodiment where the housing body 11 is prismatic, the first direction Z may be parallel to an extension direction of a lateral edge of the housing body 11. The second direction Y is parallel to the thickness direction of the first wall 111. In an embodiment where the housing body 11 is cylindrical, the first wall 111 is cylindrical, a radial direction of the housing body 11 is the thickness direction of the first wall 111, and the second direction Y is parallel to the radial direction of the housing body 11. In an embodiment where the housing body 11 is prismatic, the first wall 111 may be a rectangular plate-like structure. The first direction Z and the second direction Y may be arranged at an acute angle, a right angle, or an obtuse angle.

The end cover 12 may be welded to the housing body 11. The end cover 12 may be welded to the housing body 11 to form a connection portion 5. The connection portion 5 may extend along a circumferential direction of the opening of the housing body 11. The end cover 12 is fixedly connected to the housing body 11 through the connection portion 5 to achieve sealing between the end cover 12 and the housing body 11. The connection portion 5 is a portion that has a weld mark formed after the end cover 12 is welded to the housing body 11. A portion where the end cover 12 and the housing body 11 are welded and fused together may be the connection portion 5.

One or more first walls 111 are provided in the housing body 11. The first connection portion 51 may be in one-to-one correspondence with the first wall 111. The first connection portion 51 is a portion that has a weld mark formed after the end cover 12 is welded to the first wall 111. A portion where the end cover 12 and the first wall 111 are welded and fused together may be the first connection portion 51.

A portion of the first connection portion 51 is formed on the end cover 12, and another portion of the first connection portion 51 is formed on the first wall 111. The first wall 111 and the end cover 12 can form the first connection portion 51 by seam welding or form the first connection portion 51 by penetration welding.

The first connection portion 51 may be a part of the connection portion 5, or an entirety of the connection portion 5. In an embodiment where the housing body 11 is cylindrical, there is only one first wall 111 in the housing body 11, the first wall 111 is cylindrical, and the first connection portion 51 is the connection portion 5. In an embodiment where the housing body 11 is prismatic, the housing body 11 may include a plurality of side walls, where the plurality of side walls are disposed along the opening of the housing body 11. At least one of the two side walls disposed opposite each other along the second direction Y may be the first wall 111. The first connection portion 51 is a part of the connection portion 5.

The first wall 111 may be the wall with the largest outer surface area in the housing body 11, or the first wall 111 may not be the wall with the largest outer surface area in the housing body 11. Taking the housing body 11 being a cuboid as an example, the housing body 11 may include two first walls 111 and two second walls 112. The two first walls 111 are disposed opposite each other along the second direction Y. The two second walls 112 are disposed opposite each other along a third direction X. The first direction Z, the second direction Y, and the third direction X are perpendicular to each other. The first wall 111 may be the wall with the largest outer surface area in the housing body 11, so that an outer surface area of the first wall 111 is greater than the outer surface area of the second wall 112. Alternatively, the second wall 112 may be the wall with the largest outer surface area in the housing body 11, so that the outer surface area of the second wall 112 is greater than the outer surface area of the first wall 111.

The electrode assembly 2 is located in the accommodation space jointly defined by the housing body 11 and the end cover 12. The electrode assembly 2 may be a laminated structure or a wound structure. One or more electrode assemblies 2 may be disposed in the housing body 11. If a plurality of electrode assemblies 2 are provided, the plurality of electrode assemblies 2 may be stacked. For example, the plurality of electrode assemblies 2 are stacked along the second direction Y.

At least a portion of the positive electrode sheet 22 and at least a portion of the negative electrode sheet 23 are stacked along the second direction Y. The electrode assembly 2 swells along the second direction Y during cycling. The first wall 111 undergoes deformation after being subjected to a swelling force of the electrode assembly 2, which may easily cause fatigue cracking of a region of the first wall 111 near the first connection portion 51.

The buffer structure 410 is a region that can absorb deformation, which may be a region with reduced strength, such as reduced thickness, or reduced hardness, or may be a curved structure. After the first wall 111 is subjected to the swelling force, since the buffer structure 410 can absorb deformation, the swelling force received by the first connection portion 51 is small.

In the above technical solution, the buffer structure 410 can absorb a swelling force generated during use of the electrode assembly 2, thereby reducing the swelling force directly acting on the first connection portion 51. Therefore, the buffer structure 410 can reduce the risk of fatigue cracking of a region of the first wall 111 near the first connection portion 51 due to the swelling of the electrode assembly 2, thereby prolonging the service life of the battery cell 10.

Referring to FIG. 6, in some embodiments, the buffer structure 410 includes a weak portion 411 disposed on the body portion 400. A minimum thickness of the weak portion 411 is less than thicknesses of other portions of the body portion 400.

Specifically, the weak portion 411 may be a blind hole or a groove provided on the body portion 400. The weak portion 411 may be continuous or discontinuous. For example, the weak portion 411 may include a plurality of weak regions. The plurality of weak regions are arranged at intervals on the body portion 400 along the first direction Z.

Thus, compared to the other portions of the body portion 400, the weak portion 411 can more effectively absorb the swelling force, thereby reducing the swelling force directly acting on the first connection portion 51. Therefore, the weak portion 411 reduces the risk of fatigue cracking of the region of the first wall 111 near the first connection portion 51 due to the swelling of the electrode assembly 2, thereby prolonging the service life of the battery cell 10.

In some embodiments, an inner surface 430 of the body portion 400 is provided with a groove 412.

In some embodiments, an outer surface 420 of the body portion 400 is provided with the groove 412.

In some embodiments, the inner surface 430 and the outer surface of the body portion 400 are each provided with the groove 412.

The weak portion 411 is a region on the body portion 400 opposite an opening of the groove 412.

Specifically, the groove 412 may be circular, rectangular, elliptical, or of other shapes, with size and shape adjusted as needed. With the provision of the groove 412, a region corresponding to the inner surface 430 of the body portion 400 or the outer surface 420 of the body portion 400 is more prone to deformation when the electrode assembly 2 swells, thereby absorbing the swelling force.

Thus, as the region opposite the opening of the groove, the weak portion 411 has better buffering performance, allowing the weak portion 411 to be formed more easily, and reducing the manufacturing difficulty of the housing body 11, thereby reducing the manufacturing costs of the housing body 11.

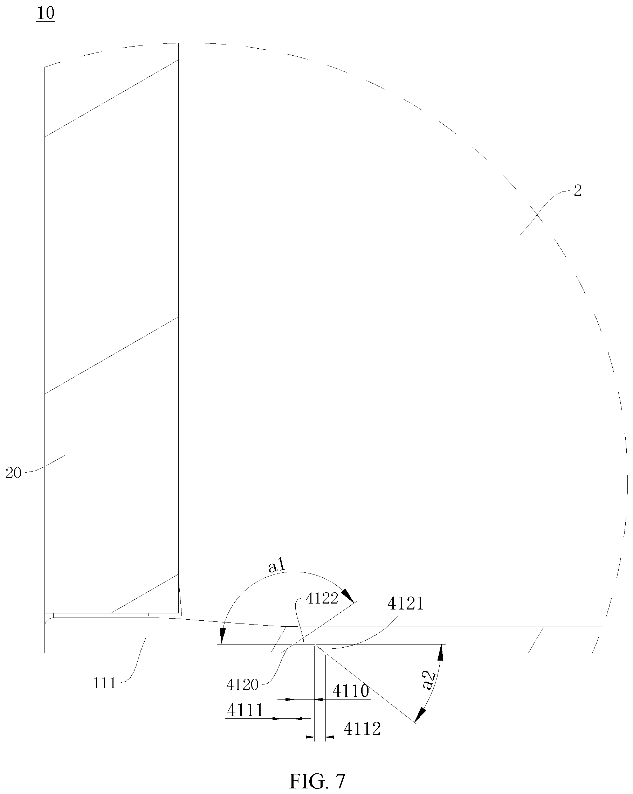

Referring to FIG. 7, FIG. 7 is a partial schematic diagram of a battery cell 10 according to some embodiments of this application. In some embodiments, the groove 412 includes a first side surface 4120, a second side surface 4121, and a bottom surface 4122 connected to the first side surface 4120 and the second side surface 4121. The weak portion 411 includes a first weak portion 4110 disposed opposite the bottom surface 4122. A thickness of the first weak portion 4110 is less than thicknesses of the other portions of the body portion 400.

Specifically, the first weak portion 4110 may be continuous or discontinuous. For example, the first weak portion 4110 extends along the first direction Z and is connected to the first side surface 4120 and the second side surface 4121. The first weak portion 4110 may further include a plurality of first weak regions. The plurality of first weak regions are arranged at intervals along the first direction Z in a region of the first weak portion 4110 opposite the bottom surface 4122.

The first side surface 4120, the second side surface 4121, and the bottom surface 4122 may be surfaces that form a contour of the groove 412. The first side surface 4120, the second side surface 4121, and the bottom surface 4122 may be coplanar or non-coplanar.

Thus, compared to the other portions of the body portion 400, a greater swelling force acts on the first weak portion 4110, and the first weak portion 4110 can more effectively absorb the swelling force, thereby reducing the swelling force directly acting on the first connection portion 51. Therefore, the first weak portion 4110 can reduce the risk of fatigue cracking of the region of the first wall 111 near the first connection portion 51 due to the swelling of the electrode assembly 2, thereby prolonging the service life of the battery cell 10.

Referring to FIG. 7, in some embodiments, the weak portion 411 further includes a second weak portion 4111 disposed opposite the first side surface 4120 and a third weak portion 4112 disposed opposite the second side surface 4121. The first side surface 4120 is located on a side of the bottom surface 4122 close to the first connection portion 51. A thickness of the second weak portion 4111 tends to increase along a direction approaching the first connection portion 51. The second side surface 4121 is located on a side of the bottom surface 4122 facing away from the first connection portion 51. A thickness of the third weak portion 4112 tends to increase along a direction facing away from the first connection portion 51.

Specifically, the direction approaching the first connection portion 51 and the direction facing away from the first connection portion 51 may be portions with different directions in the first direction Z. Along the first direction Z, the second weak portion 4111 and the third weak portion 4112 may be located on two sides of the first weak portion 4110, respectively. The second weak portion 4111 may be connected to or spaced apart from the first weak portion 4110. The third weak portion 4112 may be connected to or spaced apart from the first weak portion 4110.

The second weak portion 4111 may be continuous or discontinuous. For example, the second weak portion 4111 extends along the first direction Z and is connected to the first weak portion 4110. The second weak portion 4111 may alternatively include a plurality of second weak regions. The plurality of second weak regions are arranged at intervals along the first direction Z in a region of the second weak portion 4111 opposite the first side surface 4120.

The third weak portion 4112 may be continuous or discontinuous. For example, the third weak portion 4112 extends along the first direction Z and is connected to the first weak portion 4110. The third weak portion 4112 may alternatively include a plurality of third weak regions. The plurality of third weak regions are arranged at intervals along the first direction Z in a region of the third weak portion 4112 opposite the second side surface 4121.

The thickness of the second weak portion 4111 may increase segmentally or gradually along the direction approaching the first connection portion 51. For ease of manufacturing, the thickness of the second weak portion 4111 may gradually increase along the direction approaching the first connection portion 51.

The thickness of the third weak portion 4112 may increase segmentally or gradually along the direction facing away from the first connection portion 51. For ease of manufacturing, the thickness of the third weak portion 4112 may gradually increase along the direction facing away from the first connection portion 51.

Thus, the non-uniform thickness design of the second weak portion 4111 and the third weak portion 4112 allows the weak portion 411 to have gradient strength, which helps to more effectively withstand and disperse swelling forces from different directions, and helps to guide the swelling forces to be transmitted along specific paths, reducing direct impact on the first weak portion 4110. This allows the weak portion 411 to absorb the swelling forces and be less prone to functional failure. In addition, the weak portion 411 with a gradually changing thickness can also allow the weak portion 411 to be manufactured and formed more easily.

Referring to FIG. 7, in some embodiments, an included angle between the first side surface 4120 and the bottom surface 4122 is greater than or equal to 135 degrees and less than 180 degrees.

Referring to FIG. 7, in some embodiments, an included angle between the second side surface 4121 and the bottom surface 4122 is greater than or equal to 135 degrees and less than 180 degrees.

Referring to FIG. 7, in some embodiments, the included angle between the first side surface 4120 and the bottom surface 4122, and the included angle between the second side surface 4121 and the bottom surface 4122 are both greater than or equal to 135 degrees and less than 180 degrees.

The included angle between the first side surface 4120 and the bottom surface 4122 may be any one point value of 135 degrees, 140 degrees, 145 degrees, 150 degrees, 155 degrees, 160 degrees, 165 degrees, 170 degrees, or 175 degrees, or falls within a range defined by any two of these values.

The included angle between the second side surface 4121 and the bottom surface 4122 may be any one point value of 135 degrees, 140 degrees, 145 degrees, 150 degrees, 155 degrees, 160 degrees, 165 degrees, 170 degrees, or 175 degrees, or falls within a range defined by any two of these values.

Specifically, the included angle between the first side surface 4120 and the bottom surface 4122 is denoted as a first included angle a1, and the included angle between the second side surface 4121 and the bottom surface 4122 is denoted as a second included angle a2. The first included angle a1 and the second included angle a2 may be the same or different.

Thus, within these angle ranges, the weak portion 411 has a high capability of absorbing the swelling force, thereby effectively reducing the risk of fatigue cracking of the region of the first wall 111 near the first connection portion 51 due to the swelling of the electrode assembly 2, thereby prolonging the service life of the battery cell 10.

In addition, the groove 412 can be typically manufactured by a stamping process. During stamping, a mold is used for processing, where the mold typically includes an upper mold and a lower mold. The upper mold is used for stamping, and the lower mold is used for supporting the housing body 11. During stamping, the housing body 11 is fixed to the lower mold by a clamp or a fixing structure of the mold, and then the upper mold moves to the housing body 11 and applies pressure, so that a region of the housing body 11 corresponding to the upper mold undergoes deformation to form the groove 412.

When the angle is greater than or equal to 135 degrees and less than 180 degrees, the groove 412 is not engaged with the upper mold during demolding, so that the upper mold can be more easily separated from the groove 412 after the groove 412 is processed. Therefore, controlling the angle between 135 degrees and 180 degrees can facilitate the formation of the groove 412 and reduce the manufacturing difficulty of the housing body 11, thereby improving the processing accuracy of the housing body 11 and prolonging the service life of the mold.

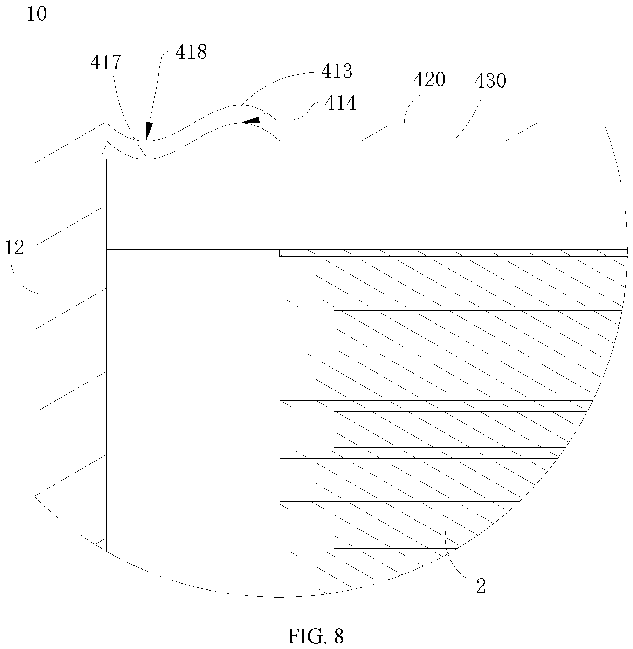

Referring to FIG. 8, FIG. 8 is a partial schematic diagram of a battery cell 10 according to some other embodiments of this application. In some embodiments, the buffer structure 410 includes a first protrusion 413 and a first recess 414. The first protrusion 413 corresponds to the first recess 414. The first protrusion 413 protrudes from the outer surface 420 of the body portion 400. The first recess 414 is recessed outward from the inner surface 430 of the body portion 400.

Specifically, the first protrusion 413 and the first recess 414 may be arranged along the first direction Z. Along the first direction Z, one end of the first protrusion 413 may be connected to one end of the first recess 414. The first protrusion 413 and the first recess 414 may form a curved structure. For example, the first protrusion 413 and the first recess 414 may form an S-shaped structure.

Thus, the first protrusion 413 and the first recess 414 can form a partial buffer region, increasing buffer paths of the buffer structure 410 to disperse the swelling force, thereby reducing the swelling force directly acting on the first connection portion 51. Therefore, the cooperation of the first protrusion 413 and the first recess 414 can reduce the risk of fatigue cracking of the region of the first wall 111 near the first connection portion 51 due to the swelling of the electrode assembly 2, thereby prolonging the service life of the battery cell 10.

In some embodiments, a plurality of first protrusions 413 are provided. A plurality of first recesses 414 are provided. Each first protrusion 413 corresponds to one first recess 414.

Specifically, the number of first protrusions 413 may be two, three, four, or even more. The number of first recesses 414 may be two, three, four, or even more.

As an example, the first protrusion 413 may include a first sub-protrusion, a second sub-protrusion, and a third sub-protrusion. The first recess 414 may include a first sub-recess, a second sub-recess, and a third sub-recess. Along the first direction Z, the first sub-protrusion, the first sub-recess, the second sub-protrusion, the second sub-recess, the third sub-protrusion, and the third sub-recess are connected in sequence.

Thus, the plurality of first protrusions 413 and the corresponding first recesses 414 can further increase the buffer path of the buffer structure 410, providing a plurality of regions for dispersing the swelling force, thereby achieving more effective absorption of the swelling force, and effectively reducing the swelling force directly acting on the first connection portion 51.

Referring to FIG. 8, in some embodiments, the buffer structure 410 includes a second protrusion 417 and a second recess 418. The second protrusion 417 corresponds to the second recess 418. The second protrusion 417 protrudes from the inner surface 430 of the body portion 400. The second recess 418 is recessed inward from the outer surface 420 of the body portion 400.

Specifically, the second protrusion 417 and the second recess 418 may be arranged along the second direction Y. Along the second direction Y, one end of the second protrusion 417 may be connected to one end of the second recess 418. The second protrusion 417 and the second recess 418 may form a curved structure. For example, the second protrusion 417 and the second recess 418 may form an S-shaped structure.

Thus, the second protrusion 417 and the second recess 418 can form a partial buffer region, increasing the buffer paths of the buffer structure 410 to disperse the swelling force, thereby reducing the swelling force directly acting on the first connection portion 51. Therefore, the cooperation of the second protrusion 417 and the second recess 418 can reduce the risk of fatigue cracking of the region of the first wall 111 near the first connection portion 51 due to the swelling of the electrode assembly 2, thereby prolonging the service life of the battery cell 10.

In some embodiments, a plurality of second protrusions 417 are provided. A plurality of second recesses 418 are provided. Each second protrusion 417 corresponds to one second recess 418.

Specifically, the number of second protrusions 417 may be two, three, four, or even more. The number of second recesses 418 may be two, three, four, or even more.

As an example, the second protrusion 417 may include a fourth sub-protrusion, a fifth sub-protrusion, and a sixth sub-protrusion. The second recess 418 may include a fourth sub-recess, a fifth sub-recess, and a sixth sub-recess. Along the first direction Z, the fourth sub-protrusion, the fourth sub-recess, the fifth sub-protrusion, the fifth sub-recess, the sixth sub-protrusion, and the sixth sub-recess are connected in sequence.

Thus, the plurality of second protrusions 417 and the corresponding second recesses 418 can further increase the buffer paths of the buffer structure 410, providing a plurality of regions for dispersing the swelling force, thereby achieving more effective absorption of the swelling force, and effectively reducing the swelling force directly acting on the first connection portion 51.

Referring to FIG. 6, in some embodiments, along the first direction Z, a distance between the buffer structure 410 and an edge of the first connection portion 51 is H, and H satisfies: 0.3 mm≤H≤7 mm. H may be any one point value of 0.3 mm, 1.5 mm, 2 mm, 3 mm, 4 mm, 5.5 mm, or 7 mm, or falls within a range defined by any two of these values.

In some embodiments, along the first direction Z, H satisfies: 1.5 mm≤H≤4 mm. H may be any one point value of 1.5 mm, 2.5 mm, 3.5 mm, 3.6 mm, 3.7 mm, 3.8 mm, or 4 mm, or falls within a range defined by any two of these values.

Thus, within these value ranges, the buffer structure 410 can effectively absorb the swelling force, thereby reducing the swelling force directly acting on the first connection portion 51. The buffer structure 410 does not undergo fatigue cracking together with the first connection portion 51 due to a short distance from the first connection portion 51, and does not fail to reduce the swelling force directly acting on the first connection portion 51 due to a long distance from the first connection portion 51.

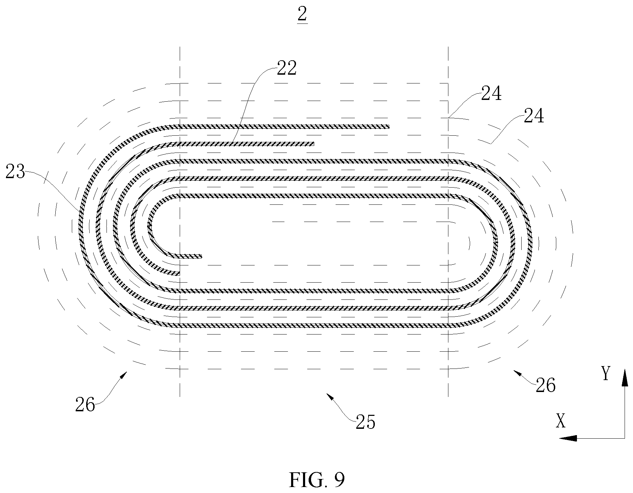

Referring to FIG. 9, FIG. 9 is a schematic diagram of an electrode assembly 2 according to some embodiments of this application. In some embodiments, the electrode assembly 2 further includes a separator 24. The separator 24 is disposed between the positive electrode sheet 22 and the negative electrode sheet 23.

The positive electrode sheet 22 includes a positive electrode body region 221 and a positive electrode tab 21a protruding from the positive electrode body region 221. The positive electrode body region 221 has a positive electrode active material layer 223. The negative electrode sheet 23 includes a negative electrode body region 231 and a negative electrode tab 21b protruding from the negative electrode body region 231. The negative electrode body region 231 has a negative electrode active material layer 233. Along the first direction Z, the positive electrode body region 221 has a first end 2211 facing the end cover 12, the negative electrode body region 231 has a second end 2311 facing the end cover 12, the separator 24 has a third end 241 facing the end cover 12, and the third end 241 is closer to the end cover 12 than the first end 2211 and the second end 2311.

Specifically, in these embodiments, the electrode assembly 22 may be a wound structure or a laminated structure.

The positive electrode sheet 22 may include a positive electrode current collector 222 and a positive electrode active material layer 223. The positive electrode current collector 222 is provided with the positive electrode active material layer 223 on one or both surfaces in its thickness direction.

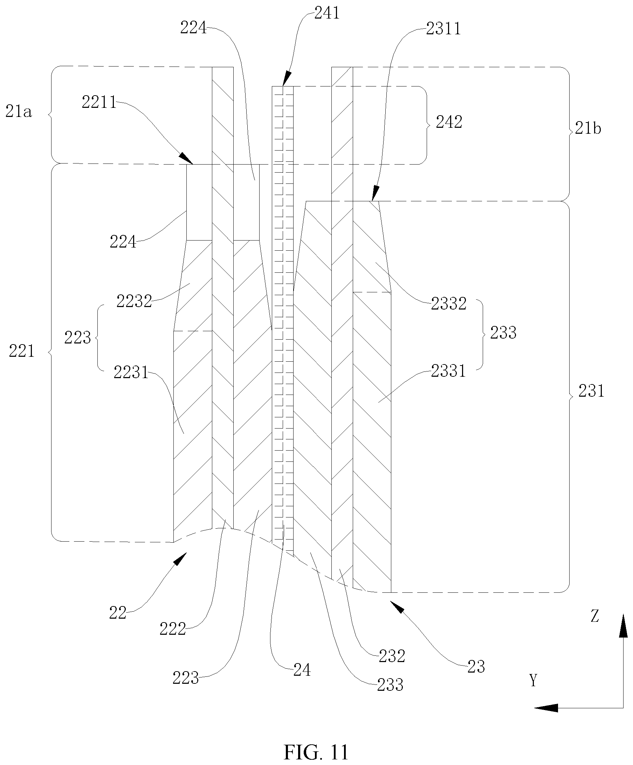

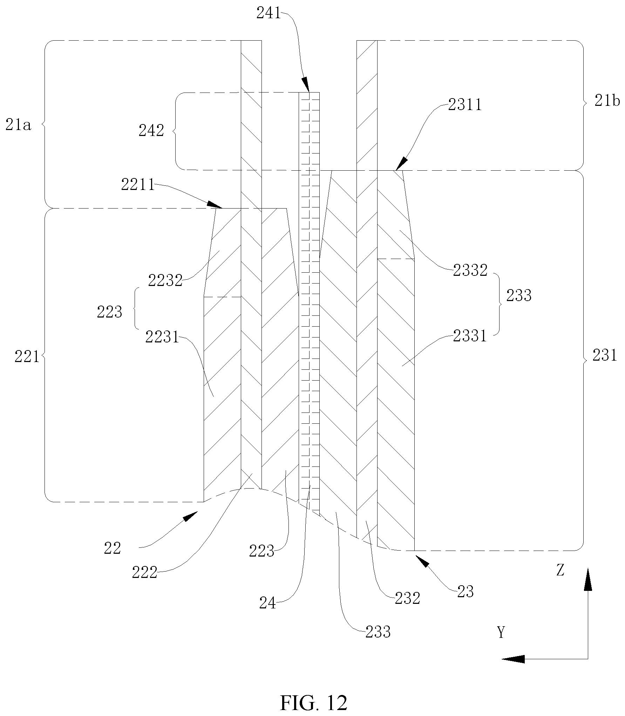

Referring to FIGs. 10, 11, and 12, FIG. 10 is a partial schematic diagram of a battery cell 10 according to still some other embodiments of this application, FIG. 11 is a partial schematic diagram of an electrode assembly 2 according to some embodiments of this application, and FIG. 12 is a partial schematic diagram of an electrode assembly 2 according to some other embodiments of this application. The positive electrode sheet 22 further includes an insulating layer 224. Two opposite surfaces of the positive electrode current collector 222 in its thickness direction are each provided with the insulating layer 224. The insulating layer 224 and the positive electrode active material layer 223 are arranged along the first direction Z. The insulating layer 224 is disposed at an end of the positive electrode active material layer 223. A portion of the positive electrode sheet 22 entirely corresponding to the positive electrode active material layer 223 and the insulating layer 224 is the positive electrode body region 221. An end of the insulating layer 224 close to the end cover 12 forms the first end 2211 of the positive electrode body region 221. A portion of the positive electrode current collector 222 extending beyond the insulating layer 224 forms the positive electrode tab 21a.

In the embodiments shown in FIG. 12, the positive electrode sheet 22 is not provided with the insulating layer 224. A portion of the positive electrode sheet 22 corresponding to the positive electrode active material layer 223 is the positive electrode body region 221. An end of the positive electrode active material layer 223 close to the end cover 12 forms the first end 2211 of the positive electrode body region 221. A portion of the positive electrode current collector 222 extending beyond the positive electrode active material layer 223 forms the positive electrode tab 21a.

The negative electrode sheet 23 may include a negative electrode current collector 232 and a negative electrode active material layer 233. The negative electrode current collector 232 is provided with the negative electrode active material layer 233 on one or both surfaces in its thickness direction. A portion of the negative electrode sheet 23 corresponding to the negative electrode active material layer 233 is the negative electrode body region 231. An end of the negative electrode active material layer 233 close to the end cover 12 forms the second end 2311 of the negative electrode body region 231. A portion of the negative electrode current collector 232 extending beyond the negative electrode active material layer 233 forms the negative electrode tab 21b.

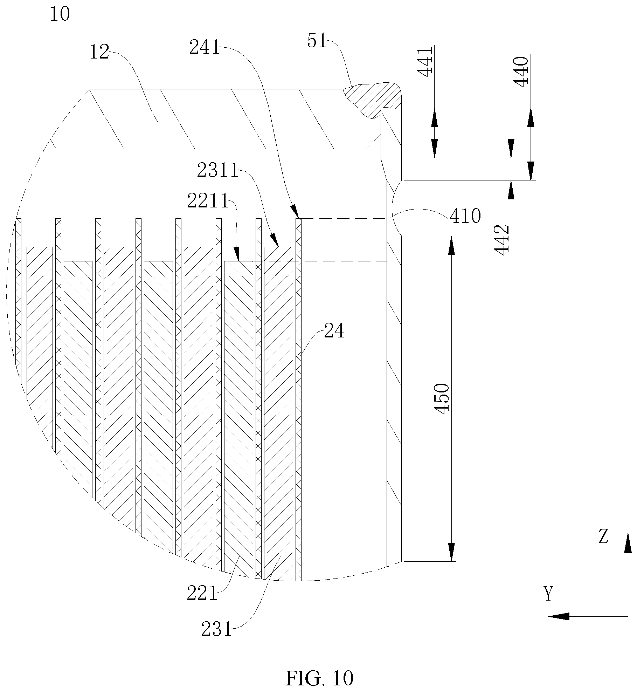

The first end 2211 may be flush with the second end 2311. As shown in FIG. 11, the first end 2211 may alternatively be closer to the end cover 12 than the second end 2311 (shown in FIG. 10). As shown in FIG. 12, the second end 2311 may alternatively be closer to the end cover 12 than the first end 2211 (shown in FIG. 10).

Thus, the separator 24 has a portion extending beyond the first end 2211 and the second end 2311, enhancing an insulation effect of the separator 24 between the positive electrode sheet 22 and the negative electrode sheet 23, and reducing the risk of overlapping of the positive electrode sheet 22 and the negative electrode sheet 23.

Referring to FIG. 10, in some embodiments, the separator 24 includes an extension region 242 extending beyond the first end 2211 and the second end 2311 along the first direction Z. In a projection plane perpendicular to the second direction Y, an orthographic projection of the extension region 242 partially overlaps an orthographic projection of the buffer structure 410.

Specifically, the extension region 242 is a portion of the separator 24 that extends beyond both the first end 2211 of the positive electrode body region 221 and the second end 2311 of the negative electrode body region 231. It can be understood that, as shown in FIG. 11, in an embodiment where the first end 2211 is closer to the end cover 12 than the second end 2311, a portion of the separator 24 extending beyond the first end 2211 is the extension region 242. As shown in FIG. 12, in an embodiment where the second end 2311 is closer to the end cover 12 than the first end 2211, a portion of the separator 24 extending beyond the second end 2311 is the extension region 242.

As an example, in FIGs. 10 to 12, portions of the positive electrode sheet 22, the negative electrode sheet 23, and the separator 24 in the electrode assembly 2 in a straight region 25 (not shown in FIGs. 10 to 12) are stacked along the second direction Y.

Thus, this structure can increase a dimension of the buffer structure 410 along the first direction Z, improving the capability of the buffer structure 410 in absorbing the swelling force, and further reducing the risk of fatigue cracking of the region of the first wall 111 near the first connection portion 51.

Referring to FIG. 10, in some embodiments, in the projection plane perpendicular to the second direction Y, an orthographic projection of the positive electrode body region 221 does not overlap the orthographic projection of the buffer structure 410.

Referring to FIG. 10, in some embodiments, in the projection plane perpendicular to the second direction Y, an orthographic projection of the negative electrode body region 231 does not overlap the orthographic projection of the buffer structure 410.

Referring to FIG. 10, in some embodiments, in the projection plane perpendicular to the second direction Y, both the orthographic projection of the positive electrode body region 221 and the orthographic projection of the negative electrode body region 231 do not overlap the orthographic projection of the buffer structure 410.

As an example, in the embodiments of FIGs. 10 to 12, in the projection plane perpendicular to the second direction Y, the orthographic projections of the positive electrode body region 221 and the buffer structure 410 do not overlap each other. The orthographic projections of the negative electrode body region 231 and the buffer structure 410 do not overlap each other.

Thus, if in the projection plane perpendicular to the second direction Y, the orthographic projection of the positive electrode body region 221 does not overlap the orthographic projection of the buffer structure 410, the housing body 11 can provide a larger swelling space for the electrode assembly 2, reducing the risk of the electrode assembly 2 swelling and directly applying the swelling force to the buffer structure, reducing the deformation of the first wall 111, and further reducing the risk of fatigue cracking of the region of the first wall 111 near the first connection portion 51.

If in the projection plane perpendicular to the second direction Y, the orthographic projection of the negative electrode body region 231 does not overlap the orthographic projection of the buffer structure 410, the housing body 11 can provide a larger swelling space for the electrode assembly 2, reducing the risk of the electrode assembly 2 swelling and directly applying the swelling force to the buffer structure 410, reducing the deformation of the first wall 111, and further reducing the risk of fatigue cracking of the region of the first wall 111 near the first connection portion 51.

In some embodiments, in the projection plane perpendicular to the second direction, the orthographic projection of the positive electrode body region 221 overlaps the orthographic projection of the buffer structure 410.

In some embodiments, in the projection plane perpendicular to the second direction, the orthographic projection of the negative electrode body region 231 overlaps the orthographic projection of the buffer structure 410.

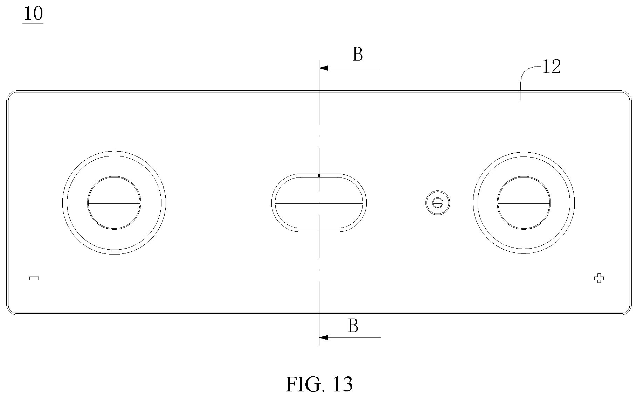

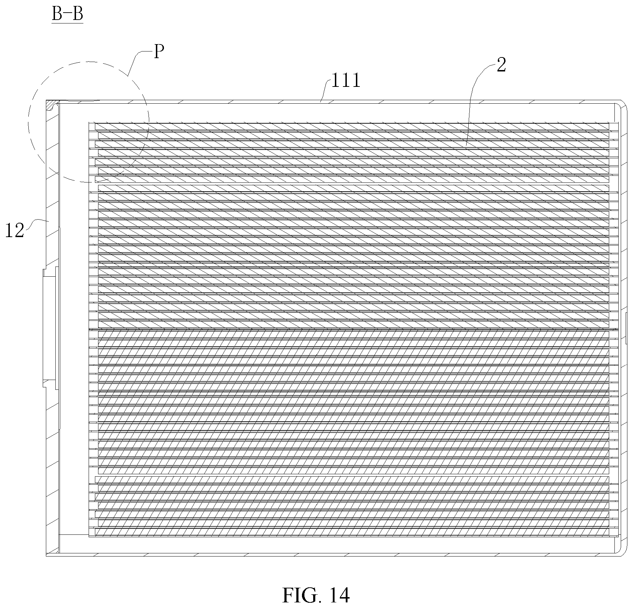

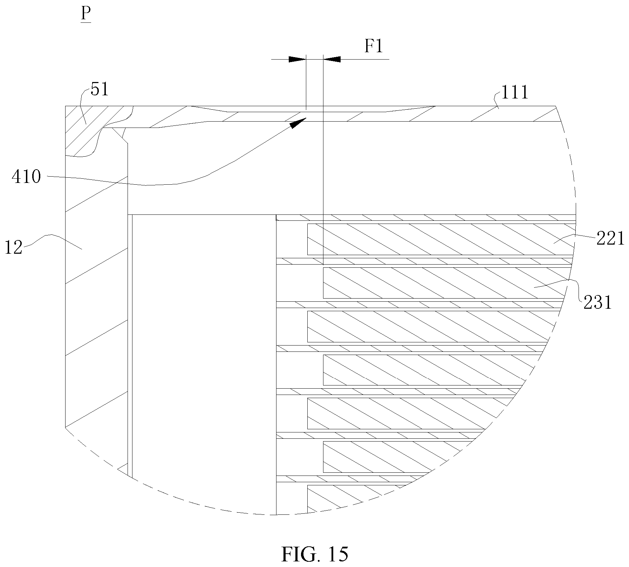

Referring to FIGs. 13, 14, and 15, FIG. 13 is a schematic structural diagram of a battery cell 10 according to some other embodiments of this application, FIG. 14 is a cross-sectional view of the battery cell 10 in FIG. 13 along direction B-B, and FIG. 15 is an enlarged view of portion P of the battery cell 10 in FIG. 14. In some embodiments, in the projection plane perpendicular to the second direction, both the orthographic projection of the positive electrode body region 221 and the orthographic projection of the negative electrode body region 231 overlap the orthographic projection of the buffer structure 410.

As an example, in the embodiments of FIG. 15, in the projection plane perpendicular to the second direction, the orthographic projections of the positive electrode body region 221 and the buffer structure 410 overlap each other, and the orthographic projections of the negative electrode body region 231 and the buffer structure 410 overlap each other.

Thus, if in the projection plane perpendicular to the second direction, the orthographic projection of the positive electrode body region 221 overlaps the orthographic projection of the buffer structure 410, the buffer structure 410 has a large design width, enhancing the capability of the buffer structure 410 in absorbing the swelling force, thereby reducing the risk of fatigue cracking of the region of the first wall 111 near the first connection portion 51.

If in the projection plane perpendicular to the second direction, the orthographic projection of the negative electrode body region 231 overlaps the orthographic projection of the buffer structure 410, the buffer structure 410 has a large design width, enhancing the capability of the buffer structure 410 in absorbing the swelling force, thereby reducing the risk of fatigue cracking of the region of the first wall 111 near the first connection portion 51.

In some embodiments, in the projection plane perpendicular to the second direction, the orthographic projection of the buffer structure 410 is at least partially located between an orthographic projection of the first connection portion 51 and the orthographic projection of the positive electrode body region 221.

In some embodiments, in the projection plane perpendicular to the second direction, the orthographic projection of the buffer structure 410 is at least partially located between the orthographic projection of the first connection portion 51 and the orthographic projection of the negative electrode body region 231.

In some embodiments, in the projection plane perpendicular to the second direction, the orthographic projection of the buffer structure 410 is at least partially located between the orthographic projection of the first connection portion 51 and the orthographic projection of the positive electrode body region 221; and the orthographic projection of the buffer structure 410 is at least partially located between the orthographic projection of the first connection portion 51 and the orthographic projection of the negative electrode body region 231.

As an example, in the embodiments of FIG. 15, in the projection plane perpendicular to the second direction, the orthographic projection of the buffer structure 410 is at least partially located between the orthographic projection of the first connection portion 51 and the orthographic projection of the positive electrode body region 221; and the orthographic projection of the buffer structure 410 is at least partially located between the orthographic projection of the first connection portion 51 and the orthographic projection of the negative electrode body region 231.

Thus, if in the projection plane perpendicular to the second direction, the orthographic projection of the buffer structure 410 is at least partially located between the orthographic projection of the first connection portion 51 and the orthographic projection of the positive electrode body region 221, the probability of the swelling force of the electrode assembly 2 directly acting on the buffer structure 410 is reduced, thereby reducing the deformation of the first wall 111, and further reducing the risk of fatigue cracking of the region of the first wall 111 near the first connection portion 51.

If the orthographic projection of the buffer structure 410 is at least partially located between the orthographic projection of the first connection portion 51 and the orthographic projection of the negative electrode body region 231, the probability of the swelling force of the electrode assembly 2 directly acting on the buffer structure 410 is reduced, thereby reducing the deformation of the first wall 111, and further reducing the risk of fatigue cracking of the region of the first wall 111 near the first connection portion 51.

In some embodiments, in the projection plane perpendicular to the second direction, an orthographic projection of a body region of the positive electrode body region 221 and the negative electrode body region 231 away from the first connection portion 51 is a first orthographic projection. An orthographic projection of a position of the buffer structure 410 with a minimum residual thickness is located between the orthographic projection of the first connection portion 51 and the first orthographic projection.

Specifically, in a case that a residual thickness of the buffer structure 410 gradually decreases from two ends to the middle, and there is a uniform-residual-thickness region with a same residual thickness in the middle, the thickness of the position of the buffer structure 410 with the minimum residual thickness is the thickness of the uniform-residual-thickness region. In a case that the buffer structure 410 is a symmetrical structure and has a residual thickness gradually decreasing from two ends to the middle, the position of the buffer structure 410 with the minimum residual thickness is a center line position of the buffer structure 410. Certainly, the buffer structure 410 may alternatively be an asymmetrical structure.

As an example, in the embodiments of FIG. 15, the positive electrode body region 221 is farther away from the first connection portion 51 than the negative electrode body region 231. The buffer structure 410 is a symmetrical structure and has a residual thickness gradually decreasing from two ends to the middle. A distance F1 between the position of the buffer structure 410 with the minimum residual thickness and the positive electrode body region 221 is greater than 0.

Thus, during charging of the battery cell 10, ions in the positive electrode sheet 22 are intercalated and deintercalated to enter an electrolyte, and electrons are released and flow through an external circuit to the negative electrode sheet 23. This process is accompanied by volume swelling of the negative electrode sheet 23 in a region corresponding to the positive electrode sheet 22. Therefore, the orthographic projection of the position of the buffer structure 410 with the minimum residual thickness being located between the orthographic projection of the first connection portion 51 and the first orthographic projection can reduce the probability that the swelling force generated during the swelling of the negative electrode sheet 23 directly acts on the position of the buffer structure 410 with the minimum residual thickness, thereby preventing the buffer structure 410 from directly fracturing and causing functional failure. In addition, the buffer structure 410 can maintain a large width, which can enhance the capability of the buffer structure 410 in absorbing the swelling force, thereby reducing the risk of fatigue cracking of the region of the first wall 111 near the first connection portion 51.

Referring to FIGs. 11 and 12, in some embodiments, the negative electrode sheet 23 includes a negative electrode current collector 232 and a negative electrode active material layer 233 disposed on at least one side of the negative electrode current collector 232. The negative electrode active material layer 233 includes a negative electrode active material. The positive electrode sheet 22 includes a positive electrode current collector 222 and a positive electrode active material layer 223 disposed on at least one side of the positive electrode current collector. The positive electrode active material layer 223 includes a positive electrode active material.

Specifically, the negative electrode active material layer 233 may be disposed on only one side of the negative electrode current collector 232, that is, the negative electrode current collector 232 is provided with the negative electrode active material layer 233 on only one surface in its thickness direction. Alternatively, the negative electrode active material layer 233 may be disposed on each of two opposite sides of the negative electrode current collector 232, that is, the negative electrode current collector 232 is provided with the negative electrode active material layer 233 on each of two opposite surfaces in its thickness direction.

The negative electrode active material may include at least one of the following materials: artificial graphite, natural graphite, soft carbon, hard carbon, a silicon-based material, a tin-based material, lithium titanate, and the like.

The positive electrode active material layer 223 may be disposed on only one side of the positive electrode current collector 222, that is, the positive electrode current collector 222 is provided with the positive electrode active material layer 223 on only one surface in its thickness direction. Alternatively, the positive electrode active material layer 223 may be disposed on each of two opposite sides of the positive electrode current collector 222, that is, the positive electrode current collector 222 is provided with the positive electrode active material layer 223 on each of two opposite surfaces in its thickness direction.

Thus, the provision of the negative electrode active material layer 233 on at least one side of the negative electrode current collector 232 can increase the content of the active material in the battery cell 10, thereby increasing the energy density of the battery. The provision of the positive electrode active material layer 223 on at least one side of the positive electrode current collector 222 can increase the content of the active material in the battery cell 10, thereby increasing the energy density of the battery 100.

Referring to FIGs. 11 and 12, in some embodiments, the negative electrode active material layer 233 includes a negative electrode body portion 2331 and a negative electrode thinned portion 2332. The negative electrode body portion 2331 and the negative electrode thinned portion 2332 are arranged along the first direction Z. Along the first direction Z, the negative electrode thinned portion 2332 is disposed at an end of the negative electrode body portion 2331 close to the end cover 12. The positive electrode active material layer 223 includes a positive electrode body portion 2231 and a positive electrode thinned portion 2232. The positive electrode body portion 2231 and the positive electrode thinned portion 2232 are arranged along the first direction Z. Along the first direction Z, the positive electrode thinned portion 2232 is disposed at an end of the positive electrode body portion 2231 close to the end cover 12.

Specifically, a thickness of the negative electrode body portion 2331 is greater than a thickness of the negative electrode thinned portion 2332. The negative electrode thinned portion 2332 may be disposed only at an end of the negative electrode body portion 2331 close to the end cover 12 along the first direction Z, or the negative electrode thinned portion 2332 may be provided at each of two ends of the negative electrode body portion 2331 along the first direction Z. The negative electrode body portion 2331 may be a uniform-thickness structure or a non-uniform-thickness structure. The negative electrode thinned portion 2332 may be a uniform-thickness structure or a non-uniform-thickness structure. If at least one of the negative electrode body portion 2331 and the negative electrode thinned portion 2332 is a non-uniform-thickness structure, a maximum thickness of the negative electrode thinned portion 2332 may be less than or equal to a minimum thickness of the negative electrode body portion 2331, so that the thickness of the negative electrode body portion 2331 is greater than the thickness of the negative electrode thinned portion 2332.

As an example, the negative electrode body portion 2331 is a uniform-thickness structure. The thickness of the negative electrode thinned portion 2332 tends to decrease along a direction from the negative electrode body portion 2331 to the negative electrode thinned portion 2332.

A thickness of the positive electrode body portion 2231 is greater than a thickness of the positive electrode thinned portion 2232. The positive electrode thinned portion 2232 may be disposed only at an end of the positive electrode body portion 2231 close to the end cover 12 along the first direction Z, or the positive electrode thinned portion 2232 may be disposed at each of two ends of the positive electrode body portion 2231 along the first direction Z. The positive electrode body portion 2231 may be a uniform-thickness structure or a non-uniform-thickness structure. The positive electrode thinned portion 2232 may be a uniform-thickness structure or a non-uniform-thickness structure. If at least one of the positive electrode body portion 2231 and the positive electrode thinned portion 2232 is a non-uniform-thickness structure, a maximum thickness of the positive electrode thinned portion 2232 may be less than or equal to a minimum thickness of the positive electrode body portion 2231, so that the thickness of the positive electrode body portion 2231 is greater than the thickness of the positive electrode thinned portion 2232.

As an example, the positive electrode body portion 2231 is a uniform-thickness structure. The thickness of the positive electrode thinned portion 2232 tends to decrease along a direction from the positive electrode body portion 2231 to the positive electrode thinned portion 2232.

Thus, the electrode assembly 2 has a larger swelling gap in a region corresponding to the negative electrode thinned portion 2332, and a smaller force applied by the region of the electrode assembly 2 corresponding to the negative electrode thinned portion 2332 to the first wall 111 after swelling, thereby reducing the risk of fatigue cracking of the region of the first wall 111 near the first connection portion 51.

The positive electrode thinned portion 2232 is provided at the end of the positive electrode body portion 2231 close to the end cover 12. The electrode assembly 2 has a larger swelling gap in a region corresponding to the positive electrode thinned portion 2232, and a smaller force is applied by the region of the electrode assembly 2 corresponding to the positive electrode thinned portion 2232 to the first wall 111 after swelling, thereby reducing the risk of fatigue cracking of the region of the first wall 111 near the first connection portion 51.

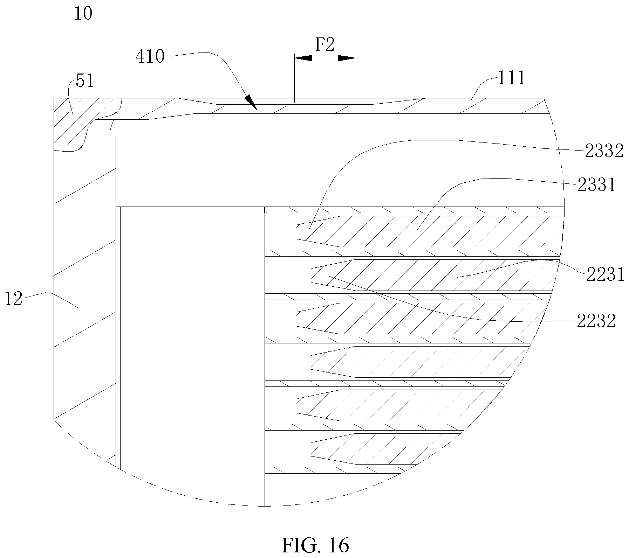

Referring to FIG. 16, FIG. 16 is a partial schematic diagram of a battery cell 10 according to still some other embodiments of this application. In some embodiments, in the projection plane perpendicular to the second direction, an orthographic projection of a body portion of the positive electrode body portion 2231 and the negative electrode body portion 2331 away from the first connection portion 51 is a second orthographic projection. The orthographic projection of the position of the buffer structure 410 with the minimum residual thickness is located between the orthographic projection of the first connection portion 51 and the second orthographic projection.

As an example, in the embodiments of FIG. 16, the positive electrode body portion 2231 is farther away from the first connection portion 51 than the negative electrode body portion 2331. The buffer structure 410 is a symmetrical structure and has a residual thickness gradually decreasing from two ends to the middle. A distance F2 between the position of the buffer structure 410 with the minimum residual thickness and the positive electrode body portion 2231 is greater than 0.

Thus, intercalation and deintercalation of ions in the positive electrode sheet 22 mainly occur in the positive electrode body portion 2231, so that volume swelling of the negative electrode sheet 23 in the region corresponding to the positive electrode thinned portion 2232 is small. Therefore, the orthographic projection of the position of the buffer structure 410 with the minimum residual thickness being located between the orthographic projection of the first connection portion 51 and the second orthographic projection can reduce the probability that the swelling force generated during the swelling of the negative electrode sheet 23 in the region corresponding to the positive electrode body portion 2231 directly acts on the position of the buffer structure 410 with the minimum residual thickness, thereby preventing the buffer structure 410 from directly fracturing and causing functional failure. Moreover, this arrangement allows the buffer structure 410 to have a large design width, which can enhance the capability of the buffer structure 410 in absorbing the swelling force, thereby reducing the risk of fatigue cracking of the region of the first wall 111 near the first connection portion 51.

In some embodiments, in the projection plane perpendicular to the second direction Y, an orthographic projection of the negative electrode thinned portion 2332 and the orthographic projection of the buffer structure 410 are spaced apart along the first direction Z.

Specifically, it can be understood that in the projection plane perpendicular to the second direction Y, the orthographic projection of the negative electrode thinned portion 2332 located at the end of the negative electrode body portion 2331 close to the end cover 12 does not overlap the orthographic projection of the buffer structure 410.

Thus, the negative electrode thinned portion 2332 has less influence on the buffer structure 410 and the first connection portion 51, reducing the risk of electrode assembly 2 swelling and directly applying the swelling force to the buffer structure 410, and further reducing the risk of fatigue cracking of the region of the first wall 111 near the first connection portion 51.

In some embodiments, in the projection plane perpendicular to the second direction Y, a spacing between the orthographic projection of the negative electrode thinned portion 2332 and the orthographic projection of the buffer structure 410 along the first direction Z is greater than or equal to 1 mm.

Specifically, in the projection plane perpendicular to the second direction Y, the spacing between the orthographic projection of the negative electrode thinned portion 2332 located at the end of the negative electrode body portion 2331 close to the end cover 12 and the orthographic projection of the buffer structure 410 along the first direction Z is W1, where W1≥1 mm. This spacing is a minimum distance between the orthographic projection of the negative electrode thinned portion 2332 and the orthographic projection of the buffer structure 410 along the first direction Z in the projection plane perpendicular to the second direction Y. W1 may be any one point value of 1 mm, 2 mm, 3 mm, 4 mm, 5 mm, 6 mm, 7 mm, 8 mm, 9 mm, 10 mm, 11 mm, 12 mm, 13 mm, 14 mm, 15 mm, 16 mm, 17 mm, 18 mm, 19 mm, or 20 mm, or falls within a range defined by any two of these values.

Thus, in the projection plane perpendicular to the second direction Y, the orthographic projection of the negative electrode thinned portion 2332 and the orthographic projection of the buffer structure 410 are further apart along the first direction Z, further reducing the influence of the negative electrode thinned portion 2332 on the buffer structure 410.

In some embodiments, a single-sided coating weight of the negative electrode active material layer 233 is 90 mg/1540 mm² to 170 mg/1540 mm².

Specifically, the single-sided coating weight of the negative electrode active material layer 233233 may be any one point value of 90 mg/1540 mm², 100 mg/1540 mm², 110 mg/1540 mm², 120 mg/1540 mm², 130 mg/1540 mm², 140 mg/1540 mm², 150 mg/1540 mm², 160 mg/1540 mm², or 170 mg/1540 mm², or falls within a range defined by any two of these values.

When the single-sided coating weight of the negative electrode active material layer 233 is measured, a single-sided coated negative electrode sheet 23 (if the negative electrode sheet 23 is a double-sided coated negative electrode sheet 23, a negative electrode active material layer 233 on one side may be wiped off first) may be taken, punched into a small disc with an area of S₁, and weighed, with the weight recorded as M₁. Then, the negative electrode active material layer 233 of the weighed negative electrode sheet 23 is wiped off, and the weight of the negative electrode current collector 232 is measured and recorded as M₂. The single-sided coating weight of the negative electrode active material layer 233 is equal to (M₁-M₂)/S₁.

The single-sided coating weight of the negative electrode active material layer 233 is related to swelling of the negative electrode active material layer 233. Setting the single-sided coating weight of the negative electrode active material layer 233 to be 90 mg/1540 mm² to 170 mg/1540 mm² can balance high energy density requirements of the battery cell 10 and low swelling requirements of the negative electrode sheet 23 to a certain extent, so as to reduce the influence of the swelling of the negative electrode sheet 23 on the first wall 111, thereby reducing the risk of fatigue cracking of the region of the first wall 111 near the first connection portion 51.

In some embodiments, the single-sided coating weight of the negative electrode active material layer 233 is 110 mg/1540 mm² to 150 mg/1540 mm².

Specifically, the single-sided coating weight of the negative electrode active material layer 233 may be any one point value of 110 mg/1540 mm², 115 mg/1540 mm², 120 mg/1540 mm², 125 mg/1540 mm², 130 mg/1540 mm², 135 mg/1540 mm², 140 mg/1540 mm², 145 mg/1540 mm², or 150 mg/1540 mm², or falls within a range defined by any two of these values.

Thus, this can further increase the energy density of the battery cell 10 and further alleviate the swelling of the negative electrode sheet 23.

In some embodiments, a porosity of the negative electrode sheet 23 is 27% to 40%.

Specifically, the porosity of the negative electrode sheet 2323 may be any one point value of 27%, 28%, 29%, 30%, 31%, 32%, 33%, 34%, 35%, 36%, 37%, 38%, 39%, or 40%, or falls within a range defined by any two of these values.

The porosity of the negative electrode sheet 23 may be a percentage of a pore volume within the negative electrode sheet 23 to a total volume of the negative electrode sheet 23. As an example, when the battery cell 10 is at 0% state of charge, the double-sided coated negative electrode sheet 23 is taken; and the porosity of the negative electrode sheet 23 is tested by a true density meter AccuPyc II 1340 with reference to the national standard GB/T 24586-2009.

Thus, this can provide space for impurities generated by side reactions of the negative electrode sheet 23, alleviate the swelling of the negative electrode sheet 23, and reduce the influence of the negative electrode sheet 23 on the first wall 111.

In some embodiments, the negative electrode active material includes a silicon-based material, and a mass percentage of the silicon element in the silicon-based material in the negative electrode active material is 0.3% to 10%.

In some embodiments, the mass percentage of the silicon element in the silicon-based material in the negative electrode active material is 1% to 6%.

Specifically, the mass percentage of the silicon element in the silicon-based material in the negative electrode active material may be any one point value of 0.3%, 1%, 2%, 3%, 4%, 5%, 6%, 7%, 8%, 9%, or 10%, or falls within a range defined by any two of these values.

Thus, controlling the content of the silicon element within the range of 0.3% to 10% can balance the cycling stability and energy density of the battery cell 10 and alleviate the problem of volume expansion of the silicon-based material during charging and discharging.

Controlling the content of the silicon element within the range of 1% to 6% can further balance the cycling stability and energy density of the battery cell 10 and further alleviate the problem of volume expansion of the silicon-based material during charging and discharging.

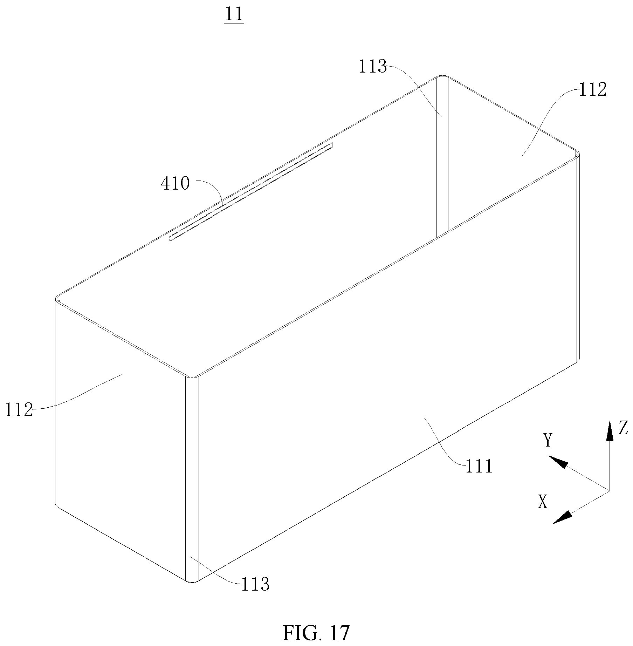

Referring to FIG. 17, FIG. 17 is a schematic structural diagram of a housing body 11 according to some embodiments of this application. In some embodiments, a dimension of the buffer structure 410 along a third direction X is greater than a dimension of the buffer structure 410 along the first direction Z. The first direction Z, the second direction Y, and the third direction X are not coplanar and intersect each other.

Specifically, the dimension of the buffer structure 410 along the third direction X is a length of the buffer structure 410. The dimension of the buffer structure 410 along the first direction Z is a width of the buffer structure 410. The length of the buffer structure 410 is greater than the width of the buffer structure 410, so that the buffer structure 410 is an elongated structure extending along the third direction X.

Thus, a larger dimension of the buffer structure 410 along the third direction X makes the buffer structure 410 more capable of absorbing the swelling force, further reducing the risk of fatigue cracking of the region of the first wall 111 near the first connection portion 51.

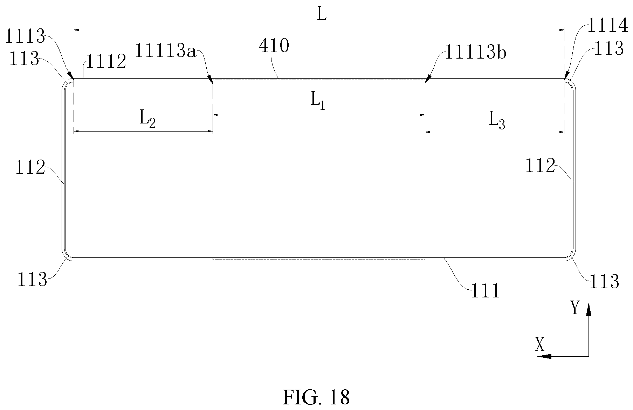

Referring to FIG. 18, FIG. 18 is a schematic structural diagram of a housing body 11 according to some other embodiments of this application. In some embodiments, the buffer structure 410 passes through a middle section of the first wall 111. The middle section is perpendicular to the third direction X. Distances from the middle section to two ends of the first wall 111 along the third direction X are equal.

Specifically, the buffer structure 410 has two opposite ends along the third direction X. The buffer structure 410 passes through the middle section of the first wall 111, so that the middle section of the first wall 111 is located between the two opposite ends of the buffer structure 410 along the third direction X. Distances from the two opposite ends of the buffer structure 410 along the third direction X to the middle section may be equal or unequal. If the distances from the two opposite ends of the buffer structure 410 along the third direction X to the middle section of the first wall 111 are equal, this indicates that the buffer structure 410 is a symmetrical structure that is symmetrically arranged with respect to the middle section of the first wall 111. It should be noted that the middle section of the first wall 111 is a virtual plane and is not shown in the figure.

As an example, in the embodiments shown in FIG. 18, the distances from the two opposite ends of the buffer structure 410 along the third direction X to the middle section of the first wall 111111 are equal.

Thus, when the first wall 111 is subjected to the swelling force from the electrode assembly 2 of the battery cell 10, a middle region of the first wall 111 along the third direction X undergoes larger deformation, so that the middle region of the first wall 111 along the third direction X is more prone to fatigue cracking. Since the buffer structure 410 passes through the middle section of the first wall 111, the swelling force received by at least the middle region of the first wall 111 along the third direction X is reduced, thereby reducing the risk of fatigue cracking of the middle region of the first wall 111 along the third direction X near the first connection portion 51.

Referring to FIG. 18, in some embodiments, a dimension of the buffer structure 410 along the third direction X is L₁, a dimension of the first wall 111 along the third direction X is L, and 0.4≤L₁/L≤0.9.

Specifically, L₁/L may be any one point value of 0.4, 0.42, 0.45, 0.48, 0.5, 0.52, 0.55, 0.58, 0.6, 0.7, 0.5, 0.8, 0.85, or 0.9, or falls within a range defined by any two of these values.

Thus, when 0.4≤L₁/L, a proportion of the dimension of the buffer structure 410 along the third direction X in the first wall 111 is large, which makes the swelling force received by the middle region of the first wall 111 along the third direction X small, thereby reducing the risk of fatigue cracking of the middle region of the first wall 111 along the third direction X near the first connection portion 51.

When L₁/L≤0.9, the proportion of the dimension of the buffer structure 410 along the third direction X in the first wall 111 is small, reducing waste generated during manufacturing of the buffer structure 410 and lowering the production costs.

Therefore, setting a ratio of the dimension of the buffer structure 410 along the third direction X to the dimension of the first wall 111 along the third direction X to be 0.4 to 0.9 allows the buffer structure 410 to have sufficient capability of absorbing the swelling force, reduces the waste generated during manufacturing of the buffer structure 410, and balances the requirements for the swelling force absorption capability and cost performance of the buffer structure 410.

Referring to FIG. 18, in some embodiments, the buffer structure 410 has a fourth end 11113a and a fifth end 11113b opposite each other along the third direction X. The first wall 111 has a sixth end 1113 and a seventh end 1114 opposite each other along the third direction X. The fourth end 11113a is close to the sixth end 1113. The fifth end 11113b is close to the seventh end 1114. A dimension of the first wall 111 along the third direction X is L, a minimum distance between the fourth end 11113a and the sixth end 1113 along the third direction X is L₂, and a minimum distance between the fifth end 11113b and the seventh end 1114 along the third direction X is L₃, where L₂/L≤0.3, and/or L₃/L≤0.3.

Specifically, it can be understood that along the third direction X, the sixth end 1113a is closer to the fourth end 11113a than the seventh end 1114b, and the seventh end 1114b is closer to the fifth end 11113b than the sixth end 1113a.

L₂ may be equal to L₃, L₂ may be greater than L₃, or L₂ may be less than L₃.

The value of L₂/L may be any one point value among 0.01, 0.02, 0.03, 0.04, 0.05, 0.06, 0.07, 0.08, 0.09, 0.1, 0.11, 0.12, 0.13, 0.14, 0.15, 0.16, 0.17, 0.18, 0.19, 0.2, 0.21, 0.22, 0.23, 0.24, 0.25, 0.26, 0.27, 0.28, 0.29, or 0.3, or falls within a range defined by any two of these values.

The value of L₃/L may be any one point value of 0.01, 0.02, 0.03, 0.04, 0.05, 0.06, 0.07, 0.08, 0.09, 0.1, 0.11, 0.12, 0.13, 0.14, 0.15, 0.16, 0.17, 0.18, 0.19, 0.2, 0.21, 0.22, 0.23, 0.24, 0.25, 0.26, 0.27, 0.28, 0.29, or 0.3, or falls within a range defined by any two of these values.

Thus, if L₂/L≤0.3, a proportion of the minimum distance between the fourth end 11113a and the sixth end 1113 along the third direction X in the dimension of the first wall 111 along the third direction X is reduced, so that more regions of the fourth end 11113a along the third direction X receive reduced swelling force, thereby further reducing the risk of fatigue cracking of the region of the first wall 111 near the first connection portion 51.

If L₃/L≤0.3, a proportion of the minimum distance between the fifth end 11113b and the seventh end 1114 along the third direction X in the dimension of the first wall 111 along the third direction X is reduced, so that more regions of the first wall 111 along the third direction X receive reduced swelling force, thereby further reducing the risk of fatigue cracking of the region of the first wall 111 near the first connection portion 51.

In some embodiments, 100 mm≤L≤450 mm.

Specifically, L may be any one point value of 100 mm, 120 mm, 150 mm, 180 mm, 200 mm, 220 mm, 250 mm, 260 mm, 280 mm, 300 mm, 310 mm, 320 mm, 350 mm, 390 mm, 400 mm, 410 mm, 420 mm, 430 mm, 440 mm, or 450 mm, or falls within a range defined by any two of these values.

Thus, within this value range, along the third direction X, the first wall 111 has a large dimension, which facilitates arrangement of the buffer structure 410, thereby helping the buffer structure 410 to absorb the swelling force.

Referring to FIGs. 17 and 18, in some embodiments, the housing body 11 includes a corner wall 113, and two ends of the first wall 111 along the third direction X are each connected to the corner wall 113. At least one end of the buffer structure 410 along the third direction X is spaced apart from the corner wall 113.

Specifically, along the third direction X, the buffer structure 410 has two opposite ends. One end of the buffer structure 410 may extend to one corner wall 113, and the other end may not extend to the other corner wall 113, or two ends of the buffer structure 410 may not extend to the corner wall 113, so that at least one end of the buffer structure 410 along the third direction X is not in contact with the corner wall 113.

As an example, in the embodiments shown in FIGs. 17 and 18, along the third direction X, one end of the buffer structure 410 is not in contact with the corner wall 113 at one end of the first wall 111, and the other end of the buffer structure 410 is not in contact with the corner wall 113 at the other end of the first wall 111.

Thus, since the at least one end of the buffer structure 410 along the third direction X is not in contact with the corner wall 113, the waste generated during manufacturing of the buffer structure 410 can be reduced, and the production costs can be lowered.

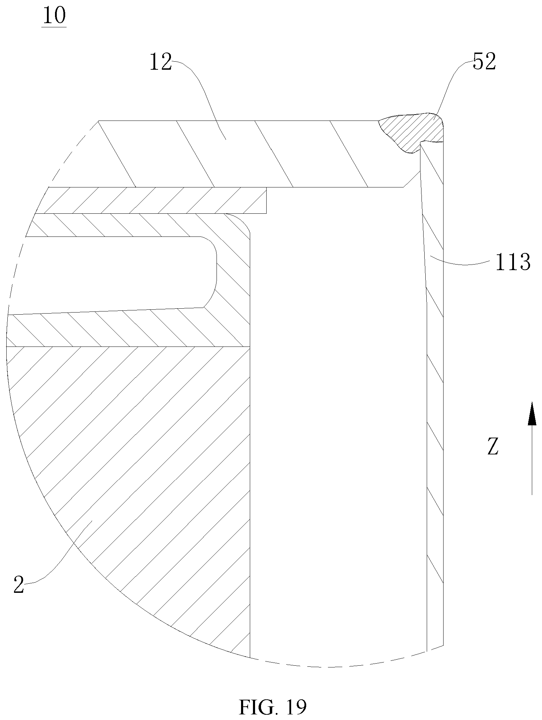

Referring to FIG. 19, FIG. 19 is a schematic structural diagram of a battery cell 10 according to still some other embodiments of this application. In some embodiments, the corner wall 113 is welded to the end cover 12 to form a second connection portion 52.

The second connection portion 52 may be in one-to-one correspondence with the corner wall 113. The second connection portion 52 is a portion that has a weld mark formed after the end cover 12 is welded to the corner wall 113. A portion where the end cover 12 and the corner wall 113 are welded and fused together may be the second connection portion 52. A portion of the second connection portion 52 is formed on the end cover 12, and another portion of the second connection portion 52 is formed on the corner wall 113. The corner wall 113 and the end cover 12 can form the second connection portion 52 by seam welding or form the second connection portion 52 by penetration welding. The second connection portion 52 and the first connection portion 51 are each a portion of the connection portion 5.

Referring to FIG. 10, in some embodiments, the body portion 400 includes a first region 440 and a second region 450 arranged along the first direction Z. A thickness of the first region 440 is greater than a thickness of the second region 450. The buffer structure 410 is located between the first region 440 and the second region 450.

Specifically, the first region 440 may be a region where a thickness of the first wall 111 is increased. The first region 440 is thicker than the second region 450. The second region 450 may be a portion of the first wall 111 located along the first direction Z on a side of the first region 440 facing away from the first connection portion 51. The first region 440 may be directly or indirectly connected to the first connection portion 51. The first region 440 may be directly or indirectly connected to the buffer structure 410.

The first region 440 may be a uniform-thickness structure or a non-uniform-thickness structure. The second region 450 may be a uniform-thickness structure or a non-uniform-thickness structure. If at least one of the first region 440 and the second region 450 is a non-uniform-thickness structure, a maximum thickness of the second region 450 may be less than or equal to a minimum thickness of the first region 440, so that the thickness of the first region 440 is greater than the thickness of the second region 450.

Along the first direction Z, the buffer structure 410 may include two opposite ends, where one end may be connected to the first region 440, and the other end may be connected to the second region 450.

Thus, the first region 440 with a larger thickness can enhance the capability of the first connection portion 51 in resisting the swelling force. In cooperation with the buffer structure 410, the first region 440 can further reduce the risk of fatigue cracking of the region of the first wall 111 near the first connection portion 51 due to the swelling of the electrode assembly 2, thereby prolonging the service life of the battery cell 10.

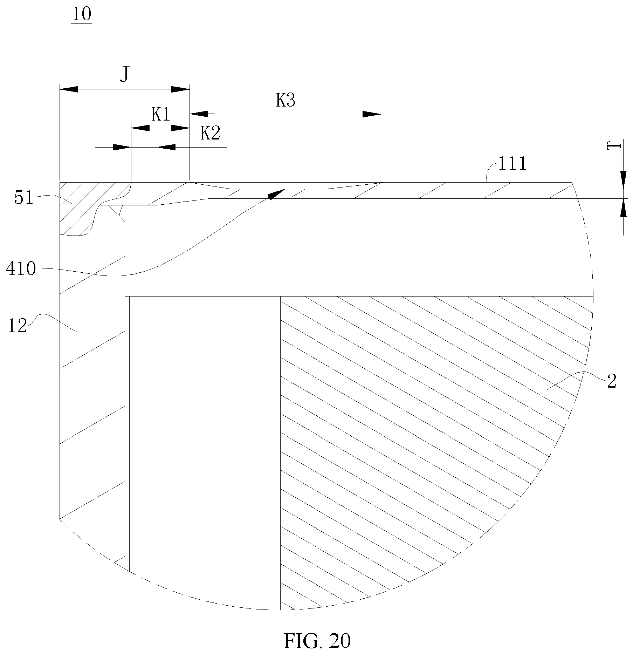

Referring to FIG. 20, FIG. 20 is a schematic structural diagram of a battery cell 1010 according to still some other embodiments of this application. In some embodiments, a width of the first region 440 is K1, and K1 satisfies: 1.8 mm≤K1≤15 mm, optionally 2 mm≤K1≤10 mm.

Specifically, K1 may be any one point value of 1.8 mm, 2 mm, 3 mm, 4 mm, 5 mm, 6 mm, 7 mm, 8 mm, 9 mm, 10 mm, 11 mm, 12 mm, 13 mm, 14 mm, or 15 mm, or falls within a range defined by any two of these values.

Thus, if 1.8mm≤K1≤15mm, the first region 440 can enhance the capability of the first connection portion 51 in resisting the swelling force. In cooperation with the buffer structure 410, the first region 440 can further reduce the risk of fatigue cracking of the region of the first wall 111 near the first connection portion 51 due to the swelling of the electrode assembly 2, thereby prolonging the service life of the battery cell 10.

If 2 mm≤K1≤10 mm, the first region 440 can more effectively enhance the capability of the first connection portion 51 in resisting the swelling force. In cooperation with the buffer structure 410, the first region 440 can further reduce the risk of fatigue cracking of the region of the first wall 111 near the first connection portion 51 due to the swelling of the electrode assembly 2, thereby prolonging the service life of the battery cell 10.

Referring to FIG. 10, in some embodiments, the first region 440 includes a first portion 441 and a second portion 442 arranged along the first direction Z. The second portion 442 is located between the first portion 441 and the buffer structure 410. A thickness of the first portion 441 is greater than a thickness of the second portion 442.

Specifically, the first portion 441, the second portion 442, and the buffer structure 410 are arranged sequentially along the first direction Z. The first portion 441 transitions to the buffer structure 410 through the second portion 442. The first portion 441 may be a uniform-thickness structure or a non-uniform-thickness structure. The second portion 442 may be a uniform-thickness structure or a non-uniform-thickness structure.

If at least one of the first portion 441 and the second portion 442 is a non-uniform-thickness structure, a maximum thickness of the second portion 442 may be less than or equal to a minimum thickness of the first portion 441, so that the thickness of the first portion 441 is greater than the thickness of the second portion 442.

Thus, a region of the first region 440 close to the first connection portion 51 is more prone to forming a heat-affected zone, and this region is more prone to fatigue cracking. However, since the second portion 442 is connected to the first portion 441 and the buffer structure 410, and the thickness of the first portion 441 is greater than the thickness of the second portion 442, the thicker first portion 441 in the first region 440 is closer to the first connection portion 51, which can effectively reduce the influence of the heat-affected zone on the first region 440, reducing the risk of fatigue cracking of the region of the first wall 111 near the first connection portion 51. In addition, since the thickness of the second portion 442 is less than the thickness of the first portion 441, materials used for the first region 440 can be reduced, thereby lowering the production costs.

Referring to FIG. 20, in some embodiments, a width of the first portion 441 is K2, and K2 satisfies: 1 mm≤K2≤10 mm, optionally 1.5≤K2≤5 mm.

Specifically, K2 may be any one point value of 1 mm, 1.5 mm, 2 mm, 3 mm, 4 mm, 5 mm, 6 mm, 7 mm, 8 mm, 9 mm, or 10 mm, or falls within a range defined by any two of these values.

Thus, if 1 mm≤K2≤10 mm, the first portion 441 has a large width, which allows the first portion 441 to effectively reduce the influence of the heat-affected zone on the first region 440, thereby reducing the risk of fatigue cracking of the region of the first wall 111 near the first connection portion 51.

If 1.5≤K2≤5 mm, the first portion 441 has a large width, which allows the first portion 441 to more effectively reduce the influence of the heat-affected zone on the first region 440, thereby reducing the risk of fatigue cracking of the region of the first wall 111 near the first connection portion 51. Moreover, the manufacturing costs of the first portion 441 are low.

Referring to FIG. 10, in some embodiments, a thickness of the second portion 442 tends to decrease along a direction from the end cover 12 to the electrode assembly 2.

Specifically, the direction from the end cover 12 to the electrode assembly 2 is consistent with a direction from the first portion 441 to the buffer structure 410 along the first direction Z.

The thickness of the second portion 442 along the direction from the end cover 12 to the electrode assembly 2 may decrease segmentally or gradually. To reduce the manufacturing costs of the second portion 442, the thickness of the second portion 442 may gradually decrease along the direction from the end cover 12 to the electrode assembly 2.

It can be understood that the second portion 442 is a non-uniform-thickness structure. As an example, the thickness of the second portion 442 gradually decreases along the direction from the end cover 12 to the electrode assembly 2. At least one of an inner surface and outer surface of the second portion 442 may be an inclined surface, so that the thickness of the second portion 442 gradually decreases along the direction from the end cover 12 to the electrode assembly 2.

As an example, in the embodiments shown in FIG. 10, the first portion 441 is a uniform-thickness structure. An inner surface and outer surface of the first portion 441 are arranged in parallel. The outer surface of the second portion 442 and the outer surface of the first portion 441 are coplanar. The inner surface of the second portion 442 is connected to the inner surface of the first portion 441.

Thus, this can reduce the influence of the second portion 442 on the electrode assembly 2 and reduce the risk of interference between the second portion 442 and the electrode assembly 2.

In addition, this makes a strengthening effect of the second portion 442 tend to increase along a direction from the electrode assembly 2 to the end cover 12, so that a region of the second portion 442 close to the first portion 441 has a good strengthening effect even if affected by the first connection portion 51, thereby reducing the risk of fatigue cracking of the first wall 111 in the second portion 442.

Furthermore, the second portion 442 can achieve a transition between the first portion 441 and the second region 450, reducing stress concentration.

In some embodiments, a Vickers hardness of at least a portion of the first region 440 is less than a Vickers hardness of the second region 450.

Specifically, a Vickers hardness of the region of the first region 440 close to the first connection portion 51 may be less than a Vickers hardness of the second region 450.

It can be understood that when the first wall 111 is subjected to the swelling force, the first region 440 with a lower hardness may first respond to overload through plastic deformation, while the second region 450 with a higher hardness may first show cracks, so the first region 440 has a lower risk of fatigue cracking.

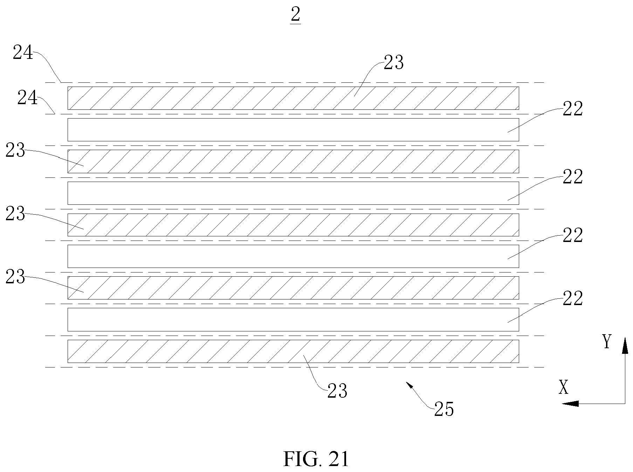

Referring to FIGs. 9 and 21, FIG. 21 is a schematic diagram of an electrode assembly 2 according to some other embodiments of this application. In some embodiments, the electrode assembly 2 has a straight region 25. A portion of the positive electrode sheet 22 in the straight region 25 and a portion of the negative electrode sheet 23 in the straight region 25 are stacked along the second direction Y.

Specifically, the straight region 25 is a straight portion of the electrode assembly 2. The portion of the positive electrode sheet 22 in the straight region 25 is substantially straight. The portion of the negative electrode sheet 23 in the straight region 25 is substantially straight. As an example, the portion of the positive electrode sheet 22 in the straight region 25 and the portion of the negative electrode sheet 23 in the straight region 25 are both plate structures.

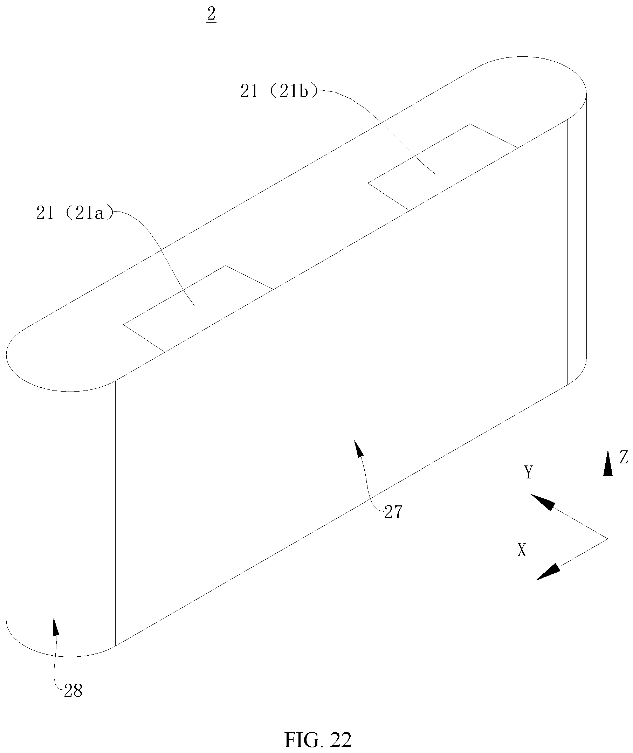

Referring to FIG. 22, FIG. 22 is a schematic structural diagram of an electrode assembly 2 according to some embodiments of this application. If the electrode assembly 2 is a wound structure, the electrode assembly 2 is a wound electrode assembly 2, and a portion of the electrode assembly 2 may be the straight region 25.

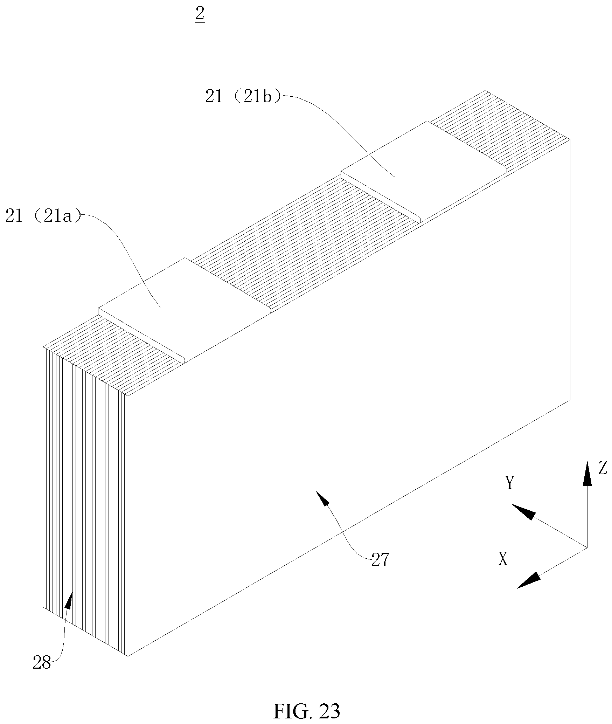

Referring to FIG. 23, FIG. 23 is a schematic structural diagram of an electrode assembly 2 according to some other embodiments of this application. If the electrode assembly 2 is a laminated structure, the electrode assembly 2 is a laminated electrode assembly 2, and the entire electrode assembly 2 may be the straight region 25. The second direction Y is a stacking direction of the portion of the positive electrode sheet 22 in the straight region 25 and the portion of the negative electrode sheet 23 in the straight region 25.

Thus, the second direction Y is the same as the stacking direction of the portion of the positive electrode sheet 22 in the straight region 25 and the portion of the negative electrode sheet 23 in the straight region 25. The electrode assembly 2 undergoes a higher swelling degree along the second direction Y during cycling. The first wall 111 is more affected by the swelling of the electrode assembly 2. However, since the buffer structure 410 can absorb the swelling force, the swelling force received by the region of the first wall 111 near the first connection portion 51 is reduced, thereby reducing the risk of fatigue cracking of the first wall 111 near the first connection portion 51 due to the swelling of the electrode assembly 2.

Referring to FIGs. 22 and 23, in some embodiments, the electrode assembly 2 includes a first surface 27 and a second surface 28 adjacent to each other. The first surface 27 is perpendicular to the second direction Y. An area of the first surface 27 is greater than an area of the second surface 28. The first surface 27 is disposed opposite the first wall 111 along the second direction Y.

Specifically, the first surface 27 is a surface in outer surfaces of the electrode assembly 2 that is perpendicular to the second direction Y. The second surface 28 is a surface in the outer surfaces of the electrode assembly 2 that is adjacent to the first surface 27. The first surface 27 is disposed facing the first wall 111 along the second direction Y. The first surface 27 may be a plane, and the first surface 27 may be a surface with the largest area in the outer surfaces of the electrode assembly 2, or may not be the surface with the largest area in the outer surfaces of the electrode assembly 2. The second surface 28 may be a plane or at least partially an arc surface. It should be noted that the first surface 27 is substantially perpendicular to the second direction Y. It should also be understood that the first surface 27 is perpendicular to the second direction Y.

As an example, two first surfaces 27 and two second surfaces 28 are provided. The two first surfaces 27 are disposed opposite each other along the second direction Y. The two second surfaces 28 are disposed opposite each other along the third direction X. The positive electrode tab 21a and the negative electrode tab 21b protrude from a surface of the electrode assembly 2 along the first direction Z. An outermost portion of the electrode assembly 2 along the second direction Y is the separator 24. The first surface 27 is formed on the separator 24. The first direction Z, the second direction Y, and the third direction X are perpendicular to each other.

Thus, the area of the first surface 27 is larger than the area of the second surface 28, so that a greater swelling force is received by the first wall 111 in the housing body 11 disposed opposite the first surface 27. Since the buffer structure 410 can absorb the swelling force, the swelling force received by the region of the first wall 111 near the first connection portion 51 is reduced, thereby reducing the risk of fatigue cracking of the first wall 111 near the first connection portion 51 due to the swelling of the electrode assembly 2.

Referring to FIGs. 22 and 23, in some embodiments, the first surface 27 is the surface with the largest area in the outer surfaces of the electrode assembly 2.

Specifically, it should be noted that the first surface 27 is the largest surface in the outer surfaces of the electrode assembly 2, which does not mean that the electrode assembly 2 includes only one first surface 27. It can be understood that one or two first surfaces 27 of the electrode assembly 2 are provided.

As an example, in the embodiments shown in FIG. 22, the electrode assembly 2 is a wound structure, the electrode assembly 2 is flat, and the electrode assembly 2 includes six surfaces. In the six surfaces, the two surfaces disposed opposite each other along the second direction Y have the largest area, and the two surfaces are each the first surface 27.

In the embodiments shown in FIG. 23, the electrode assembly 2 is a laminated structure, the electrode assembly 2 is substantially cuboid, and the electrode assembly 2 includes six surfaces. In the six surfaces, the two surfaces disposed opposite each other along the second direction Y have the largest area, and the two surfaces are each the first surface 27.

Thus, the first wall 111 in the housing body 11 disposed opposite the first surface 27 receives the largest swelling force. Since the buffer structure 410 can absorb the swelling force, the swelling force received by the region of the first wall 111 near the first connection portion 51 is reduced, thereby reducing the risk of fatigue cracking of the first wall 111 near the first connection portion 51 due to the swelling of the electrode assembly 2.

Referring to FIGs. 9 and 22, in some embodiments, the electrode assembly 2 is a wound structure. The electrode assembly 2 further has a corner region 26. At least one end of the straight region 25 along the third direction X is provided with the corner region 26. The first direction Z, the second direction Y, and the third direction X are not coplanar and intersect each other.

An outer surface of the straight region 25 includes the first surface 27. The outer surface of the corner region 26 includes the second surface 28. At least a portion of the second surface 28 is an arc surface.

Specifically, the straight region 25 may be provided with the corner region 26 at only one end along the third direction X, or may be provided with the corner region 26 at each of two opposite ends along the third direction X. The first direction Z, the second direction Y, and the third direction X are not coplanar. Any two of the first direction Z, the second direction Y, and the third direction X may be arranged at an acute angle, a right angle, or an obtuse angle. The first surface 27 may be a portion of the outer surface of the straight region 25. The second surface 28 may be a portion of the outer surface of the corner region 26. The second surface 28 may be entirely an arc surface or only partially an arc surface.

As an example, the positive electrode sheet 22, the separator 24, and the negative electrode sheet 23 are stacked and wound to form a wound structure. The first direction Z, the second direction Y, and the third direction X are perpendicular to each other. The straight region 25 is provided with the corner region 26 at each of two ends along the third direction X.

Portions of the positive electrode sheet 22, the negative electrode sheet 23, and the separator 24 in the corner region 26 are curved. The portion of the positive electrode sheet 22 in the corner region 26 may be at least partially arc-shaped. The portion of the negative electrode sheet 23 in the corner region 26 may be at least partially arc-shaped. The portion of the separator 24 in the corner region 26 may be at least partially arc-shaped.

Along a winding direction of the electrode assembly 2, the separator 24 is disposed on the outermost turn of the electrode assembly 2. The first surface 27 and the second surface 28 are each a portion of an outer surface on the outermost turn of the electrode assembly 2. The first surface 27 is a plane. The second surface 28 is an arc surface, where an axis of the arc surface extends along the first direction Z.

Along the second direction Y, surfaces on two sides of the straight region 25 are each the first surface 27. Along the third direction X, a surface of one corner region 26 facing away from the other corner region 26 is one second surface 28, and a surface of the other corner region 26 facing away from one corner region 26 is the other second surface 28.

Thus, for a wound electrode assembly 2, the straight region 25 undergoes a higher swelling degree along the second direction Y. Since the buffer structure 410 can absorb the swelling force, the swelling force received by the region of the first wall 111 near the first connection portion 51 is reduced, thereby reducing the risk of fatigue cracking of the first wall 111 near the first connection portion 51 due to the swelling of the electrode assembly 2.

Referring to FIGs. 21 and 23, in some embodiments, the electrode assembly 2 is a laminated structure. The straight region 25 includes a plurality of positive electrode sheets 22 and a plurality of negative electrode sheets 23. The plurality of positive electrode sheets 22 and the plurality of negative electrode sheets 23 are stacked along the second direction Y. The first surface 27 is perpendicular to the second surface 28.

Specifically, as an example, a plurality of positive electrode sheets 22, a plurality of negative electrode sheets 23, and a plurality of separators 24 are stacked along the second direction Y to form a laminated structure. The positive electrode sheets 22 and the negative electrode sheets 23 are completely located in the straight region 25. A separator 24 is disposed between a positive electrode sheet 22 and a negative electrode sheet 23 adjacent to each other. The separator 24 extends beyond two ends of the positive electrode sheet 22 and two ends of the negative electrode sheet 23 along the third direction X. Extension portions of a plurality of separators 24 are connected to form an integral portion, and the second surface 28 is formed on this integral portion. Along the second direction Y, all positive electrode sheets 22 and all negative electrode sheets 23 are between the two outermost separators 24, and outer surfaces of the two separators 24 are each the first surface 27.

It should be noted that the first surface 27 is substantially perpendicular to the second surface 28. It should also be understood that the first surface 27 is perpendicular to the second surface 28. For example, if an angle between the first surface 27 and the second surface 28 is in a range of 85° to 95°, it can be understood that the first surface 27 is perpendicular to the second surface 28.

Thus, for a laminated electrode assembly 2, the electrode assembly 2 undergoes a higher swelling degree in the stacking direction of the positive electrode sheet 22 and the negative electrode sheet 23. Since the buffer structure 410 can absorb the swelling force, the swelling force received by the region of the first wall 111 near the first connection portion 51 is reduced, thereby reducing the risk of fatigue cracking of the first wall 111 near the first connection portion 51 due to the swelling of the electrode assembly 2.

Referring to FIG. 17, in some embodiments, the first wall 111 is a wall with the largest outer surface area in the housing body 11.

Specifically, it should be noted that the first wall 111 is the wall with the largest outer surface area in the housing body 11, which does not mean that the housing body 11 includes only one first wall 111. It can be understood that one or two walls with the largest outer surface area in the housing body 11 may be provided.

Thus, the wall with the largest outer surface area in the housing body 11 is more prone to deformation after being subjected to the swelling force from the electrode assembly 2. Since the first wall 111 is the wall with the largest outer surface area in the housing body 11, the risk of fatigue cracking of the first wall 111 near the first connection portion 51 due to the swelling of the electrode assembly 2 is low.

Referring to FIGs. 3 and 17, in some embodiments, the housing body 11 includes two first walls 111. Along the second direction Y, the two first walls 111 are disposed opposite each other, and the electrode assembly 2 is located between the two first walls 111.

Specifically, as an example, in the embodiments shown in FIG. 17, the housing body 11 is cuboid. The housing body 11 may include two first walls 111 and two second walls 112. The two first walls 111 are disposed opposite each other along the second direction Y. The two second walls 112 are disposed opposite each other along the third direction X. An outer surface area of the first wall 111 is greater than an outer surface area of the second wall 112. The first direction Z is parallel to a height direction of the housing body 11. The second direction Y is parallel to a width direction of the housing body 11. The third direction X is parallel to a length direction of the housing body 11.

Thus, this reduces the risk of fatigue cracking of the two first walls 111 near the first connection portion 51 due to the swelling of the electrode assembly 2.

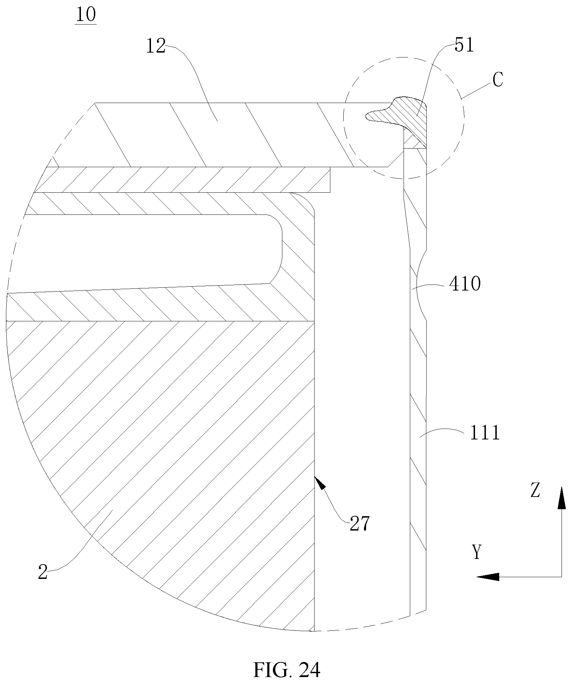

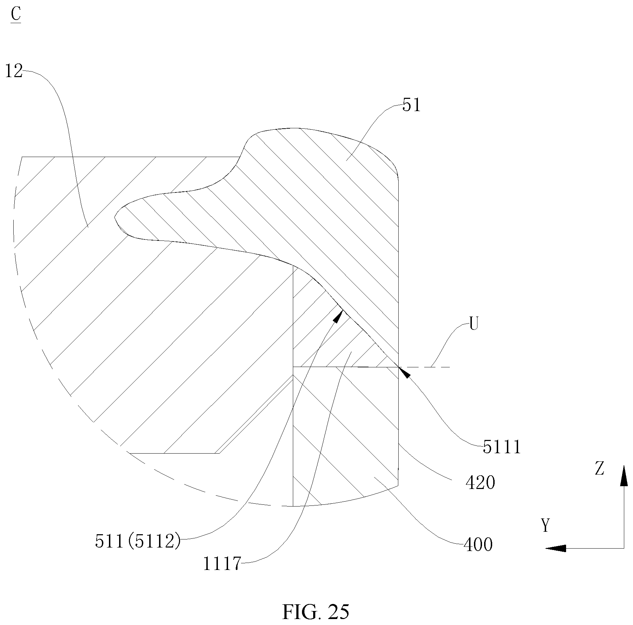

Referring to FIGs. 24 and 25, FIG. 24 is a partial schematic diagram of a battery cell 10 according to still some other embodiments of this application, and FIG. 25 is an enlarged view of portion C of the battery cell 10 in FIG. 24. In some embodiments, the first wall 111 further includes a transition region 1117. The transition region 1117 is located between the body portion 400 and the first connection portion 51 along the first direction Z. The transition region 1117 is connected to the first connection portion 51. A connection position between the transition region 1117 and the first connection portion 51 forms a connection interface 511. The connection interface 511 has a connection position 5111 closest to the body portion 400 along the first direction Z. The connection position 5111 is located at an end of the body portion 400 close to the opening along the first direction Z.

Specifically, the transition region 1117 may be a portion of the first wall 111 connected between the first connection portion 51 and the body portion 400. The transition region 1117 may be a uniform-thickness structure or a non-uniform-thickness structure. As an example, in the embodiments shown in FIGs. 24 and 25, along a direction from the second region 450 to the first region 440, a thickness of the transition region 1117 gradually decreases.

The connection interface 511 is formed at the connection position between the transition region 1117 and the first connection portion 51. The transition region 1117 and the first connection portion 51 are delimited at the connection interface 511. The connection interface 511 may be a plane or a curved surface.

The body portion 400 and the transition region 1117 are delimited by an interface U. The interface U is a virtual plane, the interface U passes through the connection position 5111, and the interface U is perpendicular to the first direction Z. The transition region 1117 and the first connection portion 51 are located above the interface U. The body portion 400 is located below the interface U.

Thus, the transition region 1117 is connected to the first connection portion 51 to form the connection interface 511, so that the transition region 1117 has a sufficiently large contact area with the first connection portion 51, thereby improving firmness after the first wall 111 is welded to the end cover 12.

Referring to FIG. 25, in some embodiments, at least a portion of the connection interface 511 extends obliquely relative to the second direction Y.

Specifically, the connection interface 511 may entirely extend obliquely relative to the second direction Y, or the connection interface 511 may partially extend obliquely relative to the second direction Y.

It can be understood that an extension direction of a portion of the connection interface 511 extending obliquely relative to the second direction Y is not parallel to the second direction Y.

Thus, after the end cover 12 is welded to the first wall 111, the first connection portion 51 shrinks as it solidifies, and the first connection portion 51 applies tensile stress to the transition region 1117. When the first wall 111 is subjected to the swelling force from the electrode assembly 2, the first wall 111 undergoes deformation, and the transition region 1117 applies tensile stress to the first connection portion 51. Since at least a portion of the connection interface 511 extends obliquely relative to the second direction Y, near a portion where the connection interface 511 extends obliquely relative to the second direction Y, the tensile stress applied by the first connection portion 51 to the transition region 1117 due to shrinkage and the tensile stress applied by the transition region 1117 to the first connection portion 51 due to deformation of the first wall 111 are not on the same straight line, thereby reducing the risk of fatigue cracking of a region of the transition region 1117 near the connection interface 511.

Referring to FIG. 25, in some embodiments, the connection interface 511 includes a first interface 5112. The first interface 5112 extends obliquely from the connection position 5111 to the end cover 12. Along the second direction Y, at least a portion of the transition region 1117 is located between the first interface 5112 and the end cover 12.

Specifically, it can be understood that the first interface 5112 extends obliquely relative to the second direction Y. The first interface 5112 may be a plane or a curved surface.

The connection position 5111 is the lowest position of the first interface 5112 (a position closest to the body portion 400). The first interface 5112 extending obliquely from the connection position 5111 to the end cover 12 means that the first interface 5112 extends obliquely upward from the connection position 5111 to the end cover 12.

Along the second direction Y, the transition region 1117 may be entirely located between the first interface 5112 and the end cover 12, or only a portion of the transition region 1117 may be located between the first interface 5112 and the end cover 12.

Thus, the first connection portion 51 provides protection for the transition region 1117. When the first wall 111 is subjected to the swelling force from the electrode assembly 2, the deformation of the transition region 1117 during stress is blocked by the first connection portion 51, thereby reducing the risk of fatigue cracking of a region of the transition region 1117 near the first interface 5112.

Referring to FIG. 25, in some embodiments, the first interface 5112 is connected to an outer surface 420 of the body portion 400 at the connection position 5111.

Specifically, as an example, the first interface 5112 intersects the outer surface 420 of the body portion 400 at a first straight line. The first straight line extends along the third direction X. A position of the first straight line is the connection position 5111. The transition region 1117 is substantially triangular.

Thus, since the first interface 5112 is directly connected to the body portion 400, the body portion 400 is closer to the first connection portion 51 along the first direction Z, thereby further reducing the risk of fatigue cracking of the region of the first wall 111 near the first connection portion 51 due to the swelling of the electrode assembly 2.

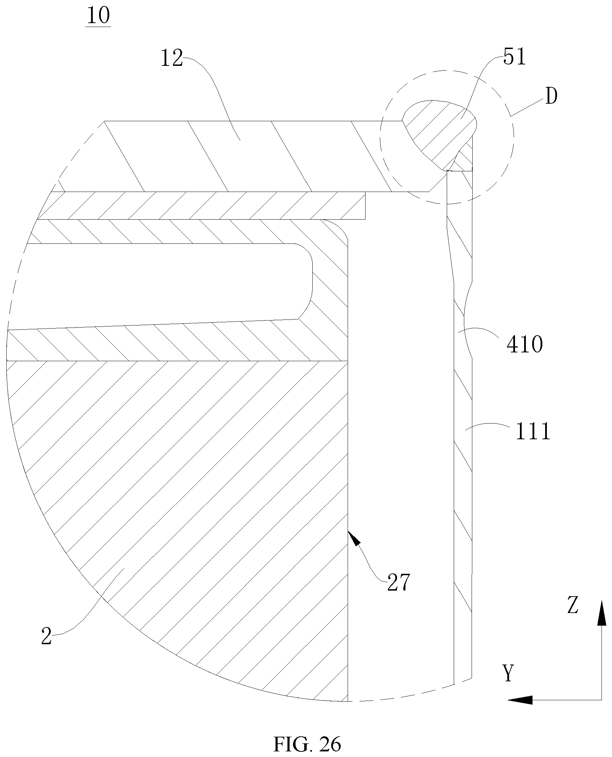

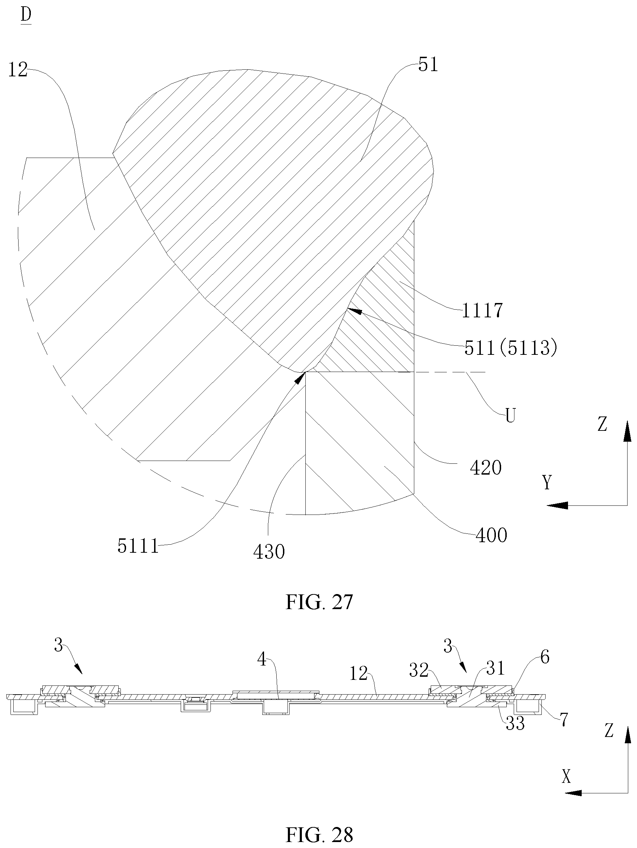

Referring to FIGs. 26 and 27, FIG. 26 is a partial schematic diagram of a battery cell 10 according to still some other embodiments of this application, and FIG. 27 is an enlarged view of portion D of the battery cell 10 in FIG. 26. In some embodiments, the connection interface 511 includes a second interface 5113. The second interface 5113 extends obliquely from the connection position 5111 away from the end cover 12. Along the second direction Y, at least a portion of the transition region 1117 is located on a side of the second interface 5113 facing away from the end cover 12.

Specifically, it can be understood that the second interface 5113 extends obliquely relative to the second direction Y. The second interface 5113 may be a plane or a curved surface. Along the second direction Y, at least a portion of the first connection portion 51 is located between the second interface 5113 and the end cover 12.

The connection position 5111 is the lowest position of the second interface 5113 (a position closest to the body portion 400). The second interface 5113 extending obliquely from the connection position 5111 away from the end cover 12 means that the second interface 5113 extends obliquely upward from the connection position 5111 away from the end cover 12.

Along the second direction Y, the transition region 1117 may be entirely located on the side of the second interface 5113 facing away from the end cover 12, or only a portion of the transition region 1117 may be located on the side of the second interface 5113 facing away from the end cover 12.

Thus, the transition region 1117 limits the first connection portion 51, thereby reducing the risk of the first connection portion 51 falling off.

Referring to FIG. 27, in some embodiments, the second interface 5113 is connected to an inner surface 430 of the body portion 400 at the connection position 5111.

Specifically, as an example, the second interface 5113 intersects the inner surface 430 of the body portion 400 at a first straight line. The first straight line extends along the third direction X. A position of the first straight line is the connection position 5111. The transition region 1117 is substantially triangular.

Thus, the body portion 400 is directly connected to the first connection portion 51, so that the body portion 400 is closer to the first connection portion 51 along the first direction Z, thereby further reducing the risk of fatigue cracking of the region of the first wall 111 near the first connection portion 51 due to the swelling of the electrode assembly 2.

In some embodiments, a Vickers hardness of the transition region 1117 is less than a Vickers hardness of the body portion 400.

In some embodiments, the Vickers hardness of the transition region 1117 is less than a Vickers hardness of the first connection portion 51.

In some embodiments, the Vickers hardness of the transition region 1117 is less than a Vickers hardness of the body portion 400, and the Vickers hardness of the transition region 1117 is less than a Vickers hardness of the first connection portion 51.

As an example, the Vickers hardness of the body portion 400 is less than the Vickers hardness of the first connection portion 51.

Thus, if the Vickers hardness of the transition region 1117 is less than the Vickers hardness of the body portion 400, the transition region 1117 with a lower Vickers hardness is connected to the first connection portion 51, which can alleviate rigid pulling between the first wall 111 and the first connection portion 51 when the first wall 111 undergoes deformation, thereby reducing the risk of separation between the first wall 111 and the first connection portion 51. If the Vickers hardness of the transition region 1117 is less than the Vickers hardness of the first connection portion 51, the transition region 1117 is more prone to deformation compared to the first connection portion 51, which can alleviate rigid pulling between the first wall 111 and the first connection portion 51 when the first wall 111 undergoes deformation, thereby reducing the risk of separation between the first wall 111 and the first connection portion 51.

Referring to FIG. 21, in some embodiments, the electrode assembly 2 is a laminated structure. The electrode assembly 2 includes a plurality of positive electrode sheets 22 and a plurality of negative electrode sheets 23. The plurality of positive electrode sheets 22 and the plurality of negative electrode sheets 23 are stacked along the second direction Y.

As an example, the positive electrode sheets 22 and the negative electrode tabs 21b in the electrode assembly 2 are alternately arranged along the second direction Y. The separators 24 are disposed between the positive electrode sheets 22 and the negative electrode sheets 23.

Thus, the laminated electrode assembly 2 has a more compact structure and stronger resistance to extrusion.

Referring to FIG. 21, in some embodiments, the number of negative electrode sheets 23 is greater than the number of positive electrode sheets 22. One positive electrode sheet 22 is disposed between two adjacent negative electrode sheets 23.

As an example, the number of negative electrode sheets 23 is one greater than the number of positive electrode sheets 22.

Thus, the provision of the positive electrode sheet 22 between adjacent negative electrode sheets 23 can reduce a transmission distance of lithium ions inside the battery cell 10 and can provide more lithium ion transmission paths, thereby improving the charging and discharging efficiency of the battery cell 10.

In some embodiments, each negative electrode sheet 23 is provided with a negative electrode tab 21b.

In some embodiments, each positive electrode sheet 22 is provided with a positive electrode tab 21a.

In some embodiments, each negative electrode sheet 23 is provided with a negative electrode tab 21b, and each positive electrode sheet 22 is provided with a positive electrode tab 21a.

Specifically, one or more negative electrode tabs 21b may be provided. When a plurality of negative electrode tabs 21b are provided, the plurality of negative electrode tabs 21b may be located on a same side of the negative electrode sheet 23 or on different sides of the negative electrode sheet 23. One or more positive electrode tabs 21a may be provided. When a plurality of positive electrode tabs 21a are provided, the plurality of positive electrode tabs 21a may be located on a same side of the positive electrode sheet 22 or on different sides of the positive electrode sheet 22.

Thus, the tab 21 can simplify electrical connection between the battery cell 10 and an external circuit.

Referring to FIG. 3, in some embodiments, along the third direction X, a dimension of the buffer structure 410 is greater than a dimension of the positive electrode sheet 22 and/or a dimension of the negative electrode sheet 23. The first direction Z, the second direction Y, and the third direction X are perpendicular to each other.

Specifically, if along the third direction X, the dimension of the buffer structure 410 is greater than the dimension of the positive electrode sheet 22, the buffer structure 410 extends beyond at least one end of the positive electrode sheet 22 along the third direction X; if along the third direction X, the dimension of the buffer structure 410 is greater than the dimension of the negative electrode sheet 23, the buffer structure 410 extends beyond at least one end of the negative electrode sheet 23 along the third direction X.

Thus, a larger dimension of the buffer structure 410 along the third direction X makes more regions of the first wall 111 along the third direction X receive reduced swelling force, thereby further reducing the risk of fatigue cracking of the region of the first wall 111 near the first connection portion 51.

Referring to FIGs. 3 and 28, FIG. 28 is a schematic diagram of a connection between an end cover 12 and an electrode terminal 3 according to some embodiments of this application. In some embodiments, the battery cell 10 further includes two electrode terminals 3. The two electrode terminals 3 are disposed on the end cover 12. The two electrode terminals 3 have opposite polarities and are both electrically connected to the electrode assembly 2.

The end cover 12 is provided with a lead-out hole. The electrode terminal 3 includes a terminal body 31, a first limiting portion 32, and a second limiting portion 33. The terminal body 31 is connected to the first limiting portion 32 and the second limiting portion 33. The terminal body 31 extends through the lead-out hole. Along the first direction Z, the first limiting portion 32 is located on a side of the end cover 12 facing away from the electrode assembly 2, and the second limiting portion 33 is located on a side of the end cover 12 facing the electrode assembly 2.

Specifically, the first limiting portion 32 and the second limiting portion 33 each have a limiting function. The first limiting portion 32 and the second limiting portion 33 are respectively connected to two ends of the terminal body 31. The first limiting portion 32 and the second limiting portion 33 cooperate to limit the terminal body 31 from detaching from the lead-out hole.

Along the first direction Z, a projection area of the first limiting portion 32 and a projection area of the second limiting portion 33 are both greater than a projection area of the terminal body 31. The projection area of the first limiting portion 32 may be greater than the projection area of the second limiting portion 33, or the projection area of the second limiting portion 33 may be greater than the projection area of the first limiting portion 32.

The first limiting portion 32, the second limiting portion 33, and the terminal body 31 may be integrally formed. Alternatively, one of the first limiting portion 32 and the second limiting portion 33 may be integrally formed with the terminal body 31, and the other may be separately arranged with and connected to the terminal body 31.

As an example, the battery cell 10 may further include a first insulating member 6 and a second insulating member 7. The first insulating member 6 is at least partially disposed between the electrode terminal 3 and the end cover 12 to insulate and isolate the electrode terminal 3 and the end cover 12. The second insulating member 7 is disposed on the side of the end cover 12 facing the electrode assembly 2 to insulate and isolate the electrode assembly 2 and the end cover 12.

Thus, the electrode terminal 3 with this structure may be installed on the end cover 12 by riveting, featuring low installation difficulty and better cost performance.

Referring to FIG. 20, in some embodiments, a thickness of the position of the buffer structure 410 with the minimum residual thickness is T, and T satisfies: 0.1 mm≤T≤1 mm, optionally 0.2 mm≤T≤0.5 mm.

Specifically, T may be any one point value of 0.1 mm, 0.2 mm, 0.3 mm, 0.4 mm, 0.5 mm, 0.6 mm, 0.7 mm, 0.8 mm, 0.9 mm, or 1 mm, or falls within a range defined by any two of these values.

Thus, if 0.1 mm≤T≤1 mm, the buffer structure 410 can not only effectively absorb the swelling force, but also avoid functional failure due to fracture.

If 0.2 mm≤T≤0.5 mm, the buffer structure 410 has a better capability of absorbing the swelling force and is more capable of avoiding functional failure due to fracture.

Referring to FIG. 20, in some embodiments, a width of the buffer structure 410 is K3, and K3 satisfies: 0.1 mm≤K3≤20 mm, optionally 0.15 mm≤K3≤10 mm.

Specifically, K3 may be any one point value of 0.1 mm, 0.15 mm, 0.5 mm, 1 mm, 5 mm, 10 mm, 15 mm, or 20 mm, or falls within a range defined by any two of these values.

Thus, if 0.1 mm≤K3≤20 mm, the buffer structure 410 can effectively absorb the swelling force and can reduce the manufacturing costs.

If 0.15 mm≤K3≤10 mm, the buffer structure 410 has a better capability of absorbing the swelling force and lower manufacturing costs.

Referring to FIG. 20, in some embodiments, a distance from the buffer structure 410 to an upper edge of the end cover 12 is J, and J satisfies: 1 mm≤J≤20 mm, optionally 1.5 mm≤J≤10 mm.

Specifically, J may be any one point value of 1 mm, 1.5 mm, 2 mm, 3 mm, 5 mm, 10 mm, 15 mm, or 20 mm, or falls within a range defined by any two of these values.

Thus, if 1 mm≤J≤20 mm, the buffer structure 410 is far from the heat-affected zone, which can enhance the capability of the buffer structure 410 in absorbing the swelling force, thereby reducing the risk of fatigue cracking of the region of the first wall 111 near the first connection portion 51.

If 1.5 mm≤J≤10 mm, the buffer structure 410 is far from the heat-affected zone, which can enhance the capability of the buffer structure 410 in absorbing the swelling force, thereby reducing the risk of fatigue cracking of the region of the first wall 111 near the first connection portion 51.

In a specific embodiment, this embodiment of this application further provides a battery cell 10. The battery cell 10 includes a housing body 11, an end cover 12, and an electrode assembly 2. An end of the housing body 11 along a first direction Z is provided with an opening. The end cover 12 is welded to the housing body 11 and seals the opening of the housing body 11. The electrode assembly 2 is at least partially accommodated in the housing body 11.

The housing body 11 is cuboid. The housing body 11 includes two first walls 111, two second walls 112, and four corner walls 113. The first wall 111 is a wall with the largest outer surface area in the housing body 11. A first wall 111 and a second wall 112 adjacent to each other are connected through a corner wall 113. The two first walls 111 are disposed opposite each other along a second direction Y. The two second walls 112 are disposed opposite each other along a third direction X. The first direction Z, the second direction Y, and the third direction X are perpendicular to each other.

The electrode assembly 2 includes a positive electrode sheet 22, a negative electrode sheet 23, and a separator 24. The separator 24 is disposed between the positive electrode sheet 22 and the negative electrode sheet 23. The electrode assembly 2 has a straight region 25. A portion of the positive electrode sheet 22 in the straight region 25, a portion of the negative electrode sheet 23 in the straight region 25, and a portion of the separator 24 in the straight region 25 are stacked along the second direction Y. The electrode assembly 2 includes a first surface 27 perpendicular to the second direction Y. The first surface 27 is a surface with the largest area in outer surfaces of the electrode assembly 2. The first wall 111 and the first surface 27 are disposed opposite each other along the second direction Y.

The positive electrode sheet 22 includes a positive electrode body region 221 and a positive electrode tab 21a protruding from the positive electrode body region 221. The positive electrode body region 221 has a positive electrode active material layer 223. The negative electrode sheet 23 includes a negative electrode body region 231 and a negative electrode tab 21b protruding from the negative electrode body region 231. The negative electrode body region 231 has a negative electrode active material layer 233. Along the first direction Z, the positive electrode body region 221 has a first end 2211 facing the end cover 12, the negative electrode body region 231 has a second end 2311 facing the end cover 12, and the separator 24 has a third end 241 facing the end cover 12. The third end 241 is closer to the end cover 12 than the first end 2211 and the second end 2311.

The first wall 111 is welded to the end cover 12 to form a first connection portion 51. The first wall 111 includes a body portion 400. Along the first direction Z, the body portion 400 is located on a side of the first connection portion 51 facing away from the end cover 12.

The body portion 400 is provided with a buffer structure 410. The buffer structure 410 is spaced apart from the first connection portion 51. Along the first direction Z, a distance between the buffer structure 410 and an edge of the first connection portion 51 is 2 mm. A dimension of the buffer structure 410 along the third direction X is L1, and a dimension of the first wall 111 along the third direction X is L, where L1/L=0.5. The buffer structure 410 has a fourth end 11113a and a fifth end 11113b opposite each other along the third direction X. The first wall 111 has a sixth end 1113 and a seventh end 1114 opposite each other along the third direction X. The fourth end 11113a is close to the sixth end 1113. The fifth end 11113b is close to the seventh end 1114. A dimension of the first wall 111 along the third direction X is L, a minimum distance between the fourth end 11113a and the sixth end 1113 along the third direction X is L₂, and a minimum distance between the fifth end 11113b and the seventh end 1114 along the third direction X is L₃, where L₂/L=0.3, and L₃/L=0.3. Along the third direction X, the dimension of the buffer structure 410 is greater than a dimension of the positive electrode sheet 22 and/or a dimension of the negative electrode sheet 23.

The positive electrode body portion 2231 is farther away from the first connection portion 51 than the negative electrode body portion 2331. In a projection plane perpendicular to the second direction, an orthographic projection of a position of the buffer structure 410 with a minimum residual thickness is located between an orthographic projection of the first connection portion 51 and an orthographic projection of the positive electrode body portion 2231. A thickness of the position of the buffer structure 410 with the minimum residual thickness is T, where T is 0.5 mm. A width of the buffer structure 410 is K3, where K3 is 10 mm. A distance from the buffer structure 410 to an upper edge of the end cover 12 is J, where J is 5 mm.

The body portion 400 further includes a first region 440 and a second region 450 arranged along the first direction Z. A thickness of the first region 440 is greater than a thickness of the second region 450. The buffer structure 410 is located between the first region 440 and the second region 450. The first region 440 includes a first portion 441 and a second portion 442 arranged along the first direction Z. The second portion 442 is located between the first portion 441 and the buffer structure 410. A thickness of the first portion 441 is greater than a thickness of the second portion 442. The thickness of the second portion 442 tends to decrease along a direction from the end cover 12 to the electrode assembly 2.

The buffer structure 410 includes a weak portion 411 disposed on the body portion 400. A minimum thickness of the weak portion 411 is less than thicknesses of other portions of the body portion 400. A width of the first region 440 is K1, where K1 is 5 mm. A width of the first portion 441 is K2, where K2 is 3 mm.

An inner surface 430 of the body portion 400 and an outer surface 420 of the body portion 400 are each provided with a groove 412. The groove 412 is disposed opposite the weak portion 411. The groove 412 includes a first side surface 4120, a second side surface 4121, and a bottom surface 4122 connected to the first side surface 4120 and the second side surface 4121.

The weak portion 411 includes a first weak portion 4110 disposed opposite the bottom surface 4122. A thickness of the first weak portion 4110 is less than thicknesses of other portions of the body portion 400. The weak portion 411 further includes a second weak portion 4111 disposed opposite the first side surface 4120 and a third weak portion 4112 disposed opposite the second side surface 4121. The first side surface 4120 is located on a side of the bottom surface 4122 close to the first connection portion 51, and a thickness of the second weak portion 4111 gradually increases along a direction approaching the first connection portion 51. The second side surface 4121 is located on a side of the bottom surface 4122 facing away from the first connection portion 51, and a thickness of the third weak portion 4112 gradually increases along a direction facing away from the first connection portion 51. An included angle between the first side surface 4120 and the bottom surface 4122 is 150 degrees. An included angle between the second side surface 4121 and the bottom surface 4122 is 150 degrees.

The electrode assembly 2 further includes a separator 24. The separator 24 is disposed between the positive electrode sheet 22 and the negative electrode sheet 23. The separator 24 includes an extension region 242 extending beyond the first end 2211 and the second end 2311 along the first direction Z. In the projection plane perpendicular to the second direction Y, an orthographic projection of the extension region 242 partially overlaps an orthographic projection of the buffer structure 410. In the projection plane perpendicular to the second direction Y, an orthographic projection of the positive electrode body region 221 does not overlap the orthographic projection of the buffer structure 410, and an orthographic projection of the negative electrode body region 231 does not overlap the orthographic projection of the buffer structure 410.

The first wall 111 further includes a transition region 1117. The transition region 1117 is located between the body portion 400 and the first connection portion 51 along the first direction Z. The transition region 1117 is connected to the first connection portion 51. A connection position between the transition region 1117 and the first connection portion 51 forms a connection interface 511. The connection interface 511 has a connection position 5111 closest to the body portion 400 along the first direction Z. The connection position 5111 is located at an end of the body portion 400 close to the opening along the first direction Z. At least a portion of the connection interface 511 extends obliquely relative to the second direction Y.

The connection interface 511 includes a first interface 5112. The first interface 5112 extends obliquely from the connection position 5111 to the end cover 12. Along the second direction Y, at least a portion of the transition region 1117 is located between the first interface 5112 and the end cover 12. The first interface 5112 is connected to the outer surface 420 of the body portion 400 at the connection position 5111. The connection interface 511 includes a second interface 5113. The second interface 5113 extends obliquely from the connection position 5111 away from the end cover 12. Along the second direction Y, at least a portion of the transition region 1117 is located on a side of the second interface 5113 facing away from the end cover 12. The second interface 5113 is connected to the inner surface 430 of the body portion 400 at the connection position 5111.

A Vickers hardness of the transition region 1117 is less than a Vickers hardness of the body portion 400, and a Vickers hardness of the transition region 1117 is less than a Vickers hardness of the first connection portion 51.

In conclusion, it should be noted that the above embodiments are merely intended for describing the technical solutions of this application but not for limiting this application. Although this application is described in detail with reference to the foregoing embodiments, those of ordinary skill in the art should understand that they may still make modifications to the technical solutions described in the foregoing embodiments or make equivalent replacements to some or all technical features thereof. All such modifications or equivalent replacements do not make the essence of the corresponding technical solutions depart from the scope of the technical solutions of the embodiments of this application, and shall fall within the scope of the claims and specification of this application. In particular, as long as there is no structural conflict, the various technical features mentioned in the implementations can be combined in any manner. This application is not limited to the specific embodiments disclosed in this specification but includes all technical solutions falling in the scope of the claims.

## Claims

1. A battery cell, wherein the battery cell comprises:
a housing body, wherein at least one end along a first direction is provided with an opening, and the housing body comprises a first wall;
an end cover sealing the opening, wherein the first wall is welded to the end cover to form a first connection portion; and
an electrode assembly at least partially accommodated in the housing body, wherein the electrode assembly comprises a positive electrode sheet and a negative electrode sheet, at least a portion of the positive electrode sheet and at least a portion of the negative electrode sheet are stacked along a second direction, the second direction is parallel to a thickness direction of the first wall, and the first direction intersects the second direction;
wherein the first wall comprises a body portion; along the first direction, the body portion is located on a side of the first connection portion facing away from the end cover; the body portion is provided with a buffer structure; and the buffer structure is spaced apart from the first connection portion.

2. The battery cell according to claim 1, wherein the buffer structure comprises a weak portion disposed on the body portion, and a minimum thickness of the weak portion is less than thicknesses of other portions of the body portion.

3. The battery cell according to claim 2, wherein an inner surface of the body portion is provided with a groove, and/or an outer surface of the body portion is provided with a groove; and the weak portion is a region on the body portion opposite an opening of the groove.

4. The battery cell according to claim 3, wherein the groove comprises a first side surface, a second side surface, and a bottom surface connected to the first side surface and the second side surface; the weak portion comprises a first weak portion disposed opposite the bottom surface; and a thickness of the first weak portion is less than the thicknesses of the other portions of the body portion.

5. The battery cell according to claim 4, wherein the weak portion further comprises a second weak portion disposed opposite the first side surface and a third weak portion disposed opposite the second side surface; the first side surface is located on a side of the bottom surface close to the first connection portion; a thickness of the second weak portion tends to increase along a direction approaching the first connection portion; the second side surface is located on a side of the bottom surface facing away from the first connection portion; and a thickness of the third weak portion tends to increase along a direction facing away from the first connection portion.

6. The battery cell according to claim 4 or 5, wherein an included angle between the first side surface and the bottom surface is greater than or equal to 135 degrees and less than 180 degrees; and/or an included angle between the second side surface and the bottom surface is greater than or equal to 135 degrees and less than 180 degrees.

7. The battery cell according to any one of claims 1 to 6, wherein the buffer structure comprises a first protrusion and a first recess; the first protrusion corresponds to the first recess; the first protrusion protrudes from an outer surface of the body portion; and the first recess is recessed outward from an inner surface of the body portion.

8. The battery cell according to claim 7, wherein a plurality of first protrusions are provided; a plurality of first recesses are provided; and each first protrusion corresponds to one of the first recesses.

9. The battery cell according to any one of claims 1 to 8, wherein the buffer structure comprises a second protrusion and a second recess; the second protrusion corresponds to the second recess; the second protrusion protrudes from an inner surface of the body portion; and the second recess is recessed inward from an outer surface of the body portion.

10. The battery cell according to claim 9, wherein a plurality of second protrusions are provided; a plurality of second recesses are provided; and each second protrusion corresponds to one of the second recesses.

11. The battery cell according to any one of claims 1 to 10, wherein along the first direction, a distance between the buffer structure and an edge of the first connection portion is H, and H satisfies: 0.3 mm≤H≤7 mm, optionally 1.5 mm≤H≤4 mm.

12. The battery cell according to any one of claims 1 to 11, wherein the electrode assembly further comprises a separator, and the separator is disposed between the positive electrode sheet and the negative electrode sheet; and
the positive electrode sheet comprises a positive electrode body region and a positive electrode tab protruding from the positive electrode body region; the positive electrode body region has a positive electrode active material layer; the negative electrode sheet comprises a negative electrode body region and a negative electrode tab protruding from the negative electrode body region; the negative electrode body region has a negative electrode active material layer; and along the first direction, the positive electrode body region has a first end facing the end cover, the negative electrode body region has a second end facing the end cover, the separator has a third end facing the end cover, and the third end is closer to the end cover than the first end and the second end.

13. The battery cell according to claim 12, wherein the separator comprises an extension region extending beyond the first end and the second end along the first direction; and in a projection plane perpendicular to the second direction, an orthographic projection of the extension region partially overlaps an orthographic projection of the buffer structure.

14. The battery cell according to claim 12 or 13, wherein in a projection plane perpendicular to the second direction, an orthographic projection of the positive electrode body region does not overlap an orthographic projection of the buffer structure; and/or in a projection plane perpendicular to the second direction, an orthographic projection of the negative electrode body region does not overlap an orthographic projection of the buffer structure.

15. The battery cell according to claim 12 or 13, wherein in a projection plane perpendicular to the second direction, an orthographic projection of the positive electrode body region overlaps an orthographic projection of the buffer structure; and/or in a projection plane perpendicular to the second direction, an orthographic projection of the negative electrode body region overlaps an orthographic projection of the buffer structure.

16. The battery cell according to claim 12 or 13, wherein in a projection plane perpendicular to the second direction, an orthographic projection of the buffer structure is at least partially located between an orthographic projection of the first connection portion and an orthographic projection of the positive electrode body region; and/or in a projection plane perpendicular to the second direction, an orthographic projection of the buffer structure is at least partially located between an orthographic projection of the first connection portion and an orthographic projection of the negative electrode body region.

17. The battery cell according to claim 12 or 13, wherein in a projection plane perpendicular to the second direction, an orthographic projection of a body region of the positive electrode body region and the negative electrode body region away from the first connection portion is a first orthographic projection, and an orthographic projection of a position of the buffer structure with a minimum residual thickness is located between an orthographic projection of the first connection portion and the first orthographic projection.

18. The battery cell according to any one of claims 1 to 17, wherein the negative electrode sheet comprises a negative electrode current collector and a negative electrode active material layer disposed on at least one side of the negative electrode current collector; the negative electrode active material layer comprises a negative electrode active material; the positive electrode sheet comprises a positive electrode current collector and a positive electrode active material layer disposed on at least one side of the positive electrode current collector; and the positive electrode active material layer comprises a positive electrode active material.

19. The battery cell according to claim 18, wherein the negative electrode active material layer comprises a negative electrode body portion and a negative electrode thinned portion; the negative electrode body portion and the negative electrode thinned portion are arranged along the first direction; along the first direction, the negative electrode thinned portion is disposed at an end of the negative electrode body portion close to the end cover; the positive electrode active material layer comprises a positive electrode body portion and a positive electrode thinned portion; the positive electrode body portion and the positive electrode thinned portion are arranged along the first direction; and along the first direction, the positive electrode thinned portion is disposed at an end of the positive electrode body portion close to the end cover.

20. The battery cell according to claim 19, wherein in a projection plane perpendicular to the second direction, an orthographic projection of a body portion of the positive electrode body portion and the negative electrode body portion away from the first connection portion is a second orthographic projection; and an orthographic projection of a position of the buffer structure with a minimum residual thickness is located between an orthographic projection of the first connection portion and the second orthographic projection.

21. The battery cell according to claim 19, wherein in a projection plane perpendicular to the second direction, an orthographic projection of the negative electrode thinned portion and an orthographic projection of the buffer structure are spaced apart along the first direction.

22. The battery cell according to claim 21, wherein in the projection plane perpendicular to the second direction, a spacing between the orthographic projection of the negative electrode thinned portion and the orthographic projection of the buffer structure along the first direction is greater than or equal to 1 mm.

23. The battery cell according to any one of claims 18 to 22, wherein a single-sided coating weight of the negative electrode active material layer is 90 mg/1540 mm² to 170 mg/1540 mm², optionally 110 mg/1540 mm² to 150 mg/1540 mm².

24. The battery cell according to any one of claims 18 to 23, wherein a porosity of the negative electrode sheet is 27% to 40%.

25. The battery cell according to any one of claims 18 to 24, wherein the negative electrode active material comprises a silicon-based material, and a mass percentage of the silicon element in the silicon-based material in the negative electrode active material is 0.3% to 10%, optionally 1% to 6%.

26. The battery cell according to any one of claims 1 to 25, wherein a dimension of the buffer structure along a third direction is greater than a dimension of the buffer structure along the first direction; and the first direction, the second direction, and the third direction are not coplanar and intersect each other.

27. The battery cell according to claim 26, wherein the buffer structure passes through a middle section of the first wall; the middle section is perpendicular to the third direction; and distances from the middle section to two ends of the first wall along the third direction are equal.

28. The battery cell according to claim 26 or 27, wherein the dimension of the buffer structure along the third direction is L₁, a dimension of the first wall along the third direction is L, and 0.4≤L₁/L≤0.9.

29. The battery cell according to any one of claims 26 to 28, wherein the buffer structure has a fourth end and a fifth end opposite each other along the third direction; the first wall has a sixth end and a seventh end opposite each other along the third direction; the fourth end is close to the sixth end; the fifth end is close to the seventh end; and a dimension of the first wall along the third direction is L, a minimum distance between the fourth end and the sixth end along the third direction is L₂, and a minimum distance between the fifth end and the seventh end along the third direction is L₃, wherein L₂/L≤0.3, and/or L₃/L≤0.3.

30. The battery cell according to claim 28 or 29, wherein 100 mm≤L≤450 mm.

31. The battery cell according to any one of claims 26 to 30, wherein the housing body comprises a corner wall, and two ends of the first wall along the third direction are each connected to the corner wall; and
at least one end of the buffer structure along the third direction is spaced apart from the corner wall.

32. The battery cell according to any one of claims 1 to 31, wherein the body portion comprises a first region and a second region arranged along the first direction; a thickness of the first region is greater than a thickness of the second region; and the buffer structure is located between the first region and the second region.

33. The battery cell according to claim 32, wherein a width of the first region is K1, and K1 satisfies: 1.8 mm≤K1≤15 mm, optionally 2 mm≤K1≤10 mm.

34. The battery cell according to claim 32, wherein the first region comprises a first portion and a second portion arranged along the first direction; the second portion is located between the first portion and the buffer structure; and a thickness of the first portion is greater than a thickness of the second portion.

35. The battery cell according to claim 34, wherein a width of the first portion is K2, and K2 satisfies: 1 mm≤K2≤10 mm, optionally 1.5 mm≤K2≤5 mm.

36. The battery cell according to claim 34, wherein a thickness of the second portion tends to decrease along a direction from the end cover to the electrode assembly.

37. The battery cell according to any one of claims 32 to 36, wherein a Vickers hardness of at least a portion of the first region is less than a Vickers hardness of the second region.

38. The battery cell according to any one of claims 1 to 37, wherein the electrode assembly has a straight region; and a portion of the positive electrode sheet in the straight region and a portion of the negative electrode sheet in the straight region are stacked along the second direction.

39. The battery cell according to claim 38, wherein the electrode assembly comprises a first surface and a second surface adjacent to each other; the first surface is perpendicular to the second direction; an area of the first surface is greater than an area of the second surface; and the first surface is disposed opposite the first wall along the second direction.

40. The battery cell according to claim 39, wherein the first surface is a surface with the largest area in outer surfaces of the electrode assembly.

41. The battery cell according to claim 39 or 40, wherein the electrode assembly is a wound structure, the electrode assembly further has a corner region, at least one end of the straight region along the third direction is provided with the corner region, and the first direction, the second direction, and the third direction are not coplanar and intersect each other; and
an outer surface of the straight region comprises the first surface, an outer surface of the corner region comprises the second surface, and at least a portion of the second surface is an arc surface.

42. The battery cell according to claim 39 or 40, wherein the electrode assembly is a laminated structure; the straight region comprises a plurality of positive electrode sheets and a plurality of negative electrode sheets; the plurality of positive electrode sheets and the plurality of negative electrode sheets are stacked along the second direction; and the first surface is perpendicular to the second surface.

43. The battery cell according to any one of claims 38 to 42, wherein along a third direction, a dimension of the buffer structure is greater than a dimension of the portion of the positive electrode sheet in the straight region and/or a dimension of the portion of the negative electrode sheet in the straight region; and the first direction, the second direction, and the third direction are perpendicular to each other.

44. The battery cell according to any one of claims 1 to 43, wherein the first wall is a wall with the largest outer surface area in the housing body.

45. The battery cell according to any one of claims 1 to 44, wherein the housing body comprises two first walls; and along the second direction, the two first walls are disposed opposite each other, and the electrode assembly is located between the two first walls.

46. The battery cell according to any one of claims 1 to 45, wherein the first wall further comprises a transition region; the transition region is located between the body portion and the first connection portion along the first direction; the transition region is connected to the first connection portion; a connection position between the transition region and the first connection portion forms a connection interface; the connection interface has a connection position closest to the body portion along the first direction; and the connection position is located at an end of the body portion close to the opening along the first direction.

47. The battery cell according to claim 46, wherein at least a portion of the connection interface extends obliquely relative to the second direction.

48. The battery cell according to claim 47, wherein the connection interface comprises a first interface; the first interface extends obliquely from the connection position to the end cover; and along the second direction, at least a portion of the transition region is located between the first interface and the end cover.

49. The battery cell according to claim 48, wherein the first interface is connected to an outer surface of the body portion at the connection position.

50. The battery cell according to any one of claims 46 to 49, wherein the connection interface comprises a second interface; the second interface extends obliquely from the connection position away from the end cover; and along the second direction, at least a portion of the transition region is located on a side of the second interface facing away from the end cover.

51. The battery cell according to claim 50, wherein the second interface is connected to an inner surface of the body portion at the connection position.

52. The battery cell according to any one of claims 46 to 51, wherein a Vickers hardness of the transition region is less than a Vickers hardness of the body portion; and/or a Vickers hardness of the transition region is less than a Vickers hardness of the first connection portion.

53. The battery cell according to any one of claims 1 to 52, wherein the electrode assembly is a laminated structure; the electrode assembly comprises a plurality of positive electrode sheets and a plurality of negative electrode sheets; and the plurality of positive electrode sheets and the plurality of negative electrode sheets are stacked along the second direction.

54. The battery cell according to claim 53, wherein the number of negative electrode sheets is greater than the number of positive electrode sheets; and one of the positive electrode sheets is disposed between two adjacent ones of the negative electrode sheets.

55. The battery cell according to claim 53 or 54, wherein each of the negative electrode sheets is provided with a negative electrode tab; and/or each of the positive electrode sheets is provided with a positive electrode tab.

56. The battery cell according to any one of claims 1 to 55, wherein the battery cell further comprises two electrode terminals, the two electrode terminals are disposed on the end cover, and the two electrode terminals have opposite polarities and are both electrically connected to the electrode assembly; and
the end cover is provided with a lead-out hole, the electrode terminal comprises a terminal body, a first limiting portion, and a second limiting portion, the terminal body is connected to the first limiting portion and the second limiting portion, the terminal body extends through the lead-out hole, and along the first direction, the first limiting portion is located on a side of the end cover facing away from the electrode assembly, and the second limiting portion is located on a side of the end cover facing the electrode assembly.

57. The battery cell according to any one of claims 1 to 56, wherein a thickness of a position of the buffer structure with a minimum residual thickness is T, and T satisfies: 0.1 mm≤T≤1 mm, optionally 0.2 mm≤T≤0.5 mm.

58. The battery cell according to any one of claims 1 to 57, wherein a width of the buffer structure is K3, and K3 satisfies: 0.1 mm≤K3≤20 mm, optionally 0.15 mm≤K3≤10 mm.

59. The battery cell according to any one of claims 1 to 58, wherein a distance from the buffer structure to an upper edge of the end cover is J, and J satisfies: 1 mm≤J≤20 mm, optionally 1.5 mm≤J≤10 mm.

60. A battery, comprising the battery cell according to any one of claims 1 to 59.

61. An electric device, comprising the battery cell according to any one of claims 1 to 59, wherein the battery cell is configured to supply electrical energy to the electric device.
